(19) Europäisches Patentamt
European Patent Office
Office européen des brevets

(11) EP 4 249 517 A1

(12) EUROPEAN PATENT APPLICATION
published in accordance with Art. 153(4) EPC

(43) Date of publication:
**27.09.2023 Bulletin 2023/39**

(21) Application number: **21894762.0**

(22) Date of filing: **19.11.2021**

(51) International Patent Classification (IPC):
***C08F 2/44*** *(2006.01)* ***C08F 2/26*** *(2006.01)*
***C08F 14/18*** *(2006.01)* ***C08L 27/12*** *(2006.01)*

(52) Cooperative Patent Classification (CPC):
**C08F 2/26; C08F 2/44; C08F 14/18; C08L 27/12**

(86) International application number:
**PCT/JP2021/042658**

(87) International publication number:
**WO 2022/107891 (27.05.2022 Gazette 2022/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.11.2020 JP 2020192858**

(71) Applicant: **Daikin Industries, Ltd.**
**Osaka-shi, Osaka 530-0001 (JP)**

(72) Inventors:
- **YUASA, Sota**
**Osaka-shi, Osaka 530-0001 (JP)**
- **MORIKAWA, Tatsuya**
**Osaka-shi, Osaka 530-0001 (JP)**
- **TAMAI, Rina**
**Osaka-shi, Osaka 530-0001 (JP)**
- **TAKEMURA, Kouhei**
**Osaka-shi, Osaka 530-0001 (JP)**
- **IRIE, Masaki**
**Osaka-shi, Osaka 530-0001 (JP)**

(74) Representative: **Hoffmann Eitle**
**Patent- und Rechtsanwälte PartmbB**
**Arabellastraße 30**
**81925 München (DE)**

# (54) METHOD FOR PRODUCING FLUORINE-CONTAINING ELASTOMER AQUEOUS DISPERSION, AND COMPOSITION

(57) Provided is a method for producing an aqueous dispersion of a fluorine-containing elastomer, comprising polymerizing a fluorine-containing monomer in the presence of a polymer (1) containing a polymerization unit (1) based on a monomer (1) represented by general formula (1) and an aqueous medium,

$$CF_2=CF-R-CZ^1Z^2-COOM \qquad (1)$$

wherein R is a linking group, $Z^1$ and $Z^2$ are each independently F or $CF_3$, and M is H, a metal atom, $NR^7_4$, imidazolium optionally having a substituent, pyridinium optionally having a substituent, or phosphonium optionally having a substituent, wherein $R^7$ is H or an organic group.

EP 4 249 517 A1

## Description

TECHNICAL FIELD

The present disclosure relates to a method for producing an aqueous dispersion of a fluorine-containing elastomer and a composition.

BACKGROUND ART

Patent Document 1 discloses that an oligomeric fluorosulfinic compound and/or an ethylenically unsaturated polymerizable monomeric fluorosulfinic compound can be used for aqueous emulsion polymerization of at least one ethylenically unsaturated fluoromonomer such as a fluorinated olefin to produce a fluoropolymer having a partially or fully fluorinated backbone.

RELATED ART

PATENT DOCUMENT

Patent Document 1: Japanese Translation of PCT International Application Publication No. 2013-545877

SUMMARY OF THE INVENTION

PROBLEM TO BE SOLVED BY THE INVENTION

An object of the present disclosure is to provide a method for producing an aqueous dispersion of a fluorine-containing elastomer, the method being capable of producing a sufficient number of fluorine-containing elastomer particles at a sufficient polymerization rate while suppressing adhesion of the fluorine-containing elastomer to a polymerization tank.

MEANS FOR SOLVING THE PROBLEM

The present disclosure provides a method for producing an aqueous dispersion of a fluorine-containing elastomer, comprising polymerizing a fluorine-containing monomer in the presence of a polymer

(1) containing a polymerization unit (1) based on a monomer (1) represented by general formula (1) and an aqueous medium to produce an aqueous dispersion of a fluorine-containing elastomer:

$$CF_2=CF\text{-}R\text{-}CZ^1Z^2\text{-}COCM \qquad (1)$$

wherein R is a linking group, $Z^1$ and $Z^2$ are each independently F or $CF_3$, and M is H, a metal atom, $NR^7{}_4$, imidazolium optionally having a substituent, pyridinium optionally having a substituent, or phosphonium optionally having a substituent, wherein $R^7$ is H or an organic group.

In the production method of the present disclosure, the monomer (1) is preferably a monomer (2) represented by general formula (2):

$$CF_2=CF(\text{-}O\text{-}Rf\text{-}COCM) \qquad (2)$$

wherein Rf is a fluorine-containing alkylene group having 1 to 40 carbon atoms, or a fluorine-containing alkylene group having 2 to 100 carbon atoms and having an ether bond or a keto group, and M is as described above.

In the production method of the present disclosure, the polymer (1) preferably has a weight average molecular weight of $1.4 \times 10^4$ or more.

In the production method of the present disclosure, a content of the polymerization unit (1) is preferably 50 mol% or more based on all polymerization units constituting the polymer (1).

In the production method of the present disclosure, the amount of the polymer (1) added is preferably 0.0001 to 20% by mass based on 100% by mass of the aqueous medium.

In the production method of the present disclosure, it is preferable that the polymerization of the fluorine-containing monomer is performed in the presence of a polymerization initiator and that the amount of the polymerization

initiator added is preferably 0.00001 to 10% by mass based on 100% by mass of the fluorine-containing monomer.

In the production method of the present disclosure, it is preferable that the polymerization of the fluorine-containing monomer is performed substantially in the absence of a fluorine-containing surfactant.

In the production method of the present disclosure, the fluorine-containing monomer is preferably vinylidene fluoride or tetrafluoroethylene.

In the production method of the present disclosure, the fluorine-containing monomer is preferably vinylidene fluoride.

In the production method of the present disclosure, the fluorine-containing elastomer preferably contains $-CH_2-$ in a main chain.

Also, the present disclosure provides a composition comprising a fluorine-containing elastomer and a polymer (1) containing a polymerization unit (1) based on a monomer (1) represented by general formula (1):

$$CF_2=CF-R-CZ^1Z^2-COCM \qquad (1)$$

wherein R is a linking group, $Z^1$ and $Z^2$ are each independently F or $CF_3$, and M is H, a metal atom, $NR^7_4$, imidazolium optionally having a substituent, pyridinium optionally having a substituent, or phosphonium optionally having a substituent, wherein $R^7$ is H or an organic group.

In the composition of the present disclosure, the monomer (1) is preferably a monomer (2) represented by general formula (2):

$$CF_2=CF(-O-Rf-COOM) \qquad (2)$$

wherein Rf is a fluorine-containing alkylene group having 1 to 40 carbon atoms, or a fluorine-containing alkylene group having 2 to 100 carbon atoms and having an ether bond or a keto group, and M is as described above.

In the composition of the present disclosure, the polymer (1) preferably has a weight average molecular weight of $1.4 \times 10^4$ or more.

In the composition of the present disclosure, a content of the polymerization unit (1) is preferably 50 mol% or more based on all polymerization units constituting the polymer (1).

In the composition of the present disclosure, a content of the polymer (1) is preferably 0.00001 to 20% by mass based on the fluorine-containing elastomer.

The composition of the present disclosure is preferably an aqueous dispersion.

In the composition of the present disclosure, a solid concentration of the aqueous dispersion is preferably 5 to 50% by mass based on the aqueous dispersion.

It is preferable that the composition of the present disclosure is substantially free from a fluorine-containing surfactant.

In the composition of the present disclosure, the fluorine-containing elastomer preferably contains vinylidene fluoride unit or tetrafluoroethylene unit.

In the composition of the present disclosure, the fluorine-containing elastomer preferably contains vinylidene fluoride unit.

In the composition of the present disclosure, the fluorine-containing elastomer preferably contains $-CH_2-$ in a main chain.

## EFFECTS OF INVENTION

The present disclosure can provide a method for producing an aqueous dispersion of a fluorine-containing elastomer, the method being capable of producing a sufficient number of fluorine-containing elastomer particles at a sufficient polymerization rate while suppressing adhesion of the fluorine-containing elastomer to a polymerization tank.

## DESCRIPTION OF EMBODIMENTS

Herein, the fluorine-containing elastomer is an amorphous fluoropolymer. The term "amorphous" means that the size of a melting peak (ΔH) appearing in differential scanning calorimetry (DSC) (temperature-increasing rate 10°C/min) or differential thermal analysis (DTA) (temperature-increasing rate 10°C/min) of the fluoropolymer is 4.5 J/g or less. The fluorine-containing elastomer exhibits elastomeric characteristics by being crosslinked. The elastomeric characteristics mean such characteristics that the polymer can be stretched, and retain its original length when the force required to stretch the polymer is no longer applied.

Herein, the perfluoromonomer is a monomer that does not contain a carbon atom-hydrogen atom bond in the molecule. The perfluoromonomer may be a monomer having carbon atoms and fluorine atoms in which some of the

fluorine atoms bonded to the carbon atoms are replaced with chlorine atoms, or may be a monomer having a nitrogen atom, an oxygen atom, a sulfur atom, a phosphorus atom, a boron atom, or a silicon atom in addition to carbon atoms. The perfluoromonomer is preferably a monomer in which all hydrogen atoms are replaced with fluorine atoms. The perfluoromonomer does not include a monomer that provides a crosslinkable group.

The monomer that provides a crosslinking site is a monomer (a cure site monomer) that provides a fluoropolymer with a crosslinking site for forming a crosslink by a cross-linking agent. The monomer that provides a crosslinking site includes a monomer that provides a crosslinkable group.

Herein, the contents of the respective monomer units constituting the fluorine-containing elastomer can be calculated by a suitable combination of NMR, FT-IR, elemental analysis, and X-ray fluorescence analysis in accordance with the types of the monomers.

Herein, the term "organic group" means a group containing one or more carbon atoms or a group formed by removing one hydrogen atom from an organic compound.

Examples of the "organic group" include:

an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents,
a non-aromatic heterocyclic group optionally having one or more substituents,
a heteroaryl group optionally having one or more substituents,
a cyano group,
a formyl group,
RaO-,
RaCO-,
$RaSO_2$- ,
RaCOO-,
RaNRaCO-,
RaCONRa-,
RaOCO-,
$RaOSO_2$-, and
$RaNRbSO_2$-
wherein each Ra is independently
an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents,
a non-aromatic heterocyclic group optionally having one or more substituents, or
a heteroaryl group optionally having one or more substituents, and
Rb is independently H or an alkyl group optionally having one or more substituents.

The organic group is preferably an alkyl group optionally having one or more substituents.

The term "substituent" as used herein means a group capable of replacing another atom or group. Examples of the "substituent" include an aliphatic group, an aromatic group, a heterocyclic group, an acyl group, an acyloxy group, an acylamino group, an aliphatic oxy group, an aromatic oxy group, a heterocyclic oxy group, an aliphatic oxycarbonyl group, an aromatic oxycarbonyl group, a heterocyclic oxycarbonyl group, a carbamoyl group, an aliphatic sulfonyl group, an aromatic sulfonyl group, a heterocyclic sulfonyl group, an aliphatic sulfonyloxy group, an aromatic sulfonyloxy group, a heterocyclic sulfonyloxy group, a sulfamoyl group, an aliphatic sulfonamide group, an aromatic sulfonamide group, a heterocyclic sulfonamide group, an amino group, an aliphatic amino group, an aromatic amino group, a heterocyclic amino group, an aliphatic oxycarbonylamino group, an aromatic oxycarbonylamino group, a heterocyclic oxycarbonylamino group, an aliphatic sulfinyl group, an aromatic sulfinyl group, an aliphatic thio group, an aromatic thio group,

a hydroxy group, a cyano group, a sulfo group, a carboxy group, an aliphatic oxyamino group, an aromatic oxyamino group, a carbamoylamino group, a sulfamoylamino group, a halogen atom, a sulfamoylcarbamoyl group, a carbamoylsulfamoyl group, a dialiphatic oxyphosphinyl group, and a diaromatic oxyphosphinyl group.

The aliphatic group may be saturated or unsaturated, and may have a hydroxyl group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic group include alkyl groups having 1 to 8 and preferably 1 to 4 carbon atoms in total, such as a methyl group, an ethyl group, a vinyl group, a cyclohexyl group, and a carbamoylmethyl group.

The aromatic group may have, for example, a nitro group, a halogen atom, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic group include aryl groups having 6 to 12 and preferably 6 to 10 carbon atoms in total, such as a phenyl group, a 4-nitrophenyl group, a 4-acetylaminophenyl group, and a 4-methanesulfonylphenyl group.

The heterocyclic group may have a halogen atom, a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the heterocyclic group include 5- or 6-membered heterocyclic groups having 2 to 12 and preferably 2 to 10 carbon atoms in total, such as a 2-tetrahydrofuryl group and a 2-pyrimidyl group.

The acyl group may have an aliphatic carbonyl group, an arylcarbonyl group, a heterocyclic carbonyl group, a hydroxy group, a halogen atom, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the acyl group include acyl groups having 2 to 8 and preferably 2 to 4 carbon atoms in total, such as an acetyl group, a propanoyl group, a benzoyl group, and a 3-pyridinecarbonyl group.

The acylamino group may have an aliphatic group, an aromatic group, a heterocyclic group, or the like, and may have, for example, an acetylamino group, a benzoylamino group, a 2-pyridinecarbonylamino group, a propanoylamino group, or the like. Examples of the acylamino group include acylamino groups having 2 to 12 and preferably 2 to 8 carbon atoms in total and alkylcarbonylamino groups having 2 to 8 carbon atoms in total, such as an acetylamino group, a benzoylamino group, a 2-pyridinecarbonylamino group, and a propanoylamino group.

The aliphatic oxycarbonyl group may be saturated or unsaturated, and may have a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic oxycarbonyl group include alkoxycarbonyl groups having 2 to 8 and preferably 2 to 4 carbon atoms in total, such as a methoxycarbonyl group, an ethoxycarbonyl group, and a (t)-butoxycarbonyl group.

The carbamoyl group may have an aliphatic group, an aromatic group, a heterocyclic group, or the like. Examples of the carbamoyl group include an unsubstituted carbamoyl group and alkylcarbamoyl groups having 2 to 9 carbon atoms in total, and preferably an unsubstituted carbamoyl group and alkylcarbamoyl groups having 2 to 5 carbon atoms in total, such as a N-methylcarbamoyl group, a N,N-dimethylcarbamoyl group, and a N-phenylcarbamoyl group.

The aliphatic sulfonyl group may be saturated or unsaturated, and may have a hydroxy group, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic sulfonyl group include alkylsulfonyl groups having 1 to 6 and preferably 1 to 4 carbon atoms in total, such as a methanesulfonyl group.

The aromatic sulfonyl group may have a hydroxy group, an aliphatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic sulfonyl group include arylsulfonyl groups having 6 to 10 carbon atoms in total, such as a benzenesulfonyl group.

The amino group may have an aliphatic group, an aromatic group, a heterocyclic group, or the like.

The acylamino group may have, for example, an acetylamino group, a benzoylamino group, a 2-pyridinecarbonylamino group, a propanoylamino group, or the like. Examples of the acylamino group include acylamino groups having 2 to 12 and preferably 2 to 8 carbon atoms in total, and more preferably alkylcarbonylamino groups having 2 to 8 carbon atoms in total, such as an acetylamino group, a benzoylamino group, a 2-pyridinecarbonylamino group, and a propanoylamino group.

The aliphatic sulfonamide group, the aromatic sulfonamide group, and the heterocyclic sulfonamide group may be, for example, a methanesulfonamide group, a benzenesulfonamide group, and a 2-pyridinesulfonamide group, respectively.

The sulfamoyl group may have an aliphatic group, an aromatic group, a heterocyclic group, or the like. Examples of the sulfamoyl group include a sulfamoyl group, alkylsulfamoyl groups having 1 to 9 carbon atoms in total, dialkylsulfamoyl groups having 2 to 10 carbon atoms in total, arylsulfamoyl groups having 7 to 13 carbon atoms in total, and heterocyclic sulfamoyl groups having 2 to 12 carbon atoms in total, and more preferably a sulfamoyl group, alkylsulfamoyl

groups having 1 to 7 carbon atoms in total, dialkylsulfamoyl groups having 3 to 6 carbon atoms in total, arylsulfamoyl groups having 6 to 11 carbon atoms in total, and heterocyclic sulfamoyl groups having 2 to 10 carbon atoms in total, such as a sulfamoyl group, a methylsulfamoyl group, a N,N-dimethylsulfamoyl group, a phenylsulfamoyl group, and a 4-pyridinesulfamoyl group.

The aliphatic oxy group may be saturated or unsaturated, and may have a methoxy group, an ethoxy group, an i-propyloxy group, a cyclohexyloxy group, a methoxyethoxy group, or the like. Examples of the aliphatic oxy group include alkoxy groups having 1 to 8 and preferably 1 to 6 carbon atoms in total, such as a methoxy group, an ethoxy group, an i-propyloxy group, a cyclohexyloxy group, and a methoxyethoxy group.

The aromatic amino group and the heterocyclic amino group may have an aliphatic group, an aliphatic oxy group, a halogen atom, a carbamoyl group, a heterocyclic group having a ring condensed with the aryl group, or an aliphatic oxycarbonyl group, and preferably an aliphatic group having 1 to 4 carbon atoms in total, an aliphatic oxy group having 1 to 4 carbon atoms in total, a halogen atom, a carbamoyl group having 1 to 4 carbon atoms in total, a nitro group, or an aliphatic oxycarbonyl group having 2 to 4 carbon atoms in total.

The aliphatic thio group may be saturated or unsaturated, and examples include alkylthio groups having 1 to 8 and more preferably 1 to 6 carbon atoms in total, such as a methylthio group, an ethylthio group, a carbamoylmethylthio group, and a t-butylthio group.

The carbamoylamino group may have an aliphatic group, an aryl group, a heterocyclic group, or the like. Examples of the carbamoylamino group include a carbamoylamino group, alkylcarbamoylamino groups having 2 to 9 carbon atoms in total, dialkylcarbamoylamino groups having 3 to 10 carbon atoms in total, aryl carbamoyl amino groups having 7 to 13 carbon atoms in total, and heterocyclic carbamoylamino groups having 3 to 12 carbon atoms in total, and preferably a carbamoylamino group, alkylcarbamoylamino groups having 2 to 7 carbon atoms in total, dialkylcarbamoylamino groups having 3 to 6 carbon atoms in total, aryl carbamoyl amino groups having 7 to 11 carbon atoms in total, and heterocyclic carbamoylamino groups having 3 to 10 carbon atoms in total, such as a carbamoylamino group, a methylcarbamoylamino group, a N,N-dimethylcarbamoylamino group, a phenylcarbamoylamino group, and a 4-pyridinecarbamoylamino group.

A range indicated by endpoints as used herein includes all numerical values within the range (for example, the range of 1 to 10 includes 1.4, 1.9, 2.33, 5.75, 9.98, and the like).

The phrase "at least one" as used herein includes all numerical values equal to or greater than 1 (for example, at least 2, at least 4, at least 6, at least 8, at least 10, at least 25, at least 50, at least 100, and the like).

Hereinafter, specific embodiments of the present disclosure will now be described in detail, but the present disclosure is not limited to the following embodiments.

The present disclosure relates to a method for producing an aqueous dispersion of a fluorine-containing elastomer, comprising polymerizing a fluorine-containing monomer in the presence of a polymer (1) containing a polymerization unit (1) based on a monomer (1) represented by general formula (1) and an aqueous medium to produce an aqueous dispersion of a fluorine-containing elastomer:

$$CF_2=CF-R-CZ^1Z^2-COCM \qquad (1)$$

wherein R is a linking group, $Z^1$ and $Z^2$ are each independently F or $CF_3$, and M is H, a metal atom, $NR^7_4$, imidazolium optionally having a substituent, pyridinium optionally having a substituent, or phosphonium optionally having a substituent, wherein $R^7$ is H or an organic group.

Since the production method of the present disclosure comprises polymerizing a fluorine-containing monomer in the presence of a polymer (1) and an aqueous medium, it is possible to produce a sufficient number of fluorine-containing elastomer particles at a sufficient polymerization rate while suppressing adhesion of the fluorine-containing elastomer to a polymerization tank.

In the production method of the present disclosure, as the monomer (1) represented by general formula (1), one type of monomer or two or more types of monomers can be used.

R is a linking group. The "linking group" as used herein is a divalent linking group. The linking group may be a single bond and preferably contains at least one carbon atom, and the number of carbon atoms may be 2 or more, 4 or more, 8 or more, 10 or more, or 20 or more. The upper limit is not limited, and, for example, may be 100 or less, and may be 50 or less.

The linking group may be linear or branched, cyclic or acyclic, saturated or unsaturated, and substituted or unsubstituted, and, as desired, may contain one or more heteroatoms selected from the group consisting of sulfur, oxygen, and nitrogen, and, as desired, may contain one or more functional groups selected from the group consisting of ester, amide, sulfonamide, carbonyl, carbonate, urethane, urea, and carbamate. The linking group may be free from carbon atoms and may be a catenary heteroatom such as oxygen, sulfur, or nitrogen.

R is preferably a catenary heteroatom such as oxygen, sulfur, or nitrogen, or a divalent organic group.

When R is a divalent organic group, a hydrogen atom bonded to a carbon atom may be replaced with a halogen

other than fluorine, such as chlorine, and the divalent organic group may or may not contain a double bond. Further, R may be linear or branched, and may be cyclic or acyclic. R may also contain a functional group (e.g., ester, ether, ketone (keto group), amine, halide, etc.).

R may also be a fluorine-free divalent organic group or a partially fluorinated or perfluorinated divalent organic group.

R may be, for example, a hydrocarbon group in which no fluorine atom is bonded to a carbon atom, a hydrocarbon group in which some hydrogen atoms bonded to carbon atoms are replaced with fluorine atoms, or a hydrocarbon group in which all hydrogen atoms bonded to carbon atoms are replaced with fluorine atoms, and these may contain an oxygen atom, may contain a double bond, and may contain a functional group.

R is preferably a hydrocarbon group that has 1 to 100 carbon atoms and that optionally contains an ether bond or a keto group, wherein some or all hydrogen atoms bonded to carbon atoms in the hydrocarbon group may be replaced with fluorine.

R is preferably at least one selected from $-(CH_2)_a-$, $-(CF_2)_a$ ,$-O-(CF_2)_a-$, $-(CF_2)_a-O-(CF_2)_b-$, $-O(CF_2)_a-O-(CF_2)_b-$, $-(CF_2)_a-[O-(CF_2)_b]_c-$, $-O(CF_2)_a-[O-(CF_2)_b]_c-$, $-[(CF_2)_a-O]_b-[(CF_2)_c-O]_d-$, $-O[(CF_2)_a-O]_b-$, $-O[(CF_2)_a-O]_b-[(CF_2)_c-O]_d-$, $-O-[CF_2CF(CF_3)O]_a-(CF_2)_b-$, $-O-(CF_2)_a-O-[CF(CF_3)CF_2O]_b-O-$, $-O-[CF_2CF(CF_3)O]_a-(CF_2)_b-O-$, $-O-[CF_2CF(CF_3)O]_a-(CF_2)_b-O-[CF(CF_3)CF_2O]_c-O-$,$-[CF_2CF(CF_3)O]_a-$, $-[CF(CF_3)CF_2O]_a-$, $-(CF_2)_a-O-[CF(CF_3)CF_2O]_a-$, $-(CF_2)_a-O-[CF(CF_3)CF_2O]_a-(CF_2)_b-$, $-[CF_2CF(CF_3)]_a-CO-(CF_2)_b-$, and combinations of two or more of them.

In the formulas, a, b, c, and d are each independently at least 1 or more. a, b, c, and d may each independently be 2 or more, 3 or more, 4 or more, 10 or more, or 20 or more. The upper limits of a, b, c, and d are, for example, 100.

R is more preferably at least one selected from $-O-CF_2-$, $-O-CF_2CF_2-$,$-O-CF_2CF_2-O-$, $-O-CF_2CF_2CF_2-$, $-O-CF_2CF_2CF_2-O-$, $-O-CF_2CF(CF_3)-O-$, $-O-CF_2CF_2-O-CF(CF_3)CF_2-O-$, $-O-CF_2CF(CF_3)-O-CF_2CF_2-O-$, and $-O-CF_2CF(CF_3)-O-CF_2-$.

R is preferably a divalent group represented by general formula (r1) :

$$-CF_2-O-(CX^6{}_2)_e-\{O-CF(CF_3)\}_f-(O)_g- \qquad (r1)$$

wherein $X^6$ is each independently H, F, or $CF_3$, e is an integer of 0 to 3, f is an integer of 0 to 3, and g is 0 or 1, and more preferably a divalent group represented by general formula (r2):

$$-CF_2-O-(CX^7{}_2)_e-(O)_g- \qquad (r2)$$

wherein $X^7$ is each independently H, F, or $CF_3$, e is an integer of 0 to 3, and g is 0 or 1.

Specific suitable examples of R include $-CF_2-O-CF_2-$, $-CF_2-O-CH_2-$, $-CF_2-O-CH_2CF_2-$, $-CF_2-O-CF_2CF_2-$, $-CF_2-O-CF_2CH_2-$, $-CF_2-O-CF_2CF_2CH_2-$, $-CF_2-O-CF(CF_3)$ -, $-CF_2-O-CF(CF_3)CF_2-$, $-CF_2-O-CF(CF_3)CF_2-O-$, $-CF_2-O-CF(CF_3)CF_2-O-CF_2-$, and $-CF_2-O-CF(CF_3)CH_2-$. In particular, R is preferably a perfluoroalkylene group optionally containing an oxygen atom, and, specifically, $-CF_2-O-$,$-CF_2-O-CF_2-$, $-CF_2-O-CF_2CF_2-$, $-CF_2-O-CF(CF_3)-$, $-CF_2-O-CF(CF_3)CF_2-$, or $-CF_2-O-CF(CF_3)CF_2-O-$ is preferable.

$-R-CZ^1Z^2-$ in general formula (1) is preferably one represented by general formula (s1):

$$-CF_2-O-(CX^6{}_2)_e-\{O-CF(CF_3)\}_f-(O)_g-CZ^1Z^2- \qquad (s1)$$

wherein $X^6$ is each independently H, F, or $CF_3$, e is an integer of 0 to 3, f is an integer of 0 to 3, g is 0 or 1, and $Z^1$ and $Z^2$ are each independently F or $CF_3$. In formula (s1), it is more preferable that one of $Z^1$ and $Z^2$ is F and the other is $CF_3$.

Further, $-R-CZ^1Z^2-$ in general formula (1) is preferably one represented by general formula (s2):

$$-CF_2-O-(CX^7{}_2)_e-(O)_g-CZ^1Z^2- \qquad (s2)$$

wherein $X^7$ is each independently H, F, or $CF_3$, e is an integer of 0 to 3, g is 0 or 1, and $Z^1$ and $Z^2$ are each independently F or $CF_3$. In formula (s2) , it is more preferable that one of $Z^1$ and $Z^2$ is F and the other is $CF_3$.

$-R-CZ^1Z^2-$ in general formula (1) is preferably $-O-CF_2CF_2-$, $-O-CF_2CF_2CF_2-$, $-O-CF_2CF_2CF_2CF_2-$, $-O-CF_2CF(CF_3)-O-CF_2-$, $-O-CF_2CF(CF_3)-O-CF_2CF_2-$,$-CF_2-O-CF_2-$, $-CF_2-O-CF(CF_3)-$, $-CF_2-O-C(CF_3)_2-$, $-CF_2-O-CF_2-CF_2-$, $-CF_2-O-CF_2-CF(CF_3)-$, $-CF_2-O-CF_2-C(CF_3)_2-$, $-CF_2-O-CF_2CF_2-CF_2-$, $-CF_2-O-CF_2CF_2-CF(CF_3)-$, $-CF_2-O-CF_2CF_2-C(CF_3)_2-$, $-CF_2-O-CF(CF_3)-CF_2-$, $-CF_2-O-CF(CF_3)-CF(CF_3)-$, $-CF_2-O-CF(CF_3)-C(CF_3)_2-$, $-CF_2-O-CF(CF_3)CF_2-CF_2-$, $-CF_2-O-CF(CF_3)CF_2-CF(CF_3)$ -, $-CF_2-O-CF(CF_3)CF_2-C(CF_3)_2-$, $-CF_2-O-CF(CF_3)CF_2-O-CF_2-$, $-CF_2-O-CF(CF_3)CF_2-O-CF(CF_3)-$, or $-CF_2-O-CF(CF_3)CF_2-O-C(CF_3)_2-$, more preferably $-O-CF_2CF_2-$, $-O-CF_2CF_2CF_2-$, $-O-CF_2CF_2CF_2CF_2-$, $-O-CF_2CF(CF_3)-O-CF_2-$, $-O-CF_2CF(CF_3)-O-CF_2CF_2-$, $-CF_2-O-CF(CF_3)-$, $-CF_2-O-CF_2-CF(CF_3)-$, $-CF_2-O-CF_2CF_2-CF(CF_3)-$, $-CF_2-O-CF(CF_3)-CF(CF_3)-$, $-CF_2-O-CF(CF_3)CF_2-CF(CF_3)-$, or $-CF_2-O-CF(CF_3)CF_2-O-CF(CF_3)-$, and even more preferably $-O-CF_2CF_2-$ or $-O-CF_2CF(CF_3)-O-CF_2CF_2-$.

It is also preferable that the polymer (1) is highly fluorinated. For example, 80% or more, 90% or more, 95% or more, or 100% of C-H bonds in the polymer (1) are preferably replaced with C-F bonds.

It is also preferable that the monomer (1) and the polymer (1) have C-F bonds and no C-H bonds, in the portion excluding -COOM. In other words, in general formula (1), R is preferably a perfluoroalkylene group having 1 or more carbon atoms, and the perfluoroalkylene group may be either linear or branched, may be either cyclic or acyclic, and may contain at least one catenary heteroatom. The number of carbon atoms of the perfluoroalkylene group may be 2 to 20, and may be 4 to 18.

The monomer (1) and the polymer (1) may be partially fluorinated. In other words, it is also preferable that the monomer (1) and the polymer (1) have at least one hydrogen atom bonded to a carbon atom and at least one fluorine atom bonded to a carbon atom.

M is H, a metal atom, $NR^7_4$, imidazolium optionally having a substituent, pyridinium optionally having a substituent, or phosphonium optionally having a substituent, wherein $R^7$ is H or an organic group.

Examples of the metal atom include alkali metals (Group 1) and alkaline earth metals (Group 2), and preferred is Na, K, or Li.

M is preferably H, a metal atom, or $NR^7_4$, more preferably H, an alkali metal (Group 1), an alkaline earth metal (Group 2), or $NR^7_4$, even more preferably H, Na, K, Li, or $NH_4$, further preferably H, Na, K, or $NH_4$, and particularly preferably H or $NH_4$.

It is also preferable that the monomer (1) is a monomer (2) represented by general formula (2).

It is also preferable that the polymer (1) is a polymer (2) containing a polymerization unit (2) based on the monomer (2) represented by general formula (2):

$$CF_2=CF(-O-Rf-COOM \qquad (2)$$

wherein Rf is a fluorine-containing alkylene group having 1 to 40 carbon atoms, or a fluorine-containing alkylene group having 2 to 100 carbon atoms and having an ether bond or a keto group, and M is as described above.

The polymer (2) may be a homopolymer of the monomer represented by general formula (2) or may be a copolymer thereof with a further monomer.

In general formula (2), Rf is a fluorine-containing alkylene group having 1 to 40 carbon atoms, a fluorine-containing alkylene group having 2 to 100 carbon atoms and having an ether bond, or a fluorine-containing alkylene group having 2 to 100 carbon atoms and having a keto group. Rf may contain $-CZ^1Z^2-$ ($Z^1$ and $Z^2$ are as described above) at a terminal bonded to -COCM. Note that the fluorine-containing alkylene group having 2 to 100 carbon atoms and having an ether bond is an alkylene group that does not contain a structure having an oxygen atom at a terminal and that contains an ether bond between carbon atoms.

The fluorine-containing alkylene group for Rf preferably has 2 or more carbon atoms. Further, the number of carbon atoms is preferably 30 or less, more preferably 20 or less, even more preferably 10 or less, and particularly preferably 5 or less. Examples of the fluorine-containing alkylene group include $-CF_2-$, $-CH_2CF_2-$, $-CF_2CF_2-$, $-CF_2CH_2-$, $-CF_2CF_2CH_2-$,$-CF(CF_3)-$, $-CF(CF_3)CF_2-$, $-CF(CF_3)CH_2-$, $-CF_2CF_2CF_2-$, and $-CF_2CF_2CF_2CF_2-$. The fluorine-containing alkylene group is preferably a perfluoroalkylene group, and more preferably an unbranched linear perfluoroalkylene group.

The fluorine-containing alkylene group having an ether bond preferably has 3 or more carbon atoms. Further, the fluorine-containing alkylene group having an ether bond preferably has 60 or less, more preferably 30 or less, even more preferably 12 or less, and particularly preferably 5 or less carbon atoms. It is also preferable that the fluorine-containing alkylene group having an ether bond is, for example, a divalent group represented by, for example, the general formula:

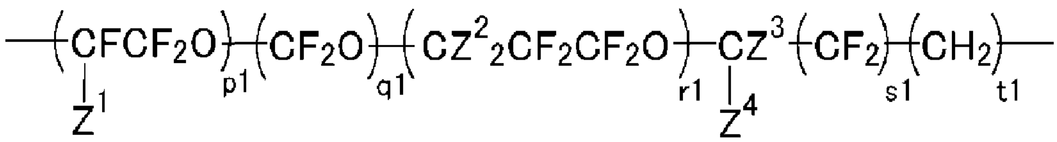

wherein $Z^1$ is F or $CF_3$; $Z^2$ and $Z^3$ are each H or F; $Z^4$ is H, F, or $CF_3$; p1 + q1 + r1 is an integer of 1 to 10; s1 is 0 or 1; and t1 is an integer of 0 to 5.

Specific examples of the fluorine-containing alkylene group having an ether bond include $-CF(CF_3)CF_2-O-CF(CF_3)-$, $-(CF(CF_3)CF_2-O)_n-CF(CF_3)-$ (wherein n is an integer of 1 to 10), $-CF(CF_3)CF_2-O-CF(CF_3)CH_2-$,$-(CF(CF_3)CF_2-O)_n-CF(CF_3)CH_2-$ (wherein n is an integer of 1 to 10) ,$-CH_2CF_2CF_2O-CH_2CF_2CH_2-$, $-CF_2CF_2CF_2O-CF_2-$, $-CF_2CF_2CF_2O-CF_2CF_2-$, $-CF_2CF_2CF_2O-CF_2CF_2CF_2-$, $-CF_2CF_2CF_2O-CF_2CF_2CH_2-$, $-CF_2CF_2O-CF_2-$, and $-CF_2CF_2O-CF_2CH_2-$. The fluorine-containing alkylene group having an ether bond is preferably a perfluoroalkylene group.

The fluorine-containing alkylene group having a keto group preferably has 3 or more carbon atoms. Further, the number of carbon atoms of the fluorine-containing alkylene group having a keto group is preferably 60 or less, more preferably 30 or less, even more preferably 12 or less, and particularly preferably 5 or less.

Specific examples of the fluorine-containing alkylene group having a keto group include $-CF_2CF(CF_3)CO-CF_2-$, $-CF_2CF(CF_3)CO-CF_2CF_2-$,$-CF_2CF(CF_3)CO-CF_2CF_2CF_2-$, and $-CF_2CF(CF_3)CO-CF_2CF_2CF_2CF_2-$. The fluorine-containing alkylene group having a keto group is preferably a perfluoroalkylene group.

M is H, a metal atom, $NR^7_4$, imidazolium optionally having a substituent, pyridinium optionally having a substituent, or phosphonium optionally having a substituent, wherein $R^7$ is H or an organic group.

$R^7$ is preferably H or a $C_{1-10}$ organic group, more preferably H or a $C_{1-4}$ organic group, and even more preferably H or a $C_{1-4}$ alkyl group.

Examples of the metal atom include alkali metals (Group 1) and alkaline earth metals (Group 2), and preferred is Na, K, or Li.

M is preferably H, a metal atom, or $NR^7_4$, more preferably H, an alkali metal (Group 1), an alkaline earth metal (Group 2), or $NR^7_4$, even more preferably H, Na, K, Li, or $NH_4$, further preferably H, Na, K, or $NH_4$, and particularly preferably H or $NH_4$.

The monomer represented by general formula (2) is preferably at least one selected from the group consisting of monomers represented by general formulas (2a), (2b), (2c), (2d), (2e), (2f), and (2g) :

$$CF_2=CF-O-(CF_2)_{n1}-COOM \qquad (2a)$$

wherein n1 represents an integer of 1 to 10, and M is as defined above;

$$CF_2=CF-O-(CF_2C(CF_3)F)_{n2}-COOM \qquad (2b)$$

wherein n2 represents an integer of 1 to 5, and M is as defined above;

$$CF_2=CF-O-(CFX^1)_{n3}-COOM \qquad (2c)$$

wherein $X^1$ represents F or $CF_3$, n3 represents an integer of 1 to 10, and M is as defined above;

$$CF_2=CF-O-(CF_2CFX^1O)_{n4}-(CF_2)_{n6}-COOM \qquad (2d)$$

wherein n4 represents an integer of 1 to 10, n6 represents an integer of 1 to 3, and M is as defined above;

$$CF_2=CF-O-(CF_2CF_2CFX^1O)_{n5}-CF_2CF_2CF_2-COOM \qquad (2e)$$

wherein n5 represents an integer of 0 to 10, and M and $X^1$ are as defined above;

$$CF_2=CF-O-(CF_2)_{n7}-O-(CF_2)_{n8}-COOM \qquad (2f)$$

wherein n7 represents an integer of 1 to 10, n8 represents an integer of 1 to 3, and M is as defined above; and

$$CF_2=CF[OCF_2CF(CF_3)]_{n9}O(CF_2)_{n10}O[CF(CF_3)CF_2O]_{n11}CF(CF_3)COOM \qquad (2g)$$

wherein n9 represents an integer of 0 to 5, n10 represents an integer of 1 to 8, n11 represents an integer of 0 to 5, and M is as defined above.

In general formula (2a), n1 is preferably an integer of 5 or less, and more preferably an integer of 2 or less.

Examples of the monomer represented by general formula (2a) include $CF_2=CF-O-CF_2COOM$, $CF_2=CF(OCF_2CF_2COOM)$ , and $CF_2=CF(O(CF_2)_3COOM)$, wherein M is as defined above.

In general formula (2b), n2 is preferably an integer of 3 or less from the viewpoint of dispersion stability of the resulting composition.

In general formula (2c), n3 is preferably an integer of 5 or less from the viewpoint of water-solubility, and the above M is preferably H or $NH_4$.

In general formula (2d), $X^1$ is preferably $-CF_3$ from the viewpoint of dispersion stability of the composition, n4 is preferably an integer of 5 or less from the viewpoint of water-solubility, and M is preferably H or $NH_4$.

Examples of the monomer represented by general formula (2d) include $CF_2=CFOCF_2CF(CF_3)OCF_2CF_2COOM$, $CF_2=CFOCF_2CF(CF_3)OCF_2COOM$, and $CF_2=CFOCF_2CF(CF_3)OCF_2CF_2CF_2COOM$, wherein M represents H, $NH_4$, or an alkali metal.

In general formula (2e), n5 is preferably an integer of 5 or less from the viewpoint of water-solubility, and M is preferably H or $NH_4$.

An example of the monomer represented by general formula (2e) is $CF_2=CFOCF_2CF_2CF_2COOM$, wherein M represents H, $NH_4$, or an alkali metal.

In general formula (2f), n7 is preferably an integer of 5 or less from the viewpoint of water-solubility, and M is preferably H or $NH_4$.

An example of the monomer represented by general formula (2f) is $CF_2=CF-O-(CF_2)_3-O-CF_2-COOM$, wherein M represents H, $NH_4$, or an alkali metal.

In general formula (2g), n9 is preferably an integer of 3 or less from the viewpoint of water-solubility, n10 is preferably an integer of 3 or less, n11 is preferably an integer of 3 or less, and M is preferably H or $NH_4$.

Examples of the monomer represented by general formula (2g) include $CF_2=CFO(CF_2)_2OCF(CF_3)COCM$, $CF_2=CFOCF_2CF_2OCF(CF_3)CF_2OCF(CF_3)COCM$, $CF_2=CFOCF_2CF(CF_3)OCF_2CF_2OCF(CF_3)COCM$, $CF_2=CF[OCF_2CF(CF_3)]_2O(CF_2)_2O[CF(CF_3)CF_2O]CF(CF_3)COCM$, and $CF_2=CF[OCF_2CF(CF_3)]_3O(CF_2)_2O[CF(CF_3)CF_2O]_3CF(CF_3)COCM$, wherein M represents H, $NH_4$, or an alkali metal.

The polymer (1) may be a homopolymer containing only the polymerization unit (1), or may be a copolymer containing the polymerization unit (1) and a polymerization unit based on a further monomer copolymerizable with the monomer (1) represented by general formula (1). From the viewpoint of solubility in the aqueous medium, preferred is a homopolymer containing only the polymerization unit (1). The polymerization unit (1) may be the same or different at each occurrence, and the polymer (1) may contain polymerization units (1) based on two or more different monomers represented by general formula (1).

The further monomer is preferably a monomer represented by the general formula $CFR=CR_2$, wherein R is independently H, F, or a perfluoroalkyl group having 1 to 4 carbon atoms. It is also preferable that the further monomer is a fluorine-containing ethylenic monomer having 2 or 3 carbon atoms. Examples of the further monomer include $CF_2=CF_2$, $CF_2=CFCl$, $CH_2=CF_2$, $CFH=CH_2$, $CFH=CF_2$, $CF_2=CFCF_3$, $CH_2=CFCF_3$, $CH_2=CHCF_3$, $CHF=CHCF_3$ (E-form), and $CHF=CHCF_3$ (Z-form).

Among these, from the viewpoint of good copolymerizability, preferred is at least one selected from the group consisting of tetrafluoroethylene ($CF_2=CF_2$), chlorotrifluoroethylene ($CF_2=CFCl$), and vinylidene fluoride ($CH_2=CF_2$), and more preferred is at least one selected from the group consisting of tetrafluoroethylene and vinylidene fluoride. Accordingly, the polymerization unit based on the further monomer is preferably a polymerization unit based on at least one selected from the group consisting of tetrafluoroethylene and vinylidene fluoride. The polymerization unit based on the further monomer may be the same or different at each occurrence, and the polymer (1) may contain polymerization units based on two or more different further monomers.

When the polymer (1) contains the polymerization unit (1) and the polymerization unit based on the further monomer copolymerizable with the monomer (1), the content of the polymerization unit (1) based on the monomer (1) is preferably 40 to 60 mol%, more preferably 45 to 55 mol% based on all polymerization units constituting the polymer (1), and the content of the polymerization unit based on the further monomer is preferably 60 to 40 mol%, more preferably 55 to 45 mol% based on all polymerization units constituting the polymer (1). Such a configuration is particularly preferable when the polymerization unit based on the further monomer copolymerizable with the monomer (1) is a polymerization unit based on a monomer represented by the general formula $CFR=CR_2$.

When the polymer (1) contains the polymerization unit (1) and the polymerization unit based on the further monomer copolymerizable with the monomer (1), the alternating ratio of the polymerization unit (1) and the polymerization unit based on the further monomer copolymerizable with the monomer (1) is preferably 40% or more, more preferably 50% or more, even more preferably 60% or more, further preferably 70% or more, particularly preferably 80% or more, and most preferably 90% or more. The alternating ratio may be, for example, 40 to 99%. Such a configuration is particularly preferable when the polymerization unit based on the further monomer copolymerizable with the monomer (1) is a polymerization unit based on a monomer represented by the general formula $CFR=CR_2$.

The alternating ratio of the polymerization unit (1) and the polymerization unit based on the further monomer copolymerizable with the monomer (1) in the polymer (1) can be determined by $^{19}F$-NMR analysis of the polymer (1).

For example, when the monomer (1) is $CF_2=CFOCF_2CF_2COOH$ and the further monomer is vinylidene fluoride ($CH_2=CF_2$), the alternating ratio of the polymer (1) can be calculated by the following method. The polymer (1) is subjected to $^{19}F$-NMR measurement, the total integrated value of each of two peaks appearing in the NMR spectrum and derived from "$OCF_2$*" of $CF_2=CFOCF_2CF_2COOH$ (a peak appearing in the range of -79 ppm to -83 ppm and a peak appearing in the range of -83 ppm to -87 ppm) are determined, and the alternating ratio is calculated according to the following calculation formula:

$$\text{Alternating ratio (\%)} \geq (b \times 2) / (a + b) \times 100$$

a: Total integrated value of peak in area of -79 ppm to -83 ppm
b: Total integrated value of peak in area of -83 ppm to -87 ppm

Another example of the further monomer is a monomer represented by general formula (n1-2):

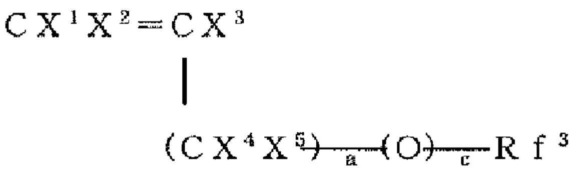

(n1-2)

wherein $X^1$ and $X^2$ are the same or different and are each H or F; $X^3$ is H, F, Cl, $CH_3$, or $CF_3$; $X^4$ and $X^5$ are the same or different and are each H or F; a and c are the same or different and are each 0 or 1; and $Rf^3$ is a fluorine-containing alkyl group having 1 to 40 carbon atoms or a fluorine-containing alkyl group having 2 to 100 carbon atoms and having an ether bond.

Specifically, preferable examples include $CH_2$=$CFCF_2$-O-$Rf^3$, $CF_2$=CF-O-$Rf^3$, $CF_2$=$CFCF_2$-O-$Rf^3$, $CF_2$=CF-$Rf^3$, $CH_2$=CH-$Rf^3$, and $CH_2$=CH-O-$Rf^3$, wherein $Rf^3$ is as in the above formula (n1-2) .

Another example of the further monomer is a fluorine-containing acrylate monomer represented by formula (n2-1):

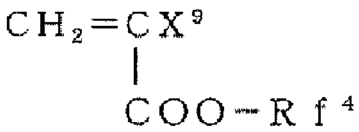

(n2-1)

wherein $X^9$ is H, F, or $CH_3$; and $Rf^4$ is a fluorine-containing alkyl group having 1 to 40 carbon atoms or a fluorine-containing alkyl group having 2 to 100 carbon atoms and having an ether bond. Examples of the $Rf^4$ group include:

$$-(CH_2)_{d1}-(CF_2)_{e1}-Z^8$$

wherein $Z^8$ is H, F, or Cl; dl is an integer of 1 to 4; and e1 is an integer of 1 to 10,

$-CH(CF_3)_2$,

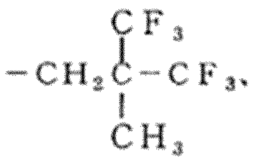

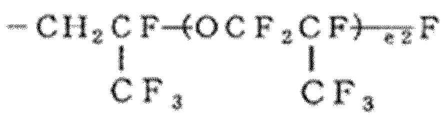

wherein e2 is an integer of 1 to 5,

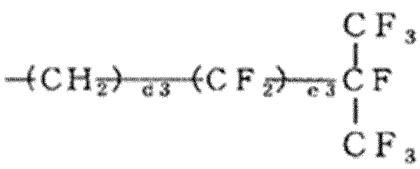

wherein d3 is an integer of 1 to 4, and e3 is an integer of 1 to 10.

Another example of the further monomer is a fluorine-containing vinyl ether represented by formula (n2-2):

$CH_2=CHO\text{-}Rf^5$ (n2-2)

wherein $Rf^5$ is a fluorine-containing alkyl group having 1 to 40 carbon atoms or a fluorine-containing alkyl group having 2 to 100 carbon atoms and having an ether bond.

Specifically, preferable examples of the monomer represented by general formula (n2-2) include:

$$CH_2=CHOCH_2\text{-}(CF_2)_{e4}\text{-}Z^9$$

wherein $Z^9$ is H or F; and e4 is an integer of 1 to 10,

$$CH_2=CHOCH_2CH_2\text{-}(CF_2)_{e5}\text{-}F$$

wherein e5 is an integer of 1 to 10,

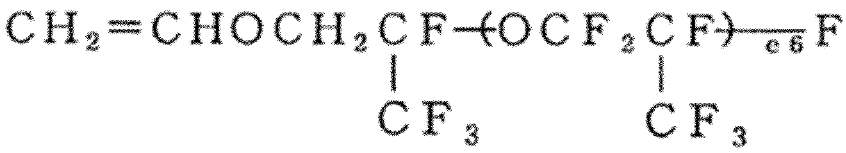

wherein e6 is an integer of 1 to 10.

More specifically, examples include

$CH_2=CHOCH_2CF_2CF_2H$,

$$CH_2=CHOCH_2\text{-}(CF_2CF_2)_2\text{-}H、$$

$$CH_2=CHOCH_2\text{-}(CF_2CF_2)_3\text{-}H、$$

$CH_2=CHOCH_2CF_2CF_3$,

$CH_2=CHOCH_2CF_3$,

$$CH_2=CHOCH_2CH_2\text{-}(CF_2CF_2)_4\text{-}F、$$

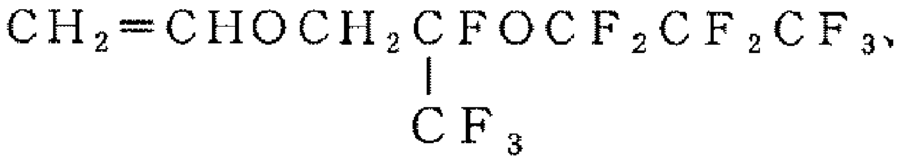

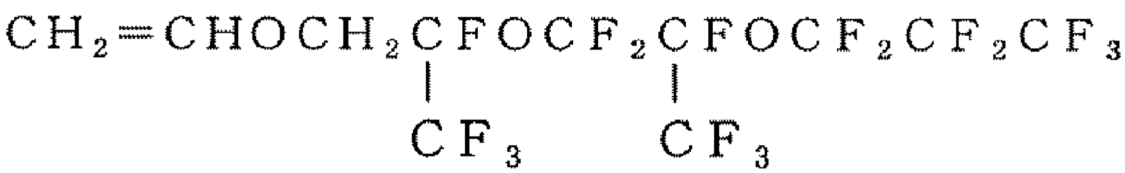

and the like.

In addition, examples also include a fluorine-containing allyl ether represented by general formula (n2-3):

$CH_2=CHCH_2O-Rf^6$ (n2-3)

wherein $Rf^6$ is a fluorine-containing alkyl group having 1 to 40 carbon atoms or a fluorine-containing alkyl group having 2 to 100 carbon atoms and having an ether bond, and a fluorine-containing vinyl monomer represented by general formula (n2-4):

$CH_2=CH-Rf^7$ (n2-4)

wherein $Rf^7$ is a fluorine-containing alkyl group having 1 to 40 carbon atoms or a fluorine-containing alkyl group having 2 to 100 carbon atoms and having an ether bond.

Specific examples of the monomers represented by general formulas (n2-3) and (n2-4) include monomers such as

$CH_2=CHCH_2OCH_2CF_2CF_2H$,

$CH_2=CHCH_2OCH_2-(CF_2CF_2)_2-H$、

$CH_2=CHCH_2OCH_2-(CF_2CF_2)_3-H$、

$CH_2=CHCH_2OCH_2CF_2CF_3$,

$CH_2=CHCH_2OCH_2CF_3$,

$CH_2=CHCH_2OCH_2CH_2-(CF_2CF_2)_4-F$、

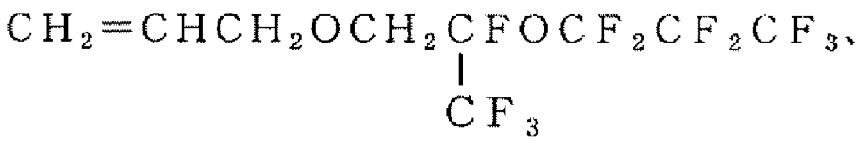

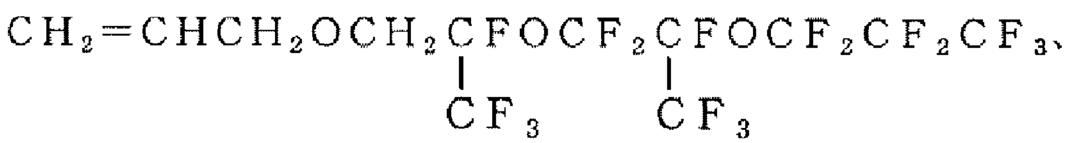

$CH_2=CH-(CF_2CF_2)_2-F$、

$CH_2=CH-(CF_2CF_2)_4-F$

and the like.

In the polymer (1), the content of the polymerization unit (1) is, in an increasing order of preference, 1.0 mol% or more, 3.0 mol% or more, 5.0 mol% or more, 10 mol% or more, 20 mol% or more, 30 mol% or more, 40 mol% or more, 50 mol% or more, 60 mol% or more, 70 mol% or more, 80 mol% or more, or 90 mol% or more, based on all polymerization units. It is particularly preferable that the content of the polymerization unit (1) is substantially 100 mol%, and it is most preferable that the polymer (1) contains only the polymerization unit (1).

In the polymer (1), the content of the polymerization unit based on the further monomer copolymerizable with

the monomer represented by general formula (1) is, in an increasing order of preference, 99.0 mol% or less, 97.0 mol% or less, 95.0 mol% or less, 90 mol% or less, 80 mol% or less, 70 mol% or less, 60 mol% or less, 50 mol% or less, 40 mol% or less, 30 mol% or less, 20 mol% or less, or 10 mol% or less, based on all polymerization units. It is particularly preferable that the content of the polymerization unit based on the further monomer copolymerizable with the monomer represented by general formula (1) is substantially 0 mol%, and it is most preferable that the polymer (1) contains no polymerization unit based on the further monomer.

The lower limit of the weight average molecular weight (Mw) of the polymer (1) is, in an increasing order of preference, $0.2 \times 10^4$ or more, $0.4 \times 10^4$ or more, $0.6 \times 10^4$ or more, $0.8 \times 10^4$ or more, $1.0 \times 10^4$ or more, $1.3 \times 10^4$ or more, $1.4 \times 10^4$ or more, $1.5 \times 10^4$ or more, $1.7 \times 10^4$ or more, $1.9 \times 10^4$ or more, $2.1 \times 10^4$ or more, $2.3 \times 10^4$ or more, $2.7 \times 10^4$ or more, $3.1 \times 10^4$ or more, $3.5 \times 10^4$ or more, $3.9 \times 10^4$ or more, or $4.3 \times 10^4$ or more. The upper limit of the weight average molecular weight (Mw) of the polymer (1) is, in an increasing order of preference, $150.0 \times 10^4$ or less, $100.0 \times 10^4$ or less, $60.0 \times 10^4$ or less, $50.0 \times 10^4$ or less, or $40.0 \times 10^4$ or less.

The lower limit of the number average molecular weight (Mn) of the polymer (1) is, in an increasing order of preference, $0.1 \times 10^4$ or more, $0.2 \times 10^4$ or more, $0.3 \times 10^4$ or more, $0.4 \times 10^4$ or more, $0.5 \times 10^4$ or more, $1.0 \times 10^4$ or more, $1.2 \times 10^4$ or more, $1.4 \times 10^4$ or more, $1.6 \times 10^4$ or more, or $1.8 \times 10^4$ or more. The upper limit of the number average molecular weight (Mn) of the polymer (1) is, in an increasing order of preference, $75.0 \times 10^4$ or less, $50.0 \times 10^4$ or less, $40.0 \times 10^4$ or less, $30.0 \times 10^4$ or less, or $20.0 \times 10^4$ or less.

The molecular weight distribution (Mw/Mn) of the polymer (1) is preferably 2.4 or less, more preferably 2.2 or less, even more preferably 2.0 or less, and particularly preferably 1.9 or less.

The number average molecular weight and the weight average molecular weight are molecular weight values calculated by gel permeation chromatography (GPC) using monodisperse polyethylene oxide (PEO) and polyethylene glycol (PEG) as standards. When measurement by GPC is not possible, the number average molecular weight of the polymer (1) can be determined by the correlation between the number average molecular weight calculated from the number of terminal groups obtained by NMR, FT-IR, or the like and the melt flow rate. The melt flow rate can be measured in accordance with JIS K 7210.

The polymer (1) usually has a terminal group. The terminal group is a terminal group generated during polymerization, and a representative terminal group is independently selected from hydrogen, iodine, bromine, a linear or branched alkyl group, and a linear or branched fluoroalkyl group, and, additionally, may optionally contain at least one catenary heteroatom. The alkyl group or fluoroalkyl group preferably has 1 to 20 carbon atoms. These terminal groups are generally generated from an initiator or chain transfer agent used to form the polymer (1), or generated during a chain transfer reaction.

The polymer (1) preferably has an ion exchange rate (IXR) of 53 or less. The IXR is defined as the number of carbon atoms in the polymer main chain relative to ionic groups. A precursor group that becomes ionic by hydrolysis (for example, $-COOCH_3$) is not regarded as an ionic group for the purpose of determining the IXR.

The IXR is preferably 0.5 or more, more preferably 0.7 or more, even more preferably 1.0 or more, further preferably 1.2 or more, even further preferably 1.5 or more, and particularly preferably 1.9 or more. Further, the IXR is more preferably 30 or less, even more preferably 10 or less, particularly preferably 3 or less, and most preferably 2.2 or less.

The ion exchange capacity of the polymer (1) is, in an increasing order of preference, 0.80 meq/g or more, 1.50 meq/g or more, 1.75 meq/g or more, 2.00 meq/g or more, 2.40 meq/g or more, 2.50 meq/g or more, 2.60 meq/g or more, 3.00 meq/g or more, or 3.50 meq/g or more. The ion exchange capacity is the content of an ionic group (-COCM) in the polymer (1) and can be determined by calculation from the composition of the polymer (1). A precursor group that becomes ionic by hydrolysis (for example, $-COOCH_3$) is not regarded as an ionic group for the purpose of determining the ion exchange capacity. It is presumed that the higher the ion exchange capacity of the polymer (1), the more anionic groups in the polymer (1), the more stable particles are formed, and also the higher the particle forming ability, resulting in a higher number of particles per unit water volume and a higher polymerization rate. When the ion exchange capacity of the polymer (1) is too low, the fluorine-containing elastomer produced by the polymerization may adhere to a polymerization tank, a sufficient polymerization rate may not be obtained, or the number of fluorine-containing elastomer particles generated may be small.

In the polymer (1), the ionic group (-COCM) is typically distributed along the polymer main chain. The polymer (1) contains the polymer main chain together with a repeating side chain bonded to this main chain, and this side chain preferably has an ionic group.

The polymer (1) preferably contains an ionic group (-COCM) having a pKa of less than 10, and more preferably less than 7.

The polymer (1) preferably has water-solubility. The term "water-solubility" refers to the property of being easily dissolved or dispersed in the aqueous medium. When the polymer has water-solubility, the particle size thereof cannot be measured by, for example, dynamic light scattering (DLS). On the other hand, when the polymer has water-insolubility, the particle size thereof can be measured by, for example, dynamic light scattering (DLS).

The polymer (1) may also be a polymer (12) of a monomer (12) represented by general formula (12), in which the content of a polymerization unit (12) based on the monomer (12) is 50 mol% or more based on all polymerization units constituting the polymer (12), and the weight average molecular weight (Mw) is $1.4 \times 10^4$ or more. The polymer (12) is a novel polymer.

General formula (12): $CF_2$=CF-O-Rf-COOM

wherein X is independently F or $CF_3$, Rf is a fluorine-containing alkylene group having 1 to 40 carbon atoms, or a fluorine-containing alkylene group having 2 to 100 carbon atoms and having an ether bond or a keto group, and M is H, a metal atom, $NR^7_4$, imidazolium optionally having a substituent, pyridinium optionally having a substituent, or phosphonium optionally having a substituent, wherein $R^7$ is H or an organic group.

Rf and M in general formula (12) are the same as Rf and M in general formula (2) representing the monomer constituting the polymer (2).

The polymer (12) may be a homopolymer containing only the polymerization unit (12) based on the monomer (12), or may be a copolymer containing the polymerization unit (12) and a polymerization unit based on a further monomer copolymerizable with the monomer (12). The further monomer is as described above. The polymerization unit (12) may be the same or different at each occurrence, and the polymer (12) may contain polymerization units (12) based on two or more different monomers represented by general formula (12).

The content of the polymerization unit (12) in the polymer (12) is, in an increasing order of preference, 50 mol% or more, 60 mol% or more, 70 mol% or more, 80 mol% or more, 90 mol% or more, or 99 mol% or more, based on all polymerization units constituting the polymer (12). It is particularly preferable that the content of the polymerization unit (12) is substantially 100 mol%, and it is most preferable that the polymer (12) contains only the polymerization unit (12).

In the polymer (12), the content of the polymerization unit based on the further monomer copolymerizable with the monomer (12) is, in an increasing order of preference, 50 mol% or less, 40 mol% or less, 30 mol% or less, 20 mol% or less, 10 mol% or less, or 1 mol% or less, based on all polymerization units constituting the polymer (12). It is particularly preferable that the content of the polymerization unit based on the further monomer copolymerizable with the monomer (12) is substantially 0 mol%, and it is most preferable that the polymer (12) contains no polymerization unit based on the further monomer.

The lower limit of the weight average molecular weight (Mw) of the polymer (12) is, in an increasing order of preference, $1.4 \times 10^4$ or more, $1.7 \times 10^4$ or more, $1.9 \times 10^4$ or more, $2.1 \times 10^4$ or more, $2.3 \times 10^4$ or more, $2.7 \times 10^4$ or more, $3.1 \times 10^4$ or more, $3.5 \times 10^4$ or more, $3.9 \times 10^4$ or more, $4.3 \times 10^4$ or more, $4.7 \times 10^4$ or more, or $5.1 \times 10^4$ or more. The upper limit of the weight average molecular weight (Mw) of the polymer (12) is, in an increasing order of preference, $150.0 \times 10^4$ or less, $100.0 \times 10^4$ or less, $60.0 \times 10^4$ or less, $50.0 \times 10^4$ or less, or $40.0 \times 10^4$ or less.

The lower limit of the number average molecular weight (Mn) of the polymer (12) is, in an increasing order of preference, $1.0 \times 10^4$ or more, $1.2 \times 10^4$ or more, $1.4 \times 10^4$ or more, $1.6 \times 10^4$ or more, or $1.8 \times 10^4$ or more. The upper limit of the number average molecular weight (Mn) of the polymer (12) is, in an increasing order of preference, $75.0 \times 10^4$ or less, $50.0 \times 10^4$ or less, $40.0 \times 10^4$ or less, $30.0 \times 10^4$ or less, or $20.0 \times 10^4$ or less.

The molecular weight distribution (Mw/Mn) of the polymer (12) is preferably 3.0 or less, more preferably 2.4 or less, even more preferably 2.2 or less, particularly preferably 2.0 or less, and most preferably 1.9 or less.

Among the polymer (1), the polymer (12) is a novel polymer and can be produced by a method (12) for producing the polymer (12), the method comprising polymerizing the monomer (12) represented by general formula (12) in an aqueous medium to produce the polymer (12) of the monomer (12), wherein the oxygen concentration in the reaction system of the polymerization is maintained at 1,500 ppm by volume or less.

In the production method (12), the oxygen concentration in the reaction system of the polymerization is 1,500 ppm by volume or less. In the production method (12), the oxygen concentration in the reaction system is maintained at 1,500 ppm by volume or less throughout the polymerization of the monomer (12). The oxygen concentration in the reaction system is preferably 500 ppm by volume or less, more preferably 100 ppm by volume or less, and even more preferably 50 ppm by volume or less. The oxygen concentration in the reaction system is usually 0.01 ppm by volume or more.

In the production method (12), from the viewpoint that a polymer (12) having an even higher molecular weight can readily be produced, the polymerization temperature of the monomer (12) is preferably 70°C or lower, more preferably 65°C or lower, even more preferably 60°C or lower, particularly preferably 55°C or lower, even further preferably 50°C or lower, particularly preferably 45°C or lower, and most preferably 40°C or lower, and it is preferably 10°C or higher, more preferably 15°C or higher, and even more preferably 20°C or higher.

In the production method (12), the monomer (12) and the above-described further monomer may be copolymerized.

In the production method (12), the polymerization pressure is usually atmospheric pressure to 10 MPaG. The polymerization pressure is suitably determined according to the type of monomer used, the molecular weight of the

target polymer, and the reaction rate.

In the production method (12), the polymerization time is usually 1 to 200 hours, and may be 5 to 100 hours.

In the production method (12), the oxygen concentration in the reaction system of the polymerization can be controlled by, for example, circulating an inert gas such as nitrogen or argon, or, in the case of using a gaseous monomer, the gaseous monomer in the liquid phase or gas phase in the reactor. The oxygen concentration in the reaction system of the polymerization can be determined by measuring and analyzing the gas that has come out of the discharge gas line of the polymerization system with a low concentration oxygen analyzer.

In the production method (12), the aqueous medium is a reaction medium in which the polymerization is performed, and means a liquid containing water. The aqueous medium may be any medium containing water, and it may be a medium containing water and, for example, any of fluorine-free organic solvents such as alcohols, ethers, and ketones, and/or fluorine-containing organic solvents having a boiling point of 40°C or lower. The aqueous medium is preferably water.

In the production method (12), the polymerization of the monomer can be performed in the presence of a polymerization initiator. The polymerization initiator is not limited as long as it can generate radicals within the above-described polymerization temperature range, and known oil-soluble and/or water-soluble polymerization initiators may be used. The polymerization initiator may be combined with a reducing agent or the like to form a redox agent and initiate the polymerization. The concentration of the polymerization initiator is suitably determined according to the type of monomer used, the molecular weight of the target polymer, and the reaction rate.

As the polymerization initiator, a persulfate (e.g., ammonium persulfate) and an organic peroxide such as disuccinic acid peroxide or diglutaric acid peroxide may be used alone or in the form of a mixture of two or more of them. Further, the polymerization initiator may be used together with a reducing agent such as sodium sulfite to form a redox system. Further, the concentration of radicals in the system may also be regulated by adding a radical scavenger such as hydroquinone or catechol or adding a peroxide decomposer such as ammonium sulfite during the polymerization.

The polymerization initiator is particularly preferably a persulfate because a polymer having an even higher molecular weight can be readily produced. Examples of the persulfate include ammonium persulfate, potassium persulfate, and sodium persulfate, and ammonium persulfate is preferable.

The amount of the polymerization initiator added is not limited, and the polymerization initiator is added in an amount that does not significantly decrease the polymerization rate (e.g., a concentration of several ppm in water) or more at once in the initial stage of the polymerization, or successively or continuously. The upper limit is within a range where the reaction temperature is allowed to increase while the polymerization reaction heat is removed through the device surface, and the upper limit is more preferably within a range where the polymerization reaction heat can be removed through the device surface.

In the production method (12), the polymerization initiator can be added at the initiation of the polymerization, and can be added also during the polymerization. The proportion between the amount of the polymerization initiator added at the initiation of the polymerization and the amount of the polymerization initiator added during the polymerization is preferably 95/5 to 5/95, more preferably 60/40 to 10/90, and even more preferably 30/70 to 15/85. The method for adding the polymerization initiator during the polymerization is not limited, and the entire amount may be added at once, may be added in two or more divided portions, or may be added continuously.

In the production method (12), from the viewpoint that a polymer having an even higher molecular weight can readily be produced, the polymerization initiator used for the polymerization is preferably added in a total amount of 0.00001 to 10% by mass based on the aqueous medium. The polymerization initiator used for the polymerization is added in a total amount of more preferably 0.0001% by mass or more, even more preferably 0.001% by mass or more, and particularly preferably 0.01% by mass or more, and more preferably 5% by mass or less, and even more preferably 2% by mass or less.

In the production method (12), from the viewpoint that a polymer having an even higher molecular weight can readily be produced, the polymerization initiator used for the polymerization is preferably added in a total amount of 0.001 to 10 mol% based on the monomer. The polymerization initiator used for the polymerization is added in a total amount of more preferably 0.005 mol% or more, and even more preferably 0.01 mol% or more, and more preferably 5 mol% or less, even more preferably 2.5 mol% or less, particularly preferably 2.2 mol% or less, and most preferably 2.0 mol% or less.

In the production method (12), from the viewpoint that a monomer having an even higher molecular weight can readily be produced, the amount of a monomer that contains the monomer (12) and that is present at the initiation of the polymerization is preferably 30% by mass or more based on the amount of the aqueous medium present. The amount of the monomer present is more preferably 35% by mass or more, and even more preferably 40% by mass or more. The upper limit of the amount of the monomer present is not limited, and may be 200% by mass or less from the viewpoint of causing the polymerization to proceed smoothly. The amount of the monomer present at the initiation of the polymerization refers to the total amount of the monomer (12) and the further monomer, if present, present in the reactor at the initiation of the polymerization.

In the production method (12), the polymerization may be performed in the presence of a pH adjuster. The pH adjuster may be added before the initiation of the polymerization or may be added after the initiation of the polymerization.

The pH adjuster may be ammonia, sodium hydroxide, potassium hydroxide, sodium carbonate, potassium carbonate, ammonium carbonate, sodium bicarbonate, potassium bicarbonate, ammonium bicarbonate, sodium phosphate, potassium phosphate, sodium citrate, potassium citrate, ammonium citrate, sodium gluconate, potassium gluconate, ammonium gluconate, or the like.

In the production method (12), the polymerization of the monomer (12) can be performed by; charging a reactor with the aqueous medium, the monomer (12), and optionally the further monomer, and optionally a further additive; stirring the contents of the reactor; maintaining the reactor at a predetermined polymerization temperature; and then adding a predetermined amount of a polymerization initiator to thereby initiate the polymerization reaction. After the initiation of the polymerization reaction, the monomer, the polymerization initiator, and the further additive may be added depending on the purpose.

In the production method (12), the polymerization of the monomer can be performed substantially in the absence of a fluorine-containing surfactant. The expression "substantially in the absence of a fluorine-containing surfactant" as used herein means that the amount of the fluorine-containing surfactant is 10 ppm by mass or less based on the aqueous medium. The amount of the fluorine-containing surfactant is preferably 1 ppm by mass or less, more preferably 100 ppb by mass or less, even more preferably 10 ppb by mass or less, and further preferably 1 ppb by mass or less based on the aqueous medium.

In the production method of the present disclosure, the amount of the polymer (1) added is preferably 0.0001 to 2% by mass based on 100% by mass of the aqueous medium. When the amount of the polymer (1) added (the amount of the polymer (1) present) in the polymerization is within the above range, the polymerization reaction of the fluorine-containing monomer proceeds smoothly and the fluorine-containing elastomer can be produced efficiently. When the amount of the polymer (1) added is too small, a sufficient polymerization rate cannot be obtained or a sufficient yield cannot be obtained.

From the viewpoint of causing the polymerization reaction of the fluorine-containing monomer to further smoothly proceed, the amount of the polymer (1) added is more preferably 0.0005% by mass or more, even more preferably 0.001% by mass or more, particularly preferably 0.005% by mass or more, and most preferably 0.01% by mass or more, based on 100% by mass of the aqueous medium.

On the other hand, when the amount of the polymer (1) added is too large, effects commensurate with the amount of the polymer (1) added cannot be obtained, which is economically disadvantageous. Therefore, the amount of the polymer (1) added is more preferably 2% by mass or less, even more preferably 1% by mass or less, and particularly preferably 0.5% by mass or less, based on 100% by mass of the aqueous medium.

The timing of addition of the polymer (1) in the polymerization is not limited, and it may be added before the initiation of the polymerization or may be added after the initiation of the polymerization. In addition, in the polymerization, the polymer (1) may be added all at once at an arbitrary timing, or it may be added continuously. Adding the polymer (1) continuously means, for example, adding the polymer (1) not all at once but over time and without interruption or in portions. When the polymer (1) is added continuously, it is preferable to add the polymer (1) such that the total amount of the polymer (1) added is in the range described above. When the polymer (1) is added, an aqueous solution containing the polymer (1) and water may be prepared, and the aqueous solution may be added.

As the polymer (1), an aqueous solution containing the polymer (1) can be used.

The polymer (1) or the aqueous solution containing the polymer (1) may contain the dimer and trimer of the monomer (1), or may be substantially free from the dimer and trimer of the monomer (1). The dimer and trimer of the monomer (1) are usually generated when the monomer (1) is polymerized to obtain the polymer (1). The content of the dimer and trimer in the polymer (1) or the aqueous solution containing the polymer (1) is 1.0% by mass or less, preferably 0.1% by mass or less, more preferably 0.01% by mass or less, even more preferably 0.001% by mass or less, and particularly preferably 0.0001% by mass or less, based on the polymer (1).

The content of the dimer and trimer in the polymer (1) or the aqueous solution containing the polymer (1) can be determined by performing gel permeation chromatography (GPC) analysis of the polymer (1) and calculating the proportion (area percentage) of the total area of the dimer and trimer peaks to the total area of all the peaks of the chromatogram obtained by the GPC analysis.

Also, when the content of the dimer and trimer in the polymer (1) or the aqueous solution containing the polymer (1) is less than 0.5% by mass based on the polymer (1), it can be determined by measurement by liquid chromatography-mass spectrometry (LC/MS).

Specifically, aqueous solutions having five or more different content levels of the monomer (1) are prepared, LC/MS analysis is performed on the aqueous solutions with respective content levels, and the relationship between a content level and an area (peak integrated value) corresponding to the content level is plotted to prepare a calibration curve of the monomer (1). Further, from the calibration curve of the monomer (1), a calibration curve of the dimer and trimer of the monomer (1) is prepared.

Methanol is added to the polymer (1) to prepare a mixture, the mixture is filtered through an ultrafiltration disc (molecular weight cutoff 3000 Da), and the resulting collected liquid is subjected to LC/MS analysis.

Then, using the calibration curve, the area (peak integrated value) of the dimer and trimer of the monomer (1) of the chromatogram can be converted to the content of the dimer and trimer.

The dimer and trimer in the polymer (1) or the aqueous solution containing the polymer (1) can be removed by treating the aqueous solution containing the polymer (1) by at least one means selected from the group consisting of ultrafiltration, microfiltration, dialysis membrane treatment, liquid separation, and reprecipitation.

The production method of the present disclosure can efficiently produce a fluorine-containing elastomer using at least one type of polymer (1). Also, in the production method of the present disclosure, two or more types of polymers (1) may be used at the same time, or a further compound having a surfactant function may also be used in combination insofar as the compound is volatile or is allowed to remain in a formed article containing the fluorine-containing elastomer.

In the production method of the present disclosure, the fluorine-containing monomer is preferably polymerized substantially in the absence of a fluorine-containing surfactant.

Conventionally, a fluorine-containing surfactant has been used for the polymerization of a fluorine-containing monomer. However, since the production method of the present disclosure uses the polymer (1), a fluorine-containing elastomer can be obtained by polymerizing the fluorine-containing monomer without using a fluorine-containing surfactant.

The expression "substantially in the absence of a fluorine-containing surfactant" as used herein means that the content of the fluorine-containing surfactant based on the aqueous medium is 10 ppm by mass or less, and the content of the fluorine-containing surfactant is preferably 1 ppm by mass or less, more preferably 100 ppb by mass or less, even more preferably 10 ppb by mass or less, and particularly preferably 1 ppb by mass or less.

The fluorine-containing surfactant may be an anionic fluorine-containing surfactant. The fluorine-containing surfactant is preferably a fluorine-containing surfactant (excluding compounds having a functional group capable of reacting by radical polymerization and a hydrophilic group) .

The anionic fluorine-containing surfactant may be, for example, a fluorine atom-containing surfactant having, in the portion excluding the anionic group, 20 or less carbon atoms in total.

The fluorine-containing surfactant may also be a fluorine-containing surfactant having an anionic moiety having a molecular weight of 800 or less.

The "anionic moiety" means the portion of the fluorine-containing surfactant excluding the cation. For example, in the case of $F(CF_2)_{n1}COOM$ represented by formula (I) described below, the anionic moiety is the portion "$F(CF_2)_{n1}COO$".

The fluorine-containing surfactant may also be a fluorine-containing surfactant having a LogPOW of 3.5 or less. The LogPOW is a partition coefficient between 1-octanol and water, and is represented by LogP wherein P represents the ratio of the concentration of the fluorine-containing surfactant in octanol to the concentration of the fluorine-containing surfactant in water when an octanol/water (1:1) mixed solution containing the fluorine-containing surfactant is phase-separated.

The LogPOW is determined by performing HPLC on standard substances with known octanol/water partition coefficients (heptanoic acid, octanoic acid, nonanoic acid, and decanoic acid) under the following conditions: column; TOSOH ODS-120T column (φ4.6 mm × 250 mm, Tosoh Corporation), eluent; acetonitrile/0.6 mass% $HClO_4$ water = 1/1 (vol/vol%), flow rate; 1.0 ml/min, sample volume; 300 μL, column temperature; 40°C, detection light; UV 210 nm, preparing a calibration curve between each elution time and the known octanol/water partition coefficient, and calculating from the elution time of the sample liquid in HPLC on the basis of this calibration curve.

Specific examples of the fluorine-containing surfactant include those described in U.S. Patent Application Publication No. 2007/0015864, U.S. Patent Application Publication No. 2007/0015865, U.S. Patent Application Publication No. 2007/0015866, U.S. Patent Application Publication No. 2007/0276103, U.S. Patent Application Publication No. 2007/0117914, U.S. Patent Application Publication No. 2007/0142541, U.S. Patent Application Publication No. 2008/0015319, U.S. Patent. No. 3250808, U.S. Patent. No. 3271341, Japanese Patent Laid-Open No. 2003-119204, International Publication No. WO 2005/042593, International Publication No. WO 2008/060461, International Publication No. WO 2007/046377, Japanese Patent Laid-Open No. 2007-119526, International Publication No. WO 2007/046482, International Publication No. WO 2007/046345, U.S. Patent Application Publication No. 2014/0228531, International Publication No. WO 2013/189824, and International Publication No. WO 2013/189826.

The anionic fluorine-containing surfactant may be a compound represented by the following general formula ($N^0$) :

$$X^{n0}\text{-}Rf^{n0}\text{-}Y^0 \qquad (N^0)$$

wherein $X^{n0}$ is H, Cl, or/and F; $Rf^{n0}$ is a linear, branched, or cyclic alkylene group having 3 to 20 carbon atoms in which some or all of H are replaced with F, wherein the alkylene group may contain one or more ether bonds, and some of H

may be replaced with Cl; and Y° is an anionic group.

The anionic group $Y^0$ may be -COCM, $-SO_2M$, or $-SO_3M$, and may be-COCM or $-SO_3M$.

M is H, a metal atom, $NR^7_4$, imidazolium optionally having a substituent, pyridinium optionally having a substituent, or phosphonium optionally having a substituent, wherein $R^7$ is -H or an organic group.

The metal atom may be an alkali metal (Group 1) or an alkaline earth metal (Group 2), such as Na, K, or Li.

$R^7$ may be -H or a $C_{1-10}$ organic group, may be -H or a $C_{1-4}$ organic group, and may be -H or a $C_{1-4}$ alkyl group.

M may be H, a metal atom, or $NR^7_4$, may be H, an alkali metal (Group 1), an alkaline earth metal (Group 2), or $NR^7_4$, and may be H, Na, K, Li, or $NH_4$.

In $Rf^{n0}$, 50% or more of H may be replaced with fluorine.

Examples of the compound represented by the general formula ($N^0$) include: a compound represented by

the following general formula ($N^1$) :

$$X^{n0}\text{-}(CF_2)_{m1}\text{-}Y^0 \qquad (N^1)$$

wherein $X^{n0}$ is H, Cl, and F, m1 is an integer of 3 to 15, and $Y^0$ is as defined above; a compound represented by the following general formula (N2) :

$$Rf^{n1}\text{-}O\text{-}(CF(CF_3)CF_2O)_{m2}CFX^{n1}\text{-}Y^0 \qquad (N^2)$$

wherein $Rf^{n1}$ is a perfluoroalkyl group having 1 to 5 carbon atoms, m2 is an integer of 0 to 3, $X^{n1}$ is F or $CF_3$, and $Y^0$ is as defined above; a compound represented by the following general formula ($N^3$) :

$$Rf^{n2}(CH_2)_{m3}\text{-}(Rf^{n3})_q\text{-}Y^0 \qquad (N^3)$$

wherein $Rf^{n2}$ is a partially or fully fluorinated alkyl group having 1 to 13 carbon atoms and optionally containing an ether bond and/or a chlorine atom, m3 is an integer of 1 to 3, $Rf^{n3}$ is a linear or branched perfluoroalkylene group having 1 to 3 carbon atoms, q is 0 or 1, and Y° is as defined above; a compound represented by the following general formula (N4) :

$$Rf^{n4}\text{-}O\text{-}(CY^{n1}Y^{n2})_pCF_2\text{-}Y^0 \qquad (N^4)$$

wherein $Rf^{n4}$ is a linear or branched, partially or fully fluorinated alkyl group having 1 to 12 carbon atoms and optionally containing an ether bond, $Y^{n1}$ and $Y^{n2}$ are the same or different and are each H or F, p is 0 or 1, and Y° is as defined above; and a compound represented by the following general formula ($N^5$) :

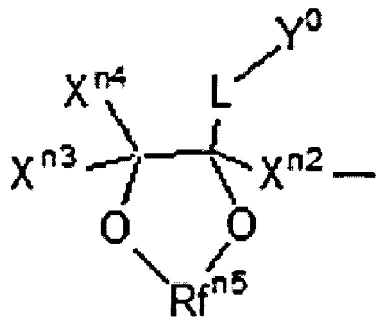

($N^5$)

wherein $X^{n2}$, $X^{n3}$, and $X^{n4}$ may be the same or different and are each H, F, or a linear or branched, partially or fully fluorinated alkyl group having 1 to 6 carbon atoms and optionally containing an ether bond, $Rf^{n5}$ is a linear or branched, partially or fully fluorinated alkylene group having 1 to 3 carbon atoms and optionally containing an ether bond, L is a linking group, and Y° is as defined above, with the proviso that the total number of carbon atoms in $X^{n2}$, $X^{n3}$, $x^{n4}$, and $Rf^{n5}$ is 18 or less.

Specific examples of the compound represented by the general formula ($N^0$) include a perfluorocarboxylic acid (I) represented by the following general formula (I), an ω-H perfluorocarboxylic acid (II) represented by the following general formula (II), a perfluoroethercarboxylic acid (III) represented by the following general formula (III), a perfluoroalkylalkylenecarboxylic acid (IV) represented by the following general formula (IV), a perfluoroalkoxyfluorocarboxylic

acid (V) represented by the following general formula (V), a perfluoroalkylsulfonic acid (VI) represented by the following general formula (VI), an ω-H perfluorosulfonic acid (VII) represented by the following general formula (VII), a perfluoroalkylalkylenesulfonic acid (VIII) represented by the following general formula (VIII), an alkylalkylenecarboxylic acid (IX) represented by the following general formula (IX), a fluorocarboxylic acid (X) represented by the following general formula (X), an alkoxyfluorosulfonic acid (XI) represented by the following general formula (XI), a compound (XII) represented by the following general formula (XII), and a compound (XIII) represented by the following general formula (XIII).

The perfluorocarboxylic acid (I) is represented by the following general formula (I):

$$F(CF_2)_{n1}COOM \qquad (I)$$

wherein n1 is an integer of 3 to 14, and M is H, a metal atom, $NR^7_4$, imidazolium optionally having a substituent, pyridinium optionally having a substituent, or phosphonium optionally having a substituent, wherein $R^7$ is -H or an organic group.

The ω-H perfluorocarboxylic acid (II) is represented by the following general formula (II):

$$H(CF_2)_{n2}COCM \qquad (II)$$

wherein n2 is an integer of 4 to 15, and M is as defined above.

The perfluoroethercarboxylic acid (III) is represented by the following general formula (III):

$$Rf^7\text{-}O\text{-}(CF(CF_3)CF_2O)_{n3}CF(CF_3)COOM \qquad (III)$$

wherein $Rf^1$ is a perfluoroalkyl group having 1 to 5 carbon atoms, n3 is an integer of 0 to 3, and M is as defined above.

The perfluoroalkylalkylenecarboxylic acid (IV) is represented by the following general formula (IV):

$$Rf^2(CH_2)_{n4}Rf^3COOM \qquad (IV)$$

wherein $Rf^2$ is a perfluoroalkyl group having 1 to 5 carbon atoms, $Rf^3$ is a linear or branched perfluoroalkylene group having 1 to 3 carbon atoms, n4 is an integer of 1 to 3, and M is as defined above.

The alkoxyfluorocarboxylic acid (V) is represented by the following general formula (V):

$$Rf^4\text{-}O\text{-}CY^1Y^2CF_2\text{-}COOM \qquad (V)$$

wherein $Rf^4$ is a linear or branched, partially or fully fluorinated alkyl group having 1 to 12 carbon atoms and optionally containing an ether bond and/or a chlorine atom, $Y^1$ and $Y^2$ are the same or different and are each H or F, and M is as defined above.

The perfluoroalkylsulfonic acid (VI) is represented by the following general formula (VI):

$$F(CF_2)_{n5}SO_3M \qquad (VI)$$

wherein n5 is an integer of 3 to 14, and M is as defined above.

The ω-H perfluorosulfonic acid (VII) is represented by the following general formula (VII):

$$H(CF_2)_{n6}SO_3M \qquad (VII)$$

wherein n6 is an integer of 4 to 14, and M is as defined above.

The perfluoroalkylalkylenesulfonic acid (VIII) is represented by the following general formula (VIII):

$$Rf^5(CH_2)_{n7}SO_3M \qquad (VIII)$$

wherein $Rf^5$ is a perfluoroalkyl group having 1 to 13 carbon atoms, n7 is an integer of 1 to 3, and M is as defined above.

The alkylalkylenecarboxylic acid (IX) is represented by the following general formula (IX):

$$Rf^6(CH_2)_{n8}COOM \qquad (IX)$$

wherein $Rf^6$ is a linear or branched, partially or fully fluorinated alkyl group having 1 to 13 carbon atoms and optionally containing an ether bond, n8 is an integer of 1 to 3, and M is as defined above.

The fluorocarboxylic acid (X) is represented by the following general formula (X):

$Rf^7$-O-$Rf^8$-O-$CF_2$-COOM (X)

wherein $Rf^7$ is a linear or branched, partially or fully fluorinated alkyl group having 1 to 6 carbon atoms and optionally containing an ether bond and/or a chlorine atom, $Rf^8$ is a linear or branched, partially or fully fluorinated alkyl group having 1 to 6 carbon atoms, and M is as defined above.

The alkoxyfluorosulfonic acid (XI) is represented by the following general formula (XI):

$Rf^9$-O-$CY^1Y^2CF_2$-$SO_3M$ (XI)

wherein $Rf^9$ is a linear or branched, partially or fully fluorinated alkyl group having 1 to 12 carbon atoms, optionally containing an ether bond and optionally containing chlorine, $Y^1$ and $Y^2$ are the same or different and are each H or F, and M is as defined above.

The compound (XII) is represented by the following general formula (XII):

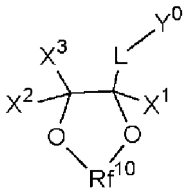

(X I I)

wherein $X^1$, $X^2$, and $X^3$ are the same or different and are each H, F, or a linear or branched, partially or fully fluorinated alkyl group having 1 to 6 carbon atoms and optionally containing an ether bond, $Rf^{10}$ is a perfluoroalkylene group having 1 to 3 carbon atoms, L is a linking group, and Y° is an anionic group.

Y° may be -COCM, -$SO_2M$, or -$SO_3M$, and may be -$SO_3M$ or -COOM, wherein M is as defined above.

Examples of L include a single bond and a partially or fully fluorinated alkylene group having 1 to 10 carbon atoms and optionally containing an ether bond.

The compound (XIII) is represented by the following general formula (XIII):

$Rf^{11}$-O-$(CF_2CF(CF_3)O)_{n9}(CF_2O)_{n10}CF_2COOM$ (XIII)

wherein $Rf^{11}$ is a fluoroalkyl group having 1 to 5 carbon atoms and containing chlorine, n9 is an integer of 0 to 3, n10 is an integer of 0 to 3, and M is as defined above. Examples of the compound (XIII) include $CF_2ClO(CF_2CF(CF_3)O)_{n9}(CF_2O)_{n10}CF_2COONH_4$ (a mixture having an average molecular weight of 750, wherein n9 and n10 are as defined above).

The fluorine-containing surfactant may be one type of fluorine-containing surfactant, or may be a mixture containing two or more types of fluorine-containing surfactants.

Examples of the fluorine-containing surfactant include compounds represented by the following formulas. The fluorine-containing surfactant may be a mixture of two or more of these compounds. In one embodiment of the polymerization, a fluoromonomer is polymerized substantially in the absence of compounds represented by the following formulas:

$F(CF_2)_7COOM$,

$F(CF_2)_5COOM$,

$H(CF_2)_6COOM$,

$H(CF_2)_7COOM$,

$CF_3O(CF_2)_3OCHFCF_2COOM$,

$C_3F_7OCF(CF_3)CF_2OCF(CF_3)COCM$,

$CF_3CF_2CF_2OCF(CF_3)COCM$,

$CF_3CF_2OCF_2CF_2OCF_2COOM$,

$C_2F_5OCF(CF_3)CF_2OCF(CF_3)COCM$,

$CF_3OCF(CF_3)CF_2OCF(CF_3)COCM$,

$CF_2ClCF_2CF_2OCF(CF_3)CF_2OCF_2COOM$,

$CF_2ClCF_2CF_2OCF_2CF(CF_3)OCF_2COCM$,

$CF_2ClCF(CF_3)OCF(CF_3)CF_2OCF_2COOM$,

$CF_2ClCF(CF_3)OCF_2CF(CF_3)OCF_2COOM$,

and

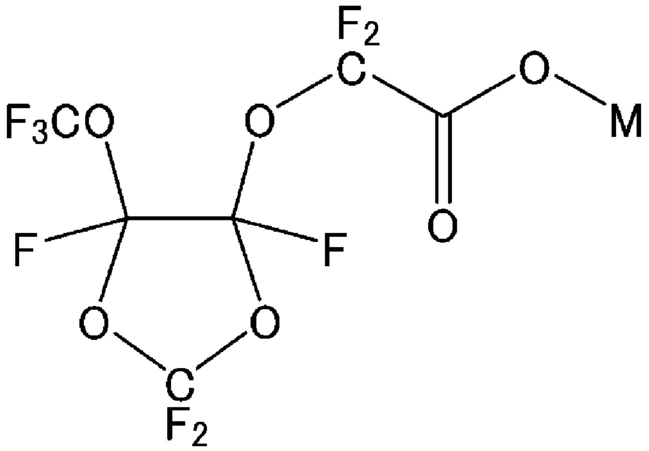

wherein M is H, a metal atom, $NR^7_4$, imidazolium optionally having a substituent, pyridinium optionally having a substituent, or phosphonium optionally having a substituent, wherein $R^7$ is H or an organic group.

In the production method of the present disclosure, the polymerization of the fluorine-containing monomer can be performed by, for example, charging the polymer (1) and the aqueous medium into a pressure-tight polymerization tank equipped with a stirrer, deoxygenating the polymerization tank, then charging the monomer, heating the polymerization tank to a predetermined temperature, and adding a polymerization initiator to initiate the reaction. The pressure decreases as the reaction proceeds, and therefore the monomer is additionally fed in a continuous or intermittent manner to maintain the initial pressure, the feeding is stopped when a predetermined amount of the monomer is fed, the monomer in the reaction container is purged, and the temperature is returned to room temperature to terminate the reaction.

In the production method of the present disclosure, the polymerization may be performed in the presence of a polymerization initiator.

The polymerization initiator may be a radical polymerization initiator. The polymerization initiator is not limited as long as it can generate radicals at the temperature of polymerizing the fluorine-containing monomer, and may be, for example, an oil-soluble polymerization initiator, a water-soluble polymerization initiator, or an azo compound, but a water-soluble polymerization initiator is preferable. The polymerization initiator may be combined with a reducing agent or the like to be used as a redox initiator.

The amount of the polymerization initiator to polymerize the fluorine-containing monomer is suitably determined according to the type of monomer used, the molecular weight of the target fluorine-containing elastomer, and the reaction rate. The amount of the polymerization initiator is suitably determined according to the molecular weight of the target fluorine-containing elastomer and the polymerization reaction rate, and is preferably 0.00001 to 10% by mass and more preferably 0.0001 to 1% by mass based on the total amount of the monomer being 100% by mass.

The polymerization initiator may be an oil-soluble radical polymerization initiator or a water-soluble radical polymerization initiator.

The oil-soluble radical polymerization initiator may be a known oil-soluble peroxide, and representative examples include dialkyl peroxycarbonates such as diisopropyl peroxydicarbonate and di-sec-butyl peroxydicarbonate; peroxy esters such as t-butyl peroxyisobutyrate and t-butyl peroxypivalate; and dialkyl peroxides such as di-t-butyl peroxide, as well as di[perfluoro (or fluorochloro) acyl] peroxides such as di(ω)-hydro-dodecafluorohexanoyl)peroxide, di(ω-hydro-tetradecafluoroheptanoyl)peroxide, di(ω-hydro-hexadecafluorononanoyl)peroxide, di(perfluorobutyryl)peroxide, di(perfluorovaleryl)peroxide, di(perfluorohexanoyl)peroxide, di(perfluoroheptanoyl)peroxide, di(perfluorooctanoyl)peroxide, di(perfluorononanoyl)peroxide, di(ω-chloro-hexafluorobutyryl)peroxide, di(ω-chloro-decafluorohexanoyl)peroxide, di(ω-chloro-tetradecafluorooctanoyl)peroxide, ω-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotoriacontafluorodocosanoyl)peroxide.

Examples of the azo compound include azodicarboxylate, azodicarboxyl diamide, 2,2'-azobisisobutyronitrile, 2,2'-azobis(2,4-dimethylvaleronitrile), 2,2'-azobis(2-methylpropionamidine) dihydrochloride, and 4,4'-azobis(4-cyanovaleric acid).

The water-soluble radical polymerization initiator may be a known water-soluble peroxide, and examples include ammonium salts, potassium salts, and sodium salts of persulfuric acid, perboric acid, perchloric acid, perphosphoric acid, percarbonic acid, and the like, organic peroxides such as disuccinic acid peroxide and diglutaric acid peroxide, t-butyl permaleate, and t-butyl hydroperoxide. A reducing agent such as sulfite may be contained together, and the amount thereof may be 0.1 to 20 times the amount of the peroxide.

The water-soluble peroxide is preferably a salt of persulfuric acid because the amount of radicals to be generated can be easily regulated, and potassium persulfate ($K_2S_2O_8$), ammonium persulfate ($(NH_4)_2S_2O_8$), and sodium persulfate ($Na_2S_2O_8$) are preferable, and ammonium persulfate is most preferable.

When the polymerization is performed using a water-soluble peroxide at a polymerization temperature of 45°C or higher, it is preferable that a reducing agent is not used.

For example, when the polymerization is performed at a low temperature of 60°C or lower, the polymerization initiator used is preferably a redox initiator obtained by combining an oxidizing agent and a reducing agent. That is to say, the polymerization is preferably performed in the presence of a redox initiator.

Examples of the oxidizing agent include persulfates, organic peroxides, potassium permanganate, manganese triacetate, ammonium cerium nitrate, and bromates. Examples of the reducing agent include sulfites, bisulfites, bromates, diimine, oxalic acid, and sulfinic acid metal salts. Examples of the persulfates include ammonium persulfate, potassium persulfate, and sodium persulfate. Examples of the sulfites include sodium sulfite and ammonium sulfite. To increase the decomposition rate of the initiator, preferably a copper salt or an iron salt is also added to the combination of the redox initiator. The copper salt may be copper(II) sulfate, and the iron salt may be iron(II) sulfate. When a copper salt or an iron salt is used, a chelating agent is added particularly preferably. The chelating agent is preferably disodium ethylenediaminetetraacetate dihydrate.

Examples of the redox initiator include potassium permanganate/oxalic acid, ammonium persulfate/bisulfite/iron(II) sulfate, ammonium persulfate/sulfite/iron (II) sulfate, ammonium persulfate/sulfite, ammonium persulfate/iron(II) sulfate, manganese triacetate/oxalic acid, ammonium cerium nitrate/oxalic acid, bromate/sulfite, bromate/bisulfite, and ammonium persulfate/sodium hydroxymethanesulfinate dihydrate, and ammonium persulfate/sodium hydroxymethanesulfinate dihydrate is preferable.

When a redox initiator is used, one of an oxidizing agent and a reducing agent may be charged into a polymerization tank in advance, followed by adding the other continuously or intermittently to initiate the polymerization. For example, when ammonium persulfate/sodium hydroxymethanesulfinate dihydrate is used, preferably ammonium persulfate is charged into a polymerization tank, and then sodium hydroxymethanesulfinate dihydrate is continuously added thereto.

The amount of the persulfate used in the redox initiator is preferably 0.001 to 2.0% by mass, more preferably 0.01 to 1.5% by mass, and particularly preferably 0.05 to 1.0% by mass based on the aqueous medium used in the polymerization.

The amount of the reducing agent used is preferably 1 to 30% by mass, more preferably 3 to 25% by mass, and particularly preferably 5 to 20% by mass based on the aqueous medium used in the polymerization.

The amount of the third component (such as the above copper salt or iron salt) used is preferably 0.001 to 0.5% by mass, more preferably 0.005 to 0.4% by mass, and particularly preferably 0.01 to 0.3% by mass based on the aqueous medium used in the polymerization.

In the production method of the present disclosure, the fluorine-containing monomer may be polymerized also in the presence of a chain transfer agent. The chain transfer agent may be a known chain transfer agent, and, for example, hydrocarbon, ester, ether, alcohol, ketone, a halogen-containing compound, carbonate, and the like are usable. In particular, isopentane, diethyl malonate, and ethyl acetate are preferable from the viewpoint that the reaction rate is less likely to decrease, and diiodine compounds such as $I(CF_2)_4I$, $I(CF_2)_6I$, and $ICH_2I$ are preferable from the viewpoint that they can iodize polymer terminals, and the resulting polymer can be used as a reactive polymer.

The chain transfer agent used is particularly preferably a bromine compound or an iodine compound. The polymerization method using a bromine compound or an iodine compound is, for example, iodine transfer polymerization

or bromine transfer polymerization.

The iodine compound and the bromine compound are water-insoluble and are less likely to be emulsified. Accordingly, their use is conventionally limited in emulsion polymerization, and there is a tendency that a large amount of a surfactant has to be used. According to the production method of the present disclosure, the fluorine-containing elastomer can be obtained by polymerization using an iodine compound or a bromine compound, such as iodine transfer polymerization or bromine transfer polymerization, even in the absence of a surfactant conventionally used.

Iodine transfer polymerization refers to a method involving living radical polymerization by a radical chain reactivation mechanism, which is radically active due to a low carbon-iodine bond dissociation energy and occurs due to the involvement of a chain transfer reaction during the course of a radical polymerization reaction. Known reaction conditions can be suitably used, and, for example, the reaction conditions described in, but are not limited to, "KOBUNSHI RONBUNSHU (Japanese Journal of Polymer Science and Technology), Vol. 49, No. 10, pp. 765-783, October 1992", Japanese Patent Laid-Open No. 53-3495, and the like can be suitably adopted. Similar polymerization can be performed by using a bromine compound in place of an iodine compound, and such polymerization is referred to as bromine transfer polymerization herein.

Among these, iodine transfer polymerization is preferable in terms of polymerization reactivity, crosslinking reactivity, and the like.

Representative examples of the bromine compound or the iodine compound include compounds represented by the general formula:

$$R^8I_xBr_y$$

wherein x and y are each an integer of 0 to 2 and satisfy $1 \leq x + y \leq 2$, and $R^8$ is a saturated or unsaturated fluorohydrocarbon group or chlorofluorohydrocarbon group having 1 to 16 carbon atoms, or a hydrocarbon group having 1 to 3 carbon atoms, which may contain an oxygen atom. Iodine or bromine is introduced into the polymer by using a bromine compound or an iodine compound, and functions as a crosslinking point.

Examples of the bromine compound and the iodine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, $CF_2Br_2$, $BrCF_2CF_2Br$, $CF_3CFBrCF_2Br$, $CFClBr_2$, $BrCF_2CFClBr$, $CFBrClCFClBr$, $BrCF_2CF_2CF_2Br$, $BrCF_2CFBrOCF_3$, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1,2-bromo-4-iodoperfluorobutene-1, and a monoiodomonobromo-substituted product, a diiodomonobromo-substituted product, and a (2-iodoethyl) and (2-bromoethyl)-substituted product of benzene, and these compounds may be used alone or in combination of two or more of them. Among these, in terms of polymerization reactivity, crosslinking reactivity, availability, and the like, compounds that do not contain bromine and solely contain iodine are preferable, and 1,4-diiodoperfluorobutane, 1,6-diiodoperfluorohexane, or 2-iodoperfluoropropane is preferably used.

The amount of the chain transfer agent is preferably $0.2 \times 10^{-3}$ to 2 mol% and more preferably $1.0 \times 10^{-3}$ to 1 mol% based on the total amount of the monomer used in the polymerization.

The aqueous medium means a liquid containing water. The aqueous medium is not limited as long as it contains water, and may be one containing water and, for example, a fluorine-free organic solvent such as alcohol, ether, or ketone and/or a fluorine-containing organic solvent having a boiling point of 40°C or lower.

In the polymerization of the fluorine-containing monomer, a phosphoric acid salt, sodium hydroxide, potassium hydroxide, ammonia, or the like may be used as a pH adjuster.

The aqueous medium is preferably acidic. By polymerizing the fluorine-containing monomer in the presence of the polymer (1) using an acidic aqueous medium, a greater number of fluorine-containing polymer particles can be produced at a higher polymerization rate while adhesion of the fluorine-containing polymer to a polymerization tank is further suppressed. The pH of the aqueous medium is preferably 7 or lower and more preferably 6 or lower, and is preferably 3 or higher.

In the production method of the present disclosure, the fluorine-containing monomer may be polymerized in the presence or absence of fluorine-containing monomer polymerization seed particles.

The "fluorine-containing monomer polymerization seed particles" are obtained by polymerizing the fluorine-containing monomer in the aqueous medium, and are caused to be present at the time of the second polymerization in which the types of components such as a monomer and an additive (e.g., a polymerization initiator) constituting the polymerization reaction system, the proportions of the components present, the reaction conditions, and the like are different. The fluorine-containing monomer polymerization seed particles act as so-called seed particles at the time of polymerizing the fluorine-containing monomer, and constitute the polymerization of the fluorine-containing monomer in the presence of the seed particles, i.e., seed polymerization. The production method of the present disclosure may be a method in which such seed polymerization is not performed when the fluorine-containing monomer is polymerized.

In the production method of the present disclosure, the polymerization temperature for polymerizing the fluorine-containing monomer is preferably 10 to 120°C, and more preferably 20 to 100°C. From the viewpoint of the stability of the aqueous dispersion and reducing the adhesion rate, the polymerization temperature is preferably 15 to 60°C, more preferably 18 to 55°C, and even more preferably 20 to 50°C. Further, from the viewpoint that the polymerization rate is increased and, moreover, a fluorine-containing elastomer that provides a formed article having excellent physical properties can be obtained, the polymerization temperature is preferably 60 to 120°C, more preferably 60 to 100°C, and even more preferably 70 to 90°C.

In the production method of the present disclosure, the polymerization pressure for polymerizing the fluorine-containing monomer is preferably 0.5 to 10 MPaG, and more preferably 1 to 7 MPaG.

In the production method of the present disclosure, since the fluorine-containing monomer is polymerized in the presence of the polymer (1) and the aqueous medium, adhesion of a polymer (a fluorine-containing elastomer) to a polymerization tank can be suppressed. The polymer adhesion rate to a polymerization tank is preferably 8% by mass or less, more preferably 4% by mass or less, even more preferably 3% by mass or less, and most preferably 2% by mass or less.

The polymer adhesion rate is a ratio (an adhesion rate to a polymerization tank) of the mass of polymer deposits adhering to the polymerization tank after completion of the polymerization to the total amount of the polymer (fluorine-containing elastomer) after completion of the polymerization. The polymer deposits include the polymer adhering to the inside of the polymerization tank such as the inner wall of the polymerization tank and a stirring blade after an aqueous dispersion is removed from the polymerization tank after completion of the polymerization, and the polymer that is freed from the aqueous dispersion due to aggregation and floats or precipitates without being dispersed in the aqueous dispersion. The mass of the polymer deposits is the mass after water contained in the polymer deposits is removed by drying at 120°C.

Polymer adhesion rate (% by mass) = Mass of polymer deposits / Mass of resulting polymer (including deposits) × 100

Mass of resulting polymer = Mass of aqueous dispersion × Solid concentration (% by mass) of aqueous dispersion / 100 + Mass of polymer deposits

In the production method of the present disclosure, an aqueous dispersion of a fluorine-containing elastomer is obtained by polymerizing a fluorine-containing monomer. The fluorine-containing monomer preferably contains no hydrophilic group.

Examples of the fluorine-containing monomer include fluorine-containing monomers such as vinylidene fluoride (VdF), tetrafluoroethylene (TFE), hexafluoropropylene (HFP), perfluoro(alkyl vinyl ether) (PAVE), chlorotrifluoroethylene (CTFE), trifluoroethylene, trifluoropropylene, tetrafluoropropylene, pentafluoropropylene, trifluorobutene, tetrafluoroisobutene, hexafluoroisobutene, vinyl fluoride, iodine-containing vinyl fluoride ether, and a fluorine-containing monomer (2) represented by general formula (2):

$$CHX^1=CX^2Rf \qquad (2)$$

wherein one of $X^1$ and $X^2$ is H, the other is F, and Rf is a linear or branched fluoroalkyl group having 1 to 12 carbon atoms.

PAVE is more preferably perfluoro(methyl vinyl ether) (PMVE), perfluoro(ethyl vinyl ether) (PEVE), or perfluoro(propyl vinyl ether) (PPVE), and particularly preferably PMVE.

PAVE may be perfluorovinyl ether represented by the formula: $CF_2=CFOCF_2ORf^c$ wherein $Rf^c$ is a linear or branched perfluoroalkyl group having 1 to 6 carbon atoms, a cyclic perfluoroalkyl group having 5 to 6 carbon atoms, or a linear or branched perfluorooxyalkyl group having 1 to 3 oxygen atoms and 2 to 6 carbon atoms. PAVE is preferably, for example, $CF_2=CFOCF_2OCF_3$, $CF_2=CFOCF_2OCF_2CF_3$, or $CF_2=CFOCF_2OCF_2CF_2OCF_3$.

The fluorine-containing monomer (2) is preferably a monomer in which Rf is a linear fluoroalkyl group, and is more preferably a monomer in which Rf is a linear perfluoroalkyl group. Rf preferably has 1 to 6 carbon atoms.

Examples of the fluorine-containing monomer (2) include $CH_2=CFCF_3$, $CH_2=CFCF_2CF_3$, $CH_2=CFCF_2CF_2CF_3$, $CH_2=CFCF_2CF_2CF_2CF_3$, $CHF=CHCF_3$ (1,3,3,3-tetrafluoropropene), $CHF=CHCF_3$ (E form), and $CHF=CHCF_3$ (Z form), and, in particular, 2,3,3,3-tetrafluoropropylene represented by $CH_2=CFCF_3$ is preferable.

In the production method of the present disclosure, at least vinylidene fluoride or tetrafluoroethylene is preferably polymerized as the fluorine-containing monomer, and vinylidene fluoride is more preferably polymerized, because a greater number of fluorine-containing elastomer particles can be produced at a higher polymerization rate while adhesion of the fluorine-containing elastomer to a polymerization tank is further suppressed.

In the production method of the present disclosure, a fluorine-free monomer may be polymerized together with the fluorine-containing monomer. Examples of the fluorine-free monomer include $\alpha$-olefin monomers having 2 to 10 carbon atoms, such as ethylene, propylene, butene, and pentene, and alkyl vinyl ethers having an alkyl group having 1 to 20 carbon atoms, such as methyl vinyl ether, ethyl vinyl ether, propyl vinyl ether, cyclohexyl vinyl ether, hydroxybutyl vinyl ether, and butyl vinyl ether, and one or a combination of two or more of these monomers and compounds can be used.

The production method of the present disclosure is capable of producing an aqueous dispersion containing a fluorine-containing elastomer. The fluorine-containing elastomer is preferably a partially fluorinated elastomer because polymerization of the fluorine-containing monomer proceeds more smoothly, and a greater number of fluorine-containing elastomer particles can be produced at a higher polymerization rate while adhesion of the fluorine-containing elastomer to a polymerization tank is further suppressed. The partially fluorinated elastomer is a fluoropolymer that contains a fluorine-containing monomer unit, in which the content of a perfluoromonomer unit is less than 90 mol% based on all monomer units, and that has a glass transition temperature of 20°C or lower and the size of a melting peak ($\Delta$H) of 4.5 J/g or less.

The fluorine-containing elastomer preferably contains a methylene group ($-CH_2-$) in the main chain. The fluorine-containing elastomer (partially fluorinated elastomer) containing $-CH_2-$ in the main chain is not limited as long as it contains a chemical structure represented by $-CH_2-$, examples thereof include fluorine-containing elastomers containing a structure such as $-CH_2-CF_2-$, $-CH_2-CH(CH_3)-$, $-CH_2-CH_2-$, or $-CH_2CF(CF_3)-$, and these can be introduced into the main chain of a fluorine-containing elastomer by polymerizing, for example, vinylidene fluoride, propylene, ethylene, and 2,3,3,3-tetrafluoropropylene. The content of tetrafluoroethylene unit in the fluorine-containing elastomer (the content of a tetrafluoroethylene-based monomer unit based on all monomer units of the fluorine-containing elastomer) may be less than 40 mol%.

The fluorine-containing elastomer preferably contains a monomer unit based on at least one monomer selected from the group consisting of, for example, tetrafluoroethylene (TFE), vinylidene fluoride (VdF), and a perfluoroethylenically unsaturated compound (such as hexafluoropropylene (HFP) or perfluoro(alkyl vinyl ether) (PAVE)) represented by the general formula: $CF_2=CF-Rf^a$ wherein $Rf^a$ is $-CF_3$ or $-ORf^b$ ($Rf^b$ is a perfluoroalkyl group having 1 to 5 carbon atoms) . The fluorine-containing elastomer preferably contains VdF unit or TFE unit in particular.

More specific examples of the fluorine-containing elastomer include a VdF-based fluorine-containing elastomer, a TFE/propylene (Pr)-based fluorine-containing elastomer, a TFE/Pr/VdF-based fluorine-containing elastomer, an ethylene (Et)/HFP-based fluorine-containing elastomer, an Et/HFP/VdF-based fluorine-containing elastomer, an Et/HFP/TFE-based fluorine-containing elastomer, and an Et/TFE/PAVE-based fluorine-containing elastomer. Among these, a VdF-based fluorine-containing elastomer, a TFE/Pr-based fluorine-containing elastomer, a TFE/Pr/VdF-based fluorine-containing elastomer, or an Et/TFE/PAVE-based fluorine-containing elastomer is more suitable in terms of good heat aging resistance and oil resistance.

The VdF-based fluorine-containing elastomer is a fluorine-containing elastomer having VdF unit. The VdF-based fluorine-containing elastomer preferably has VdF unit that accounts for 20 mol% or more and 90 mol% or less, more preferably 40 mol% or more and 85 mol% or less, even more preferably 45 mol% or more and 80 mol% or less, and particularly preferably 50 mol% or more and 80 mol% or less of the total number of moles of VdF unit and a monomer unit based on a further monomer.

The further monomer in the VdF-based fluorine-containing elastomer is not limited as long as it is a monomer copolymerizable with VdF, and, for example, the above-described fluorine-containing monomer is usable.

The VdF-based fluorine-containing elastomer is preferably at least one copolymer selected from the group consisting of a VdF/HFP copolymer, a VdF/TFE/HFP copolymer, a VdF/CTFE copolymer, a VdF/CTFE/TFE copolymer, a VdF/PAVE copolymer, a VdF/TFE/PAVE copolymer, a VdF/HFP/PAVE copolymer, a VdF/HFP/TFE/PAVE copolymer, a VdF/TFE/Pr copolymer, a VdF/Et/HFP copolymer, and a copolymer of VdF/fluorine-containing monomer (2). The VdF-based fluorine-containing elastomer more preferably has, as the further monomer other than VdF, at least one monomer selected from the group consisting of TFE, HFP, and PAVE.

Among these VdF-based fluorine-containing elastomers, at least one copolymer selected from the group consisting of a VdF/HFP copolymer, a VdF/TFE/HFP copolymer, a copolymer of VdF/fluorine-containing monomer (2), a VdF/PAVE copolymer, a VdF/TFE/PAVE copolymer, a VdF/HFP/PAVE copolymer, and a VdF/HFP/TFE/PAVE copolymer is preferable, and at least one copolymer selected from the group consisting of a VdF/HFP copolymer, a VdF/HFP/TFE copolymer, a copolymer of VdF/fluorine-containing monomer (2), and a VdF/PAVE copolymer is more preferable.

The VdF/PAVE copolymer preferably has a VdF/PAVE composition of (65 to 90) / (35 to 10) (mol%).

In one preferable form, the VdF/PAVE composition is (50 to 78)/(50 to 22) (mol%).

The VdF/TFE/PAVE copolymer preferably has a VdF/TFE/PAVE composition of (40 to 80)/(3 to 40)/(15 to 35) (mol%).

The VdF/HFP/PAVE copolymer preferably has a VdF/HFP/PAVE composition of (65 to 90)/(3 to 25)/(3 to 25) (mol%).

The VdF/HFP/TFE/PAVE copolymer preferably has a VdF/HFP/TFE/PAVE composition of (40 to 90)/(0 to 25)/(0 to 40)/(3 to 35) (mol%), and more preferably (40 to 80)/(3 to 25)/(3 to 40)/(3 to 25) (mol%).

The copolymer of VdF/fluorine-containing monomer (2) is preferably one in which the mol% ratio of a Vdf/fluorine-containing monomer (2) unit is (85 to 20)/(15 to 80) and a further monomer unit other than VdF and the fluorine-containing monomer (2) accounts for 0 to 50 mol% of all monomer units, and the mol% ratio of the VdF/fluorine-containing monomer (2) unit is more preferably (80 to 20)/(20 to 80). In one preferable form, the composition of the VdF/fluorine-containing monomer (2) unit is (78 to 50)/(22 to 50) (mol%).

Also, the copolymer of VdF/fluorine-containing monomer (2) is preferably one in which the mol% ratio of a VdF/fluorine-containing monomer (2) unit is (85 to 50)/(15 to 50), and a further monomer unit other than VdF and the fluorine-containing monomer (2) accounts for 1 to 50 mol% of all monomer units. Further monomers other than VdF and the fluorine-containing monomer (2) are preferably monomers exemplified as further monomers with respect to the VdF-based fluorine-containing elastomer, such as TFE, HFP, PMVE, perfluoroethyl vinyl ether (PEVE), PPVE, CTFE, trifluoroethylene, hexafluoroisobutene, vinyl fluoride, Et, Pr, alkyl vinyl ether, and a monomer that provides a crosslinkable group, and, in particular, PMVE, CTFE, HFP, and TFE are more preferable.

The TFE/Pr-based fluorine-containing elastomer refers to a fluorine-containing copolymer containing 45 to 70 mol% TFE and 55 to 30 mol% Pr. In addition to these two components, a specific third component may be contained.

The specific third component contained may be, for example, a fluorine-containing monomer such as fluorine-containing olefin other than TFE (such as VdF, HFP, CTFE, or perfluoro(butylethylene)), fluorine-containing vinyl ether (perfluoro(propyl vinyl ether), or perfluoro(methyl vinyl ether)); or a hydrocarbon-based monomer such as $\alpha$-olefin (such as ethylene or 1-butene), vinyl ether (such as ethyl vinyl ether, butyl vinyl ether, or hydroxybutyl vinyl ether), or vinyl ester (such as vinyl acetate, vinyl benzoate, vinyl crotonate, or vinyl methacrylate). As for the specific third component, one or a combination of two or more may be used.

The TFE/Pr-based fluorine-containing elastomer preferably contains VdF, and among TFE/Pr-based fluorine-containing elastomers, an elastomer containing TFE, Pr, and VdF is referred to as a TFE/Pr/VdF-based fluorine-containing elastomer.

The TFE/Pr/VdF-based fluorine-containing elastomer may further contain the above specific third component other than VdF. As for the specific third component, one or a combination of two or more may be used. The total content of the third component in the TFE/Pr-based fluorine-containing elastomer is preferably 35 mol% or less, more preferably 33 mol% or less, and even more preferably 31 mol% or less.

The Et/HFP copolymer preferably has an Et/HFP composition of (35 to 80)/(65 to 20) (mol%), and more preferably (40 to 75)/(60 to 25) (mol%).

The Et/HFP/TFE copolymer preferably has an Et/HFP/TFE composition of (35 to 75)/(25 to 50)/(0 to 15) (mol%), and more preferably (45 to 75)/(25 to 45)/(0 to 10) (mol%).

The Et/TFE/PAVE copolymer preferably has an Et/TFE/PAVE composition of (10 to 40)/(32 to 60)/(20 to 40) (mol%), and more preferably (20 to 40)/(40 to 50)/(20 to 30) (mol%). PAVE is preferably PMVE.

The fluorine-containing elastomer is preferably a fluorine-containing elastomer containing VdF unit and more preferably a VdF/HFP copolymer or a VdF/HFP/TFE copolymer, and a fluorine-containing elastomer having a VdF/HFP/TFE composition of (32 to 85)/(10 to 34)/(0 to 40) (mol%) is particularly preferable. The VdF/HFP/TFE composition is more preferably (32 to 85)/(15 to 34)/(0 to 34) (mol%), and even more preferably (47 to 81) / (17 to 32) / (0 to 26) (mol%) .

For example, the VdF/HFP copolymer preferably has a VdF/HFP composition of (45 to 85)/(15 to 55) (mol%), more preferably (50 to 83)/(17 to 50) (mol%), even more preferably (55 to 81)/(19 to 45) (mol%), and particularly preferably (60 to 80)/(20 to 40) (mol%).

The above-described configuration is the configuration of the main monomers of the fluorine-containing elastomer, and a monomer that provides a crosslinkable group may be copolymerized in addition to the main monomers. The monomer that provides a crosslinkable group is a monomer capable of introducing into the fluorine-containing elastomer a crosslinkable group suitable according to the production method and the crosslinking system, and examples include known polymerizable compounds containing a crosslinkable group such as an iodine atom, a bromine atom, a carbon-carbon double bond, a cyano group, a carboxyl group, a hydroxyl group, an amino group, or an ester group.

Preferable examples of the monomer that provides a crosslinkable group include compounds represented by general formula (3):

$$CY^1_2=CY^2R_f^2X^1 \qquad (3)$$

wherein $Y^1$ and $Y^2$ are each independently a fluorine atom, a hydrogen atom, or $-CH_3$; $R_f^2$ is a linear or branched fluorine-containing alkylene group that may have one or more ether-bonding oxygen atoms, that may have an aromatic ring, and in which some or all hydrogen atoms are replaced with fluorine atoms; and $X^1$ is an iodine atom or a bromine atom.

Specific examples of the monomer that provides a crosslinkable group include iodine- or bromine-containing monomers represented by general formula (4):

$$CY^1_2=CY^2R_f^3CHR^1-X^1 \quad (4)$$

wherein, $Y^1$, $Y^2$, and $X^1$ are as described above; $R_f^3$ is a linear or branched fluorine-containing alkylene group that may have one or more ether-bonding oxygen atoms and in which some or all hydrogen atoms are replaced with fluorine atoms, that is to say, a linear or branched fluorine-containing alkylene group in which some or all hydrogen atoms are replaced with fluorine atoms, a linear or branched fluorine-containing oxyalkylene group in which some or all hydrogen atoms are replaced with fluorine atoms, or a linear or branched fluorine-containing polyoxyalkylene group in which some or all hydrogen atoms are replaced with fluorine atoms; and $R^1$ is a hydrogen atom or a methyl group, and

iodine- or bromine-containing monomers represented by general formulas (5) to (22) :

$$CY^4_2=CY^4(CF_2)_n-X^1 \quad (5)$$

wherein $Y^4$s are the same or different and are each a hydrogen atom or a fluorine atom, and n is an integer of 1 to 8,

$$CF_2=CFCF_2R_f^4-X^1 \quad (6)$$

wherein $R^4$ is $-(OCF_2)_n-$ or $-(OCF(CF_3))_n-$, and n is an integer of 0 to 5,

$$CF_2=CFCF_2(OCF(CF_3)CF_2)_m(OCH_2CF_2CF_2)_nOCH_2CF_2-X^1 \quad (7)$$

wherein m is an integer of 0 to 5, and n is an integer of 0 to 5,

$$CF_2=CFCF_2(OCH_2CF_2CF_2)_m(OCF(CF_3)CF_2)_nOCF(CF_3)-X^1 \quad (8)$$

wherein m is an integer of 0 to 5, and n is an integer of 0 to 5,

$$CF_2=CF(OCF_2CF(CF_3))_mO(CF_2)_n-X^1 \quad (9)$$

wherein m is an integer of 0 to 5, and n is an integer of 1 to 8,

$$CF_2=CF(OCF_2CF(CF_3))_m-X^1 \quad (10)$$

wherein m is an integer of 1 to 5,

$$CF_2=CFOCF_2(CF(CF_3)OCF_2)_nCF(-X^1)CF_3 \quad (11)$$

wherein n is an integer of 1 to 4,

$$CF_2=CFO(CF_2)_nOCF(CF_3)-X^1 \quad (12)$$

wherein n is an integer of 2 to 5,

$$CF_2=CFO(CF_2)_n-(C_6H_4)-X^1 \quad (13)$$

wherein n is an integer of 1 to 6,

$$CF_2=CF(OCF_2CF(CF_3))_nOCF_2CF(CF_3)-X^1 \quad (14)$$

wherein n is an integer of 1 to 2,

$CH_2=CFCF_2O(CF(CF_3)CF_2O)_nCF(CF_3)-X^1$ (15)

wherein n is an integer of 0 to 5,

$CF_2=CFO(CF_2CF(CF_3)O)_m(CF_2)_n-X^1$ (16)

wherein m is an integer of 0 to 5, and n is an integer of 1 to 3,

$CH_2=CFCF_2OCF(CF_3)OCF(CF_3)-X^1$ (17)

$CH_2=CFCF_2OCH_2CF_2-X^1$ (18)

$CF_2=CFO(CF_2CF(CF_3)O)_mCF_2CF(CF_3)-X^1$ (19)

wherein m is an integer of 0 or more,

$CF_2=CFOCF(CF_3)CF_2O(CF_2)_n-X^1$ (20)

wherein n is an integer of 1 or more,

$CF_2=CFOCF_2OCF_2CF(CF_3)OCF_2-X^1$ (21),

and

$CH_2=CH-(CF_2)_nX^1$ (22)

wherein n is an integer of 2 to 8,
(in general formulas (5) to (22), $X^1$ is as described above), and these can be used alone or in any combination of two or more of them.

The iodine- or bromine-containing monomer represented by general formula (4) is preferably iodine-containing fluorinated vinyl ether represented by general formula (23):

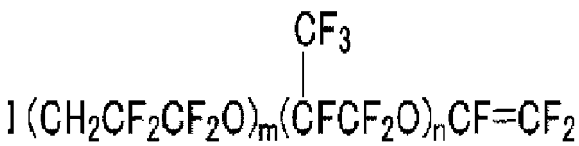 (23)

wherein m is an integer of 1 to 5, and n is an integer of 0 to 3, more specific examples include

$ICH_2CF_2CF_2OCF=CF_2$, $I(CH_2CF_2CF_2O)_2CF=CF_2$,

$I(CH_2CF_2CF_2O)_3CF=CF_2$,

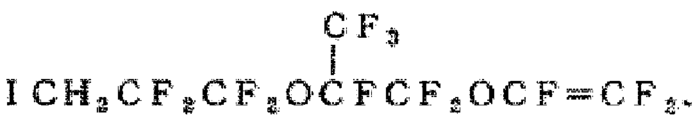

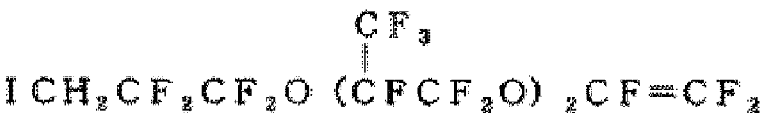

and among these, $ICH_2CF_2CF_2OCF=CF_2$ is preferable.
More specifically, the iodine- or bromine-containing monomer represented by general formula (5) is preferably

$ICF_2CF_2CF=CH_2$ or $I(CF_2CF_2)_2CF=CH_2$.

More specifically, the iodine- or bromine-containing monomer represented by general formula (9) is preferably $I(CF_2CF_2)_2OCF=CF_2$.

More specifically, the iodine- or bromine-containing monomer represented by general formula (22) is preferably $CH_2=CHCF_2CF_2I$ or $I(CF_2CF_2)_2CH=CH_2$.

The monomer that provides a crosslinkable group is preferably a bisolefin compound represented by the formula: $R^2R^3C=CR^4-Z-CR^5=CR^6R^7$ wherein $R^2$, $R^3$, $R^4$, $R^5$, $R^6$, and $R^7$ are the same or different and are each H or an alkyl group having 1 to 5 carbon atoms; and Z is a linear or branched alkylene or cycloalkylene group having 1 to 18 carbon atoms that may contain an oxygen atom and that is preferably at least partially fluorinated, or a (per)fluoropolyoxyalkylene group. Herein, the "(per)fluoropolyoxyalkylene group" means "a fluoropolyoxyalkylene group or a perfluoropolyoxyalkylene group".

Z is preferably a (per)fluoroalkylene group having 4 to 12 carbon atoms, and $R^2$, $R^3$, $R^4$, $R^5$, $R^6$, and $R^7$ are preferably hydrogen atoms.

Z when being a (per)fluoropolyoxyalkylene group is preferably a (per)fluoropolyoxyalkylene group represented by the formula:

$$-(Q)_p-CF_2O-(CF_2CF_2O)_m-(CF_2O)_n-CF_2-(Q)_p-$$

wherein Q is an alkylene group having 1 to 10 carbon atoms or an oxyalkylene group having 2 to 10 carbon atoms, p is 0 or 1, and m and n are integers such that the m/n ratio is 0.2 to 5 and that the molecular weight of the (per)fluoropolyoxyalkylene group is in a range of 500 to 10,000 and preferably 1,000 to 4,000. In this formula, Q is preferably selected from $-CH_2OCH_2-$ and $-CH_2O(CH_2CH_2O)_sCH_2-$ (s = 1 to 3) .

Preferable bisolefin is

$CH_2=CH-(CF_2)_2-CH=CH_2$,

$CH_2=CH-(CF_2)_4-CH=CH_2$,

$CH_2=CH-(CF_2)_6-CH=CH_2$,

formula: $CH_2=CH-Z^1-CH=CH_2$

wherein $Z^1$ is $-CH_2OCH_2-CF_2O-(CF_2CF_2O)_m-(CF_2O)_n-CF_2-CH_2OCH_2-$ (m/n is 0. 5) and the molecular weight is preferably 2,000,
or the like.

In particular, 3,3,4,4,5,5,6,6,7,7,8,8-dodecafluoro-1,9-decadiene represented by $CH_2=CH-(CF_2)_6-CH=CH_2$ is preferable.

The number average molecular weight Mn of the fluorine-containing elastomer is preferably 1,000 to 1,000,000, more preferably 10,000 to 500,000, and particularly preferably 20,000 to 300,000.

The fluorine content of the fluorine-containing elastomer is preferably 50% by mass or more, more preferably 55% by mass or more, and even more preferably 60% by mass or more. The upper limit of the fluorine content is preferably 75% by mass or less, and more preferably 73% by mass or less. The fluorine content is calculated on the basis of a measured value obtained by $^{19}F$-NMR, $^1H$-NMR, elemental analysis, or the like.

The fluorine-containing elastomer preferably has a Mooney viscosity at 100°C (ML1 + 10 (100°C)) of 130 or less. The Mooney viscosity is more preferably 110 or less, and even more preferably 90 or less. The Mooney viscosity is more preferably 10 or more, and even more preferably 20 or more. Here, the Mooney viscosity is a value measured in accordance with JIS K 6300-1.2013.

The fluorine-containing elastomer preferably has a glass transition temperature of -50 to 0°C. The glass transition temperature is more preferably -2°C or lower, and even more preferably -3°C or lower. The glass transition temperature is more preferably -45°C or higher, and even more preferably -40°C or higher. The glass transition temperature may be - 10°C or higher, and may be -9°C or higher. Here, the glass transition temperature can be determined by heating 10 mg of a sample at 20°C/min to obtain a DSC curve using a differential scanning calorimeter (e.g., X-DSC 7000 manufactured by Hitachi High-Tech Science Corporation) and calculating a glass transition temperature from a DSC differential curve in accordance with JIS K 6240:2011.

The fluorine-containing elastomer preferably has an iodine content of 0.05 to 1.0% by mass. The iodine content is more preferably 0.08% by mass or more, and even more preferably 0.10% by mass or more, and is more preferably

0.80% by mass or less, and even more preferably 0.60% by mass or less.

The iodine content can be determined by elemental analysis. Specifically, the iodine content can be measured by mixing 5 mg of $Na_2SO_3$ with 12 mg of the fluorine-containing elastomer, combusting the mixture in oxygen in a quartz flask using an absorbent obtained by dissolving 30 mg of a 1:1 (mass ratio) mixture of $Na_2CO_3$ and $K_2CO_3$ in 20 ml of pure water, leaving the combusted mixture to stand for 30 minutes, and then measuring the iodine content using a Shimadzu 20A ion chromatograph. A calibration curve can be prepared using a KI standard solution containing 0.5 ppm by mass and a KI standard solution containing 1.0 ppm by mass of iodine ions.

The fluorine-containing elastomer preferably contains a $-CH_2I$ structure. Whether the $-CH_2I$ structure is contained can be verified by a $^1H$-NMR spectrum. The fluorine-containing elastomer containing a $-CH_2I$ structure can be obtained by iodine transfer polymerization.

In the fluorine-containing elastomer, the amount of the $-CH_2I$ structure is preferably 0.05 to 1.50 mol% based on 100 mol% of the $-CH_2-$ structure. The amount of the $-CH_2I$ structure is more preferably 0.08 mol% or more and even more preferably 0.12 mol% or more, and is more preferably 1.20 mol% or less, even more preferably 1.00 mol% or less, and particularly preferably 0.80 mol% or less. The amount of the $-CH_2I$ structure can be determined by a $^1H$-NMR spectrum.

The fluorine-containing elastomer more preferably contains a - $CF_2CH_2I$ structure. The fluorine-containing elastomer containing the - $CF_2CH_2I$ structure can be obtained by producing a VdF-based fluorine-containing elastomer by iodine transfer polymerization.

In the fluorine-containing elastomer, the amount of the $-CF_2CH_2I$ structure is preferably 0.05 to 1.50 mol% based on 100 mol% of the $-CH_2-$ structure. The amount of the $-CF_2CH_2I$ structure is more preferably 0.08 mol% or more and even more preferably 0.12 mol% or more, and is more preferably 1.20 mol% or less, even more preferably 1.00 mol% or less, and particularly preferably 0.80 mol% or less. The amount of the $-CF_2CH_2I$ structure is calculated by A/B*100 from integrated value A of all peak intensities observed in a chemical shift region of 3.75 to 4.05 ppm derived from $-CH_2I$ and integrated value B of all peak intensities observed in chemical shift regions of 2.3 to 2.7 ppm and 2.9 to 3.75 ppm derived from $-CH_2-$ in a $^1H$-NMR spectrum.

A suitable fluorine-containing monomer for use in the production method of the present disclosure may be the fluorine-containing monomer described with respect to the fluorine-containing elastomer.

By the production method of the present disclosure, an aqueous dispersion of a fluorine-containing elastomer is obtained. The resulting aqueous dispersion of a fluorine-containing elastomer preferably has a solid concentration (a fluorine-containing elastomer content) of 10 to 50% by mass, more preferably 15 to 40% by mass, and even more preferably 20 to 30% by mass, when the polymerization is complete.

The solid concentration (the fluorine-containing elastomer content) of the aqueous dispersion of a fluorine-containing elastomer can be determined by drying 1 g of the aqueous dispersion at 150°C for 180 minutes, measuring the mass of the heating residue, and calculating the proportion of the mass of the heating residue to the mass of the aqueous dispersion.

The aqueous dispersion of a fluorine-containing elastomer may contain fluorine-containing elastomer particles. The average particle size of fluorine-containing elastomer particles is preferably 10 to 800 nm, more preferably 50 to 500 nm, and even more preferably 70 to 300 nm. The average particle size of fluorine-containing elastomer particles is a cumulant average diameter and can be measured by dynamic light scattering.

The number of fluorine-containing elastomer particles contained in the aqueous dispersion of a fluorine-containing elastomer is preferably $1.0 \times 10^{12}$ particles/cc or more, more preferably $5.0 \times 10^{12}$ particles/cc or more, and even more preferably $1.0 \times 10^{13}$ particles/cc or more. The number of particles (the number of polymer particles) can be calculated in accordance with the following expression:

$$\text{Number of polymer particles} = \left\{\frac{\text{Solid concentration of aqueous dispersion (mass\%)}}{100 - \textit{Solid concentration of aqueous dispersion (mass\%)}}\right\} \Big/ \left\{\frac{4}{3} \times 3.14 \times \left(\frac{\text{Average particle size (nm)}}{2} \times 10^{-9}\right)^3 \times \text{Specific gravity} \times 10^6\right\}$$

The number of fluorine-containing elastomer particles obtained by the expression is the number of particles per 1 cc of water. The specific gravity is the specific gravity of the fluorine-containing elastomer. The specific gravity of the fluorine-containing elastomer can be determined in accordance with JIS Z 8807:2012.

A treatment such as coagulation or heating may be performed on the aqueous dispersion of a fluorine-containing elastomer.

The coagulation can be performed by adding an alkaline earth or earth metal salt to the aqueous dispersion.

Examples of the alkaline earth or earth metal salt include a sulfuric acid salt, a nitric acid salt, a hydrochloric acid salt, and an acetic acid salt of calcium, magnesium, and aluminum.

The coagulated fluorine-containing elastomer may be washed with water to remove a small amount of impurities such as a buffer and a salt present in the fluorine-containing elastomer, and then the washed fluorine-containing elastomer may be dried. The drying temperature is preferably 40 to 200°C, more preferably 60 to 180°C, and even more preferably 80 to 150°C.

The form of the fluorine-containing elastomer obtained after coagulation is not limited, and may be gum, crumb, powder, pellet, or the like, and is preferably gum or crumb. Gum is a small particulate mass of the fluorine-containing elastomer, and crumb is an amorphous mass of the fluorine-containing elastomer resulting from fusion of particles that cannot maintain the form of small particles as gum at room temperature. Gum or crumb is suitably obtained by coagulation, drying, or the like by a conventionally known method from the aqueous dispersion obtained by the production method of the present disclosure.

The polymer (1), decomposition products and by-products of the polymer (1) by-produced from the polymer (1), residual monomers, and the like may be collected from discharge water generated in the above coagulation or washing and/or from off gas generated in the drying, and then purified to reuse the polymer (1), the decomposition products and by-products of the polymer (1) by-produced from the polymer (1), the residual monomers, and the like. Although the method for performing the above collection and purification is not limited, it may be performed by a known method. For example, it can be performed by the method described in Japanese Translation of PCT International Application Publication No. 2011-520020.

Although the method for collecting and purifying the polymer (1), the decomposition products and by-products of the polymer (1) by-produced from the polymer (1), the residual monomers, and the like from discharge water generated in the above coagulation, discharge water generated in the washing, and off gas generated in the drying is not limited, a conventionally known method can be adopted. Examples thereof include those described in U.S. Patent Application Publication No. 2007/0015937, U.S. Patent Application Publication No. 2007/0025902, and U.S. Patent Application Publication No. 2007/0027251, and specific examples thereof include the following methods.

Examples of the method for collecting the polymer (1), the decomposition products and by-products of the polymer (1) by-produced from the polymer (1), the residual monomers, and the like from the above discharge water include a method in which the discharge water is brought into contact with adsorbent particles formed of ion exchange resin, activated carbon, silica gel, clay, zeolite, or the like so that the polymer (1) and the others are adsorbed onto the adsorbent particles, and the discharge water and the adsorbent particles are then separated. By incinerating the adsorbent particles that have adsorbed the polymer (1) and the others, release of the polymer (1) and the others to the environment can be prevented.

Alternatively, the polymer (1) and the others can be collected by removing and eluting the polymer (1) and the others from the ion exchange resin particles that have adsorbed the polymer (1) and the others by a known method. For example, when the ion exchange resin particles are anion exchange resin particles, the polymer (1) and the others can be eluted by bringing a mineral acid into contact with the anion exchange resin. When a water-soluble organic solvent is then added to the resulting eluate, the mixture is usually separated into two phases. Therefore, by collecting and neutralizing the lower phase containing the polymer (1) and the others, the polymer (1) and the others can be collected. Examples of the above water-soluble organic solvent include polar solvents such as alcohols, ketones, and ethers.

Other examples of the method for collecting the polymer (1) and the others from the ion exchange resin particles include a method using an ammonium salt and a water-soluble organic solvent, and a method using an alcohol and, if desired, an acid. In the latter method, ester derivatives of the polymer (1) and the others are generated, and thus, they can easily be separated from the alcohol by distillation.

When the above discharge water contains fluorine-containing elastomer particles and other solids, it is preferable that they are removed before the discharge water and the adsorbent particles are brought into contact with each other. Examples of the method for removing the fluorine-containing elastomer particles and other solids include a method of adding an aluminum salt or the like to deposit these components, and then separating the discharge water and the deposits, and an electrocoagulation method. They may also be removed by a mechanical method, such as a crossflow filtration method, a deep bed filtration method, or a precoat filtration method.

The concentration of the non-aggregated fluorine-containing elastomer in the discharge water is preferably low, more preferably less than 0.4% by mass, and particularly preferably less than 0.3% by mass, from the viewpoint of productivity.

Examples of the method for collecting the polymer (1) and the others from the off gas include a method in which a scrubber is used to bring the off gas into contact with deionized water, an alkaline aqueous solution, an organic solvent such as a glycol ether solvent, or the like to obtain a scrubber solution containing the polymer (1) and the others. When a highly concentrated alkaline aqueous solution is used as the alkaline aqueous solution, the scrubber solution can be collected in a state where the polymer (1) and the others are phase-separated, which facilitates the collection and reuse of the polymer (1) and the others. Examples of the alkali compound include alkali metal hydroxides and quaternary

ammonium salts.

The scrubber solution containing the polymer (1) and the others may be concentrated using a reverse osmosis membrane or the like. The concentrated scrubber solution usually contains fluorine ions. However, the fluorine ions may be removed by further adding alumina after the concentration to facilitate the reuse of the polymer (1) and the others. Alternatively, adsorbent particles may be brought into contact with the scrubber solution to adsorb the polymer (1) and the others, thereby collecting the polymer (1) and the others by the method described above.

The polymer (1) and the others collected by any of the above methods can be reused for production of the fluorine-containing elastomer.

A crosslinkable composition can be produced by adding a cross-linking agent and the like to an aqueous dispersion of a fluorine-containing elastomer or a fluorine-containing elastomer obtained by the production method of the present disclosure. The type and the amount of the cross-linking agent are not limited, and the cross-linking agent can be used within a known range.

When the fluorine-containing elastomer is an uncrosslinked elastomer, examples of the crosslinking system therefor include a peroxide crosslinking system, a polyol crosslinking system, and a polyamine crosslinking system, and the crosslinking system is preferably at least one selected from the group consisting of a peroxide crosslinking system and a polyol crosslinking system. From the viewpoint of chemical resistance, a peroxide crosslinking system is preferable, and from the viewpoint of heat resistance, a polyol crosslinking system is preferable.

Accordingly, the cross-linking agent is preferably at least one cross-linking agent selected from the group consisting of a polyol cross-linking agent and a peroxide cross-linking agent, and more preferably a peroxide cross-linking agent.

The amount of the cross-linking agent contained is suitably selected according to the type of the cross-linking agent and the like, and is preferably 0.2 to 6.0 parts by mass and more preferably 0.3 to 5.0 parts by mass based on 100 parts by mass of the fluorine-containing elastomer.

Peroxide crosslinking can be performed by using an uncrosslinked elastomer capable of peroxide crosslinking as a fluorine-containing elastomer and an organic peroxide as a cross-linking agent.

The uncrosslinked elastomer capable of peroxide crosslinking is not limited, and may be an uncrosslinked elastomer having a site capable of peroxide crosslinking. The site capable of peroxide crosslinking is not limited, and examples include a site having an iodine atom and a site having a bromine atom.

The organic peroxide may be an organic peroxide capable of readily generating peroxy radicals in the presence of heat and a redox system, and examples include 1,1-bis(t-butylperoxy)-3,5,5-trimethylcyclohexane, 2,5-dimethylhexane-2,5-dihydroperoxide, di-t-butyl peroxide, t-butyl cumyl peroxide, dicumyl peroxide, $\alpha$,$\alpha$-bis(t-butylperoxy)-p-diisopropylbenzene, 2,5-dimethyl-2,5-di(t-butylperoxy)hexane, 2,5-dimethyl-2,5-di(t-butylperoxy)-hexyne-3, benzoyl peroxide, t-butyl peroxybenzene, t-butyl peroxymaleate, t-butyl peroxyisopropyl carbonate, and t-butyl peroxybenzoate. Among these, 2,5-dimethyl-2,5-di(t-butylperoxy)hexane and 2,5-dimethyl-2,5-di(t-butylperoxy)-hexyne-3 are preferable.

The amount of the organic peroxide contained is preferably 0.1 to 15 parts by mass and more preferably 0.3 to 5 parts by mass based on 100 parts by mass of the fluorine-containing elastomer.

When the cross-linking agent is an organic peroxide, the fluorine-containing elastomer composition preferably further contains a cross-linking aid. Examples of the cross-linking aid include triallyl cyanurate, triallyl isocyanurate (TAIC), triacrylformal, triallyl trimellitate, N,N'-m-phenylene bismaleimide, dipropagil terephthalate, diallyl phthalate, tetraallyl terephthalate amide, triallyl phosphate, bismaleimide, fluorinated triallyl isocyanurate (1,3,5-tris(2,3,3-trifluoro-2-propenyl)-1,3,5-triazine-2,4,6-trione), tris(diallylamine)-S-triazine, N,N-diallylacrylamide, 1,6-divinyldodecafluorohexane, hexaallyl phosphoramide, N,N,N',N'-tetraallyl phthalamide, N,N,N',N'-tetraallyl malonamide, trivinyl isocyanurate, 2,4,6-trivinylmethyltrisiloxane, tri(5-norbornene-2-methylene)cyanurate, triallyl phosphite, and trimethallyl isocyanurate. Among these, triallyl isocyanurate (TAIC) is preferable in terms of excellent crosslinkability, mechanical properties, and flexibility.

The amount of the cross-linking aid contained is preferably 0.01 to 10 parts by mass, more preferably 0.01 to 7.0 parts by mass, and even more preferably 0.1 to 5.0 parts by mass based on 100 parts by mass of the fluorine-containing elastomer. An amount of the cross-linking aid of less than 0.01 parts by mass results in poor mechanical properties and poor flexibility. An amount exceeding 10 parts by mass tends to result in inferior heat resistance and also poor durability of a formed article.

Polyol crosslinking can be performed by using an uncrosslinked elastomer capable of polyol crosslinking as a fluorine-containing elastomer and a polyhydroxy compound as a cross-linking agent. In the polyol crosslinking system, the amount of the polyhydroxy compound contained is preferably 0.01 to 10 parts by mass based on 100 parts by mass of the uncrosslinked elastomer capable of polyol crosslinking. When the amount of the polyhydroxy compound contained is in such a range, polyol crosslinking can be sufficiently promoted. The amount is more preferably 0.02 to 8 parts by mass. The amount is even more preferably 0.03 to 4 parts by mass.

The uncrosslinked elastomer capable of polyol crosslinking is not limited, and may be an uncrosslinked elastomer having a site capable of polyol crosslinking. The site capable of polyol crosslinking is not limited, and may be, for

example, a site having vinylidene fluoride (VdF) unit. The method for introducing the crosslinking site may be a method involving copolymerizing a monomer that provides a crosslinking site at the time of polymerization of an uncrosslinked elastomer.

A suitable polyhydroxy compound may be a polyhydroxy aromatic compound in terms of excellent heat resistance.

The polyhydroxy aromatic compound is not limited, and examples include 2,2-bis(4-hydroxyphenyl)propane (hereinafter referred to as bisphenol A), 2,2-bis(4-hydroxyphenyl)perfluoropropane (hereafter referred to as bisphenol AF, and bisphenol AF is available from, for example, FUJIFILM Wako Pure Chemical Corporation or Central Glass Co., Ltd.), 1,3-dihydroxybenzene, 1,7-dihydroxynaphthalene, 2,7-dihydroxynaphthalene, 1,6-dihydroxynaphthalene, 4,4'-dihydroxydiphenyl, 4,4'-dihydroxystilbene, 2,6-dihydroxyanthracene, hydroquinone, catechol, 2,2-bis(4-hydroxyphenyl)butane (hereinafter referred to as bisphenol B), 4,4-bis(4-hydroxyphenyl)valeric acid, 2,2-bis(4-hydroxyphenyl)tetrafluorodichloropropane, 4,4'-dihydroxydiphenyl sulfone, 4,4'-dihydroxydiphenylketone, tri(4-hydroxyphenyl)methane, 3,3',5,5'-tetrachlorobisphenol A, and 3,3',5,5'-tetrabromobisphenol A. These polyhydroxy aromatic compounds may be alkali metal salts, alkaline earth metal salts, and the like, and when the copolymer is coagulated with acid, the metal salts are preferably not used. The amount of the polyhydroxy aromatic compound contained is 0.1 to 15 parts by mass and preferably 0.5 to 5 parts by mass based on 100 parts by mass of the uncrosslinked elastomer.

When the cross-linking agent is a polyhydroxy compound, the fluorine-containing elastomer composition preferably further contains a crosslinking accelerator. The crosslinking accelerator promotes formation of an intramolecular double bond in the dehydrofluorination reaction of the polymer main chain and addition of a polyhydroxy compound to the formed double bond.

The crosslinking accelerator may be used in combination with an acid acceptor such as magnesium oxide or with a cross-linking aid.

Examples of the crosslinking accelerator include onium compounds, and among onium compounds, the crosslinking accelerator is preferably at least one selected from the group consisting of ammonium compounds such as a quaternary ammonium salt, phosphonium compounds such as a quaternary phosphonium salt, oxonium compounds, sulfonium compounds, cyclic amines, and monofunctional amine compounds, and more preferably at least one selected from the group consisting of quaternary ammonium salts and quaternary phosphonium salts.

The quaternary ammonium salt is not limited, and examples include 8-methyl-1,8-diazabicyclo[5,4,0]-7-undecenium chloride, 8-methyl-1,8-diazabicyclo[5,4,0]-7-undecenium iodide, 8-methyl-1,8-diazabicyclo[5,4,0]-7-undecenium hydroxide, 8-methyl-1,8-diazabicyclo[5,4,0]-7-undecenium methyl sulfate, 8-ethyl-1,8-diazabicyclo[5,4,0]-7-undecenium bromide, 8-propyl-1,8-diazabicyclo[5,4,0]-7-undecenium bromide, 8-dodecyl-1,8-diazabicyclo[5,4,0]-7-undecenium chloride, 8-dodecyl-1,8-diazabicyclo[5,4,0]-7-undecenium hydroxide, 8-eicosyl-1,8-diazabicyclo[5,4,0]-7-undecenium chloride, 8-tetracosyl-1,8-diazabicyclo[5,4,0]-7-undecenium chloride, 8-benzyl-1,8-diazabicyclo[5,4,0]-7-undecenium chloride (hereinafter referred to as DBU-B, and DBU-B is available from, for example, FUJIFILM Wako Pure Chemical Corporation), 8-benzyl-1,8-diazabicyclo[5,4,0]-7-undecenium hydroxide, 8-phenethyl-1,8-diazabicyclo[5,4,0]-7-undecenium chloride, 8-(3-phenylpropyl)-1,8-diazabicyclo[5,4,0]-7-undecenium chloride, tetrabutylammonium hydrogensulfate, tetrabutylammonium hydroxide, tetrabutylammonium chloride, and tetrabutylammonium bromide. Among these, DBU-B is preferable in terms of crosslinkability, mechanical properties, and flexibility.

The quaternary phosphonium salt is not limited, and examples include tetrabutylphosphonium chloride, benzyltriphenylphosphonium chloride (hereinafter referred to as BTPPC), benzyltrimethylphosphonium chloride, benzyltributylphosphonium chloride, tributylallylphosphonium chloride, tributyl-2-methoxypropylphosphonium chloride, and benzylphenyl(dimethylamino)phosphonium chloride, and among these, benzyltriphenylphosphonium chloride (BTPPC) is preferable in terms of crosslinkability, mechanical properties, and flexibility.

The crosslinking accelerator may be a solid solution of a quaternary ammonium salt and bisphenol AF, a solid solution of a quaternary phosphonium salt and bisphenol AF, or a chlorine-free crosslinking accelerator disclosed in Japanese Patent Laid-Open No. 11-147891.

The amount of the crosslinking accelerator contained is preferably 0.01 to 8.00 parts by mass and more preferably 0.02 to 5.00 parts by mass based on 100 parts by mass of the uncrosslinked elastomer. The amount is even more preferably 0.03 to 3.00 parts by mass. When the amount of the crosslinking accelerator is less than 0.01 parts by mass, there is a possibility that the crosslinking of the uncrosslinked elastomer does not sufficiently proceed, and the resulting formed article has poor heat resistance and the like. When the amount exceeds 8.00 parts by mass, there is a possibility that the fluorine-containing elastomer composition has poor forming processability, and there is a tendency that elongation with respect to mechanical properties is reduced, and flexibility is also reduced.

The acid acceptor is used to neutralize an acidic substance generated during polyol crosslinking, and specific examples include magnesium oxide, calcium hydroxide (such as NICC 5000 (manufactured by Inoue Calcium Corporation), CALDIC #2000, CALDIC #1000 (manufactured by Ohmi Chemical Industry Co., Ltd.)), calcium oxide, litharge (lead oxide), zinc oxide, dibasic lead phosphite, and hydrotalcite, and the acid acceptor is preferably at least one selected from the group consisting of high-activity magnesium oxide and low-activity magnesium.

Polyamine crosslinking can be performed by using a fluorine-containing elastomer capable of polyamine crosslinking as a fluorine-containing elastomer and a polyamine compound as a cross-linking agent.

The fluorine-containing elastomer capable of polyamine crosslinking is not limited, and may be a fluorine-containing elastomer having a site capable of polyamine crosslinking. The site capable of polyamine crosslinking is not limited, and may be, for example, a site having vinylidene fluoride (VdF) unit. The method for introducing the crosslinking site may be a method involving copolymerizing a monomer that provides a crosslinking site at the time of polymerization of a fluorine-containing elastomer.

Examples of the polyamine compound include hexamethylenediamine carbamate, N,N'-dicinnamylidene-1,6-hexamethylenediamine, and 4,4'-bis(aminocyclohexyl)methane carbamate. Among these, N,N'-dicinnamylidene-1,6-hexamethylenediamine is preferable.

The method for obtaining the crosslinkable composition is not limited as long as the method is capable of uniformly mixing a fluorine-containing elastomer obtained by the production method of the present disclosure with a cross-linking agent. An example may be a method involving kneading a powder obtained by coagulating the fluorine-containing elastomer alone and, if necessary, another additive or a compounding agent with a kneader such as an open roll.

Also, the present disclosure relates to a composition comprising a fluorine-containing elastomer and a polymer (1) containing a polymerization unit (1) based on a monomer (1) represented by general formula (1):

$$CF_2=CF\text{-}R\text{-}CZ^1Z^2\text{-}COOM \qquad (1)$$

wherein R is a linking group, $Z^1$ and $Z^2$ are each independently F or $CF_3$, and M is H, a metal atom, $NR^7_4$, imidazolium optionally having a substituent, pyridinium optionally having a substituent, or phosphonium optionally having a substituent, wherein $R^7$ is H or an organic group.

The suitable configuration of the fluorine-containing elastomer is the same as the configuration of the fluorine-containing elastomer obtained by the production method of the present disclosure.

The suitable configuration of the polymer (1) is the same as the configuration of the polymer (1) used in the production method of the present disclosure.

The form of the composition of the present disclosure is not limited, but may be, for example, an aqueous dispersion, gum, crumb, powder, pellets, or the like. The aqueous dispersion refers to a dispersion system in which an aqueous medium is a dispersion medium and the fluorine-containing elastomer is a dispersoid. The aqueous medium is not limited as long as it is a liquid containing water, and may be one containing, in addition to water, an organic solvent such as alcohol, ether, ketone, or paraffin wax.

The lower limit value of the content of the polymer (1) in the composition is preferably 0.00001% by mass, more preferably 0.0001% by mass, even more preferably 0.001% by mass, and particularly preferably 0.01% by mass, based on the fluorine-containing elastomer. The upper limit value of the content of the polymer (1) in the composition is preferably 20% by mass, more preferably 10% by mass, even more preferably 6% by mass, further preferably 4% by mass, and most preferably 2% by mass or less.

The content of the polymer (1) in the composition can be determined by, for example, solid-state $^{19}F$-MAS NMR measurement. Examples of the method for measuring the content of the polymer (1) include methods for measuring the content of a polymer respectively disclosed in International Publication No. WO 2014/099453, International Publication No. WO 2010/075497, International Publication No. WO 2010/075496, International Publication No. WO 2011/008381, International Publication No. WO 2009/055521, International Publication No. WO 1987/007619, Japanese Patent Laid-Open No. 61-293476, International Publication No. WO 2010/075494, International Publication No. WO 2010/075359, International Publication No. WO 2006/119224, International Publication No. WO 2013/085864, International Publication No. WO 2012/082707, International Publication No. WO 2012/082703, International Publication No. WO 2012/082454, International Publication No. WO 2012/082451, International Publication No. WO 2006/135825, International Publication No. WO 2004/067588, International Publication No. WO 2009/068528, Japanese Patent Laid-Open No. 2004-075978, Japanese Patent Laid-Open No. 2001-226436, International Publication No. WO 1992/017635, International Publication No. WO 2014/069165, Japanese Patent Laid-Open No. 11-181009, and the like. Specific examples of the device used therefor include AVANCE III HD400 manufactured by Bruker and AVANCE300 manufactured by Bruker. The rotation speed is set according to the resonance frequency of the device, and is set such that the spinning side band does not overlap the peaks used for the content calculation of the fluorine-containing elastomer or the polymer (1).

Also, the content of the polymer (1) in the composition may be measured by the following method. It can be measured by a method in which the composition is mixed with a solvent that dissolves the fluorine-containing elastomer, the obtained mixed solution is dropped into deionized water to extract the polymer (1) from the obtained mixed solution, the aqueous phase containing the polymer (1) is collected, and the mass of the residue (polymer (1)) obtained by heating and drying the collected aqueous phase is measured to calculate the content of the polymer (1).

Examples of the solvent that dissolves the fluorine-containing elastomer include a ketone-based solvent, an

ether-base solvent, an ester-based solvent, and perfluorobenzene, and the ketone-based solvent is preferably acetone, the ether-based solvent is preferably tetrahydrofuran, and the ester-based solvent is preferably ethyl acetate.

The composition of the present disclosure may be an aqueous dispersion containing the fluorine-containing elastomer, the polymer (1), and the aqueous medium. The upper limit value of the solid concentration of the aqueous dispersion is preferably 50% by mass, more preferably 40% by mass, even more preferably 35% by mass, and particularly preferably 30% by mass, based on the aqueous dispersion. The lower limit value of the solid concentration of the aqueous dispersion is preferably 5% by mass, more preferably 10% by mass, even more preferably 15% by mass, and particularly preferably 20% by mass. The solid concentration of the aqueous dispersion can be adjusted by diluting or concentrating the aqueous dispersion obtained by polymerization.

The solid concentration of the aqueous dispersion refers to the concentration of solids contained in the aqueous dispersion. Examples of the solids include the fluorine-containing elastomer and the polymer (1). Also, the solid concentration of the aqueous dispersion may be the total content of the fluorine-containing elastomer and the polymer (1) in the aqueous dispersion. The solid concentration of the aqueous dispersion can be determined by drying 1 g of the aqueous dispersion at 150°C for 180 minutes, measuring the mass of the heating residue, and calculating the proportion of the mass of the heating residue to the mass of the aqueous dispersion.

The composition of the present disclosure is preferably substantially free from a fluorine-containing surfactant.

The expression "substantially free from a fluorine-containing surfactant" as used herein means that the content of the fluorine-containing surfactant is 10 ppm by mass or less based on the fluorine-containing elastomer. The content of the fluorine-containing surfactant is preferably 1 ppm by mass or less, more preferably 100 ppb by mass or less, even more preferably 10 ppb by mass or less, further preferably 1 ppb by mass or less, and particularly preferably the content of the fluorine-containing surfactant is below the detection limit as measured by liquid chromatography-mass spectrometry (LC/MS).

The content of the fluorine-containing surfactant can be quantified by a known method, and can be quantified by, for example, LC/MS analysis.

At first, to the obtained aqueous dispersion, powder, pellets, formed article, or pulverized product obtained by micronizing the pellets, formed article, or formed article, an organic solvent such as methanol is added to extract the fluorine-containing surfactant, and the extracted liquid is subjected to LC/MS analysis. The molecular weight information is extracted from the resulting LC/MS spectrum to confirm agreement with the structural formula of a candidate surfactant. The extraction method may be the Soxhlet extraction method.

Thereafter, aqueous solutions having five or more different concentration levels of the confirmed surfactant are prepared, and LC/MS analysis is performed on the aqueous solutions with respective concentration levels to prepare a calibration curve of area versus concentration.

That is, the content of the fluorine-containing surfactant can be measured by, for example, adding methanol to the composition to perform extraction and subjecting the resulting extracted liquid to LC/MS analysis.

To further increase extraction efficiency, treatment by Soxhlet extraction, ultrasonic treatment, or the like may be performed.

From the resulting LC/MS spectrum, molecular weight information is extracted to confirm agreement with the structural formula of a candidate fluorine-containing surfactant.

Thereafter, aqueous solutions having five or more different content levels of the confirmed fluorine-containing surfactant are prepared, and LC/MS analysis is performed on the aqueous solutions with respective content levels, and the relationship between the content and the area corresponding to the content is plotted to draw a calibration curve.

Then, using the calibration curve, the area of the LC/MS chromatogram of the fluorine-containing surfactant in the extracted liquid can be converted to the content of the fluorine-containing surfactant.

The fluorine-containing surfactant is the same as those exemplified above with reference to the production method of the present disclosure. For example, the fluorine-containing surfactant may be a fluorine atom-containing surfactant having, in the portion excluding the anionic group, 20 or less carbon atoms in total, may be a fluorine-containing surfactant having an anionic moiety having a molecular weight of 800 or less, and may be a fluorine-containing surfactant having a LogPOW of 3.5 or less.

Examples of the anionic fluorine-containing surfactant include a compound represented by general formula ($N^0$), and specific examples include a compound represented by general formula ($N^1$), a compound represented by general formula ($N^2$), a compound represented by general formula ($N^3$), a compound represented by general formula ($N^4$), and a compound represented by general formula ($N^5$). More specific examples include a perfluorocarboxylic acid (I) represented by general formula (I), an ω-H perfluorocarboxylic acid (II) represented by general formula (II), a perfluoroethercarboxylic acid (III) represented by general formula (III), a perfluoroalkylalkylenecarboxylic acid (IV) represented by general formula (IV), a perfluoroalkoxyfluorocarboxylic acid (V) represented by general formula (V), a perfluoroalkylsulfonic acid (VI) represented by general formula (VI), an ω-H perfluorosulfonic acid (VII) represented by general formula (VII), a perfluoroalkylalkylenesulfonic acid (VIII) represented by general formula (VIII), an alkylalkylenecarboxylic acid (IX) represented by general formula (IX), a fluorocarboxylic acid (X) represented by general formula (X),

an alkoxyfluorosulfonic acid (XI) represented by general formula (XI), a compound (XII) represented by general formula (XII), and a compound (XIII) represented by general formula (XIII).

The composition of the present disclosure can be suitably produced by the production method of the present disclosure.

The present disclosure also relates to a crosslinkable composition comprising the above composition and a cross-linking agent. The suitable configuration of the cross-linking agent is the same as the configuration of the crosslinkable composition obtained by the production method of the present disclosure.

The crosslinkable composition may contain at least one polyfunctional compound. The polyfunctional compound is a compound having two or more functional groups having the same or different structures within one molecule. The functional group contained in the polyfunctional compound may be a functional group generally known to have reactivity, such as a carbonyl group, a carboxyl group, a haloformyl group, an amide group, an olefin group, an amino group, an isocyanate group, a hydroxy group, or an epoxy group.

The crosslikable composition may contain an ordinary additive that is added to an elastomer as necessary, such as a filler (such as carbon black or barium sulfate), a processing aid (such as wax), a plasticizer, a colorant, a stabilizer, an adhesion-imparting agent (such as coumarone resin or coumarone-indene resin), a mold release agent, an electroconductivity imparting agent, a thermal conductivity imparting agent, a surface non-sticking agent, a flexibility imparting agent, a heat resistance improving agent, a flame retarder, and like various additives, and may contain at least one conventional cross-linking agent different from that described above or crosslinking accelerator.

The content of the filler such as carbon black is not limited, and is preferably 0 to 300 parts by mass, more preferably 1 to 150 parts by mass, even more preferably 2 to 100 parts by mass, and particularly preferably 2 to 75 parts by mass based on 100 parts by mass of the fluorine-containing elastomer.

The content of the processing aid such as wax is preferably 0 to 10 parts by mass and more preferably 0 to 5 parts by mass based on 100 parts by mass of the fluorine-containing elastomer. When a processing aid, a plasticizer, and a mold release agent are used, the mechanical properties and the sealability of the resulting formed article tend to be impaired, and thus the contents thereof need to be regulated such that the characteristics of the resulting target formed article are acceptable.

By crosslinking the crosslinkable composition, a formed article can be obtained. Also, by forming and crosslinking the crosslinkable composition, a formed article can be obtained. The crosslinkable composition can be formed by a conventionally-known method. The forming and crosslinking methods and conditions are within the scope of known methods and conditions for the adopted forming and crosslinking. The order of forming and crosslinking is not limited, and the composition may be formed and then crosslinked, may be crosslinked and then formed, or may be simultaneously formed and crosslinked.

Examples of the forming method include, but are not limited to, compression molding, casting, injection molding, extrusion, and forming by a Rotocure. As for the crosslinking method, steam crosslinking, crosslinking by heating, radiation crosslinking, and other methods can be adopted, and among them, steam crosslinking and crosslinking by heating are preferable. Non-limiting specific crosslinking conditions may be determined as appropriate in accordance with the types of crosslinking accelerator, cross-linking agent, acid acceptor, and others, usually within a temperature range of 140 to 250°C and a crosslinking time of 1 minute to 24 hours.

By heating the resulting formed article with an oven or the like, mechanical properties and high-temperature compression set properties can be improved. Non-limiting specific crosslinking conditions may be determined as appropriate in accordance with the types of crosslinking accelerator, cross-linking agent, acid acceptor, and the others, usually within a temperature range of 140 to 300°C and a time range of 30 minutes to 72 hours.

The formed article is excellent in various properties such as heat resistance, oil resistance, chemical resistance, and flexibility, and is further excellent in high-temperature compression set properties. Therefore, the formed article is generally used for locations that slide in contact with other materials, encapsulate or seal other materials or substances, or are intended for vibration proofing or sound proofing, and can be used as various components in a variety of fields such as the automobile industry, aircraft industry, and semiconductor industry.

Examples of the fields in which the formed article is used include: the semiconductor-related field; the automobile field; the aircraft field; the space and rocket field; the shipping field; the chemical product field, such as chemical plants; the pharmaceutical field, such as pharmaceuticals; the photographic field, such as developers; the printing field, such as printing machines; the painting field, such as painting facilities; the analytical and physical and chemical machinery fields, such as analytical equipment and measuring equipment; the food equipment field, including food plant equipment and household products; the beverage and food production apparatus field; the pharmaceutical production apparatus field; the medical component field; the chemical agent transportation equipment field; the nuclear power plant equipment field; the iron and steel field, such as iron plate processing facilities; the general industrial field; the electrical field; the fuel cell field; the electronic component field; the optical equipment component field; the space equipment component field; the petrochemical plant equipment field; the field of equipment components for exploring and mining energy resources such as petroleum and gas; the petroleum refinement field; and the petroleum transportation equipment component field.

Examples of the usage of the formed article include various seal materials and packings, such as rings, packings, gaskets, diaphragms, oil seals, bearing seals, lip seals, plunger seals, door seals, lip and face seals, gas delivery plate seals, wafer support seals, and barrel seals. The formed article can be used as a seal material in applications that require heat resistance, solvent resistance, chemical resistance, and non-stickiness.

Also, the formed article can be used as a tube, a hose, a roll, various types of rubber roll, a flexible joint, a rubber plate, a coating, a belt, a damper, a valve, a valve seat, a valve body, a chemical resistant coating material, a laminating material, a lining material, and the like.

The cross-sectional shape of the ring, packing, and seal may be any of various shapes. Specifically, it may be, for example, a square shape, an O-shape, or a ferrule, or may be an irregular shape such as a D-shape, an L-shape, a T-shape, a V-shape, an X-shape, or a Y-shape.

In the semiconductor-related field, the formed article can be used for, for example, semiconductor manufacturing apparatuses, liquid crystal panel manufacturing apparatuses, plasma panel manufacturing apparatuses, plasma display panel manufacturing apparatuses, plasma address liquid crystal panel manufacturing apparatuses, organic EL panel manufacturing apparatuses, field emission display panel manufacturing apparatuses, solar cell substrate manufacturing apparatuses, semiconductor transport apparatuses, and the like. Examples of such apparatuses include: CVD apparatuses; gas control apparatuses, such as gas control apparatuses for semiconductors; dry etching apparatuses; wet etching apparatuses; plasma etching apparatuses; reactive ion etching apparatuses; reactive ion beam etching apparatuses; sputter etching apparatuses; ion beam etching apparatuses; oxidation diffusion apparatuses; sputtering apparatuses; ashing apparatuses; plasma ashing apparatuses; cleaning apparatuses; ion implantation apparatuses; plasma CVD apparatuses; ventilation apparatuses; exposure apparatuses; polishing apparatuses; film forming apparatuses; dry etching cleaning apparatuses; UV/$O_3$ cleaning apparatuses; ion beam cleaning apparatuses; laser beam cleaning apparatuses; plasma cleaning apparatuses; gas etching cleaning apparatuses; extraction cleaning apparatuses; Soxhlet extraction cleaning apparatuses; high temperature high pressure extraction cleaning apparatuses; microwave extraction cleaning apparatuses; supercritical extraction cleaning apparatuses; cleaning apparatuses using hydrofluoric acid, hydrochloric acid, sulfuric acid, ozone water, and the like; steppers; coater/developers; CMP apparatuses; excimer laser exposure machines; chemical solution piping; gas piping; apparatuses on which plasma treatment such as $NF_3$ plasma treatment, $O_2$ plasma treatment, and fluorine plasma treatment is performed; heat treatment film forming apparatuses; wafer transport equipment; wafer cleaning apparatuses; silicon wafer cleaning apparatuses; silicon wafer treatment apparatuses; apparatuses used in LP-CVD process; apparatuses used in lamp annealing process; and apparatuses used in reflow process.

Specific examples of usage in the semiconductor-related field include: various seal materials, such as O-rings and gaskets for gate valves, quartz windows, chambers, chamber lids, gates, bell jars, couplings, and pumps; various seal materials such as O-rings, hoses, and tubes for resist developing solutions and stripping solutions; linings and coatings for resist developing solution baths, stripping solution baths, wafer cleaning solution baths, and wet etching baths; diaphragms for pumps; rolls for wafer transport; hose tubes for wafer cleaning solutions; seal materials for clean facilities, such as sealants for clean facilities including clean rooms; seal materials for storage rooms for storing semiconductor manufacturing apparatuses and devices such as wafers; and diaphragms for transferring chemical solutions used in a semiconductor manufacturing process.

In the automobile field, the formed article can be used for an engine body, a main motor system, a valve train system, a lubrication/cooling system, a fuel system, an intake/exhaust system, a transmission system of a drive system, a steering system of a chassis, a brake system, and an electrical component such as a basic electrical component, a control system electrical component, and an equipment electrical component. The automobile field also includes motorcycles.

In the engine body and its peripherals described above, the formed article can be used for various seal materials that are required to have heat resistance, oil resistance, fuel oil resistance, engine cooling antifreeze resistance, and steam resistance, and examples of such seal materials include seals such as gaskets, shaft seals, and valve stem seals, non-contact or contact type packings such as self-seal packings, piston rings, split-ring packings, mechanical seals, and oil seals, bellows, diaphragms, hoses, tubes, and various seal materials used for electric wires, cushioning materials, vibration proofing materials, and belt AT apparatuses.

Specific examples of usage in the fuel system include: O-rings used for fuel injectors, cold start injectors, quick connectors of fuel lines, sender flange quick connectors, fuel pumps, fuel tank quick connectors, gasoline mixing pumps, gasoline pumps, tube bodies of fuel tubes, connectors of fuel tubes, injectors, and the like; seals used for intake manifolds, fuel filters, pressure regulating valves, canisters, caps of fuel tanks, fuel pumps, fuel tanks, sender units of fuel tanks, fuel injection apparatuses, fuel high pressure pumps, fuel line connector systems, pump timing control valves, suction control valves, solenoid subassemblies, fuel cut valves, and the like; canister purge solenoid valve seals, onboard refueling vapor recovery (ORVR) valve seals, oil seals for fuel pumps, fuel sender seals, fuel tank rollover valve seals, filler seals, injector seals, filler cap seals, and seals of filler cap valves; hoses such as fuel hoses, fuel supply hoses,

fuel return hoses, vapor (evaporative) hoses, vent (breather) hoses, filler hoses, filler neck hoses, hoses in fuel tanks (in-tank hoses), control hoses of carburetors, fuel inlet hoses, and fuel breather hoses; gaskets used for fuel filters, fuel line connector systems, and the like, and flange gaskets used for carburetors and the like; line materials such as vapor recovery lines, fuel feed lines, and vapor/ORVR lines; diaphragms used for canisters, ORVR, fuel pumps, fuel tank pressure sensors, gasoline pumps, sensors of carburetors, combined air controlling (CAC) apparatuses, pulsation dampers, canisters, auto cocks, and the like, and pressure regulator diaphragms of fuel injection apparatuses; valves for fuel pumps, carburetor needle valves, rollover check valves, and check valves; tubes used in vents (breathers) and fuel tanks; tank packings of fuel tanks and the like, and packings of acceleration pump pistons of carburetors; fuel sender vibration proofing components for fuel tanks; O-rings and diaphragms for controlling fuel pressure; accelerator pump cups; in-tank fuel pump mounts; injector cushion rings of fuel injection apparatuses; injector seal rings; needle valve core valves of carburetors; accelerator pump pistons of carburetors; valve seats of combined air controlling (CAC) apparatuses; fuel tank bodies; and seal components for solenoid valves.

Specific examples of usage in the brake system include diaphragms used for mastervacs, hydraulic brake hose air brakes, brake chambers of air brakes, and the like; hoses used for brake hoses, brake oil hoses, vacuum brake hoses, and the like; various seal materials such as oil seals, O-rings, packings, and brake piston seals; atmospheric valves and vacuum valves for mastervacs, and check valves for brake valves; piston cups (rubber cups) for master cylinders and brake cups; and O-rings and grommets for master cylinders and vacuum boosters of hydraulic brakes, boots for wheel cylinders of hydraulic brakes, and anti-lock brake systems (ABSs).

Specific examples of usage in the basic electrical component include insulators and sheaths of electric wires (harnesses), tubes of harness exterior components, and grommets for connectors.

Specific examples of usage in the control system electrical component include covering materials of various sensor wires.

Specific examples of usage in the equipment electrical component include O-rings and packings of car air conditioners, cooler hoses, high pressure air conditioner hoses, air conditioner hoses, gaskets for electronic throttle units, plug boots for direct ignition, and diaphragms for distributors. The formed article can also be used for bonding electrical components.

Specific examples of usage in the air intake and exhaust system include: packings used for intake manifolds, exhaust manifolds, and the like, and throttle body packings of throttles; diaphragms used for EGR (exhaust gas recirculation), pressing control (BPT), wastegates, turbo wastegates, actuators, actuators of variable turbine geometry (VTG) turbos, exhaust gas purification valves, and the like; hoses, such as control hoses of EGR (exhaust gas recirculation), emission control hoses, turbo oil hoses (supply) and turbo oil hoses (return) of turbochargers, turbo air hoses, intercooler hoses, turbocharger hoses, hoses connected to the compressors of turbo engines equipped with intercoolers, exhaust gas hoses, air intake hoses, turbo hoses, and DPF (diesel particulate filter) sensor hoses; air ducts and turbo air ducts; intake manifold gaskets; and seal materials of EGR, valve seats of AB valves for preventing afterburn, turbine shaft seals (of turbochargers and the like), and seal members used for rocker covers used in automobile engines and groove components of air intake manifolds and the like.

Besides, in an exhaust gas control component, the formed article can be used as any of seals used for vapor recovery canisters, catalytic converters, exhaust gas sensors, oxygen sensors, and the like, and seals of solenoid armatures of vapor recovery and vapor canisters; intake manifold gaskets; and the like.

Also, in a diesel engine-related component, the formed article can be used as any of O-ring seals for direct injectors, rotary pump seals, control diaphragms, fuel hoses, EGR, priming pumps, diaphragms of boost compensators, and the like. The formed article can also be used for O-rings, seal materials, hoses, tubes, diaphragms, gasket materials, and pipes used for urea SCR systems, urea water tank bodies of urea SCR systems, seal materials of urea water tanks, and the like.

Specific examples of usage in the transmission system include transmission-related bearing seals, oil seals, O-rings, packings, and torque converter hoses. Examples also include mission oil seals, and mission oil hoses, ATF hoses, O-rings, and packings of AT.

Note that transmissions include AT (automatic transmission), MT (manual transmission), CVT (continuously variable transmission), DCT (dual clutch transmission), and the like.

Examples also include oil seals, gaskets, O-rings, and packings for manual or automatic transmissions, oil seals, gaskets, O-rings, and packings for continuously variable transmissions (belt type or toroidal type), packings for ATF linear solenoids, oil hoses for manual transmissions, ATF hoses for automatic transmissions, and CVTF hoses for continuously variable transmissions (belt type or toroidal type).

Specific examples of usage in the steering system include power steering oil hoses and high pressure power steering hoses.

Examples of usage in the engine body of an automobile engine include gaskets such as cylinder head gaskets, cylinder head cover gaskets, oil pan packings, and general gaskets, seals such as O-rings, packings, and timing belt cover gaskets, hoses such as control hoses, vibration proofing rubbers of engine mounts, control valve diaphragms,

and camshaft oil seals.

In the main drive system of an automobile engine, the formed article can be used for shaft seals such as crankshaft seals and camshaft seals, and the like.

In the valve train system of an automobile engine, the formed article can be used for valve stem oil seals of engine valves, valve seats of butterfly valves, and the like.

In the lubrication and cooling system of an automobile engine, the formed article can be used for engine oil cooler hoses of engine oil coolers, oil return hoses, seal gaskets, water hoses around radiators, seals of radiators, gaskets of radiators, O-rings of radiators, and vacuum pump oil hoses of vacuum pumps, as well as radiator hoses, radiator tanks, diaphragms for oil pressure, fan coupling seals, and the like.

As described above, specific examples of use in the automobile field include engine head gaskets, oil pan gaskets, manifold packings, seals for oxygen sensors, oxygen sensor bushes, seals for nitrogen oxide ($NO_x$) sensors, nitrogen oxide ($NO_x$) sensor bushes, seals for sulfur oxide sensors, seals for temperature sensors, temperature sensor bushes, seals for diesel particle filter sensors, diesel particle filter sensor bushes, injector O-rings, injector packings, O-rings and diaphragms of fuel pumps, gearbox seals, power piston packings, seals of cylinder liners, seals of valve stems, static valve stem seals, dynamic valve stem seals, front pump seals of automatic transmissions, rear axle pinion seals, gaskets of universal joints, pinion seals of speedometers, piston cups of foot brakes, O-rings and oil seals of torque transmission apparatuses, seals and bearing seals of exhaust gas re-combustion apparatuses, hoses for re-combustion apparatuses, diaphragms for sensors of carburetors, vibration proofing rubbers (engine mounts, exhaust units, muffler hangers, suspension bushes, center bearings, strut bumper rubbers, and the like), vibration proofing rubbers for suspensions (strut mounts, bushes, and the like), drive system vibration proofing rubbers (dampers and the like), fuel hoses, tubes and hoses of EGR, twin carburetor tubes, core valves of needle valves of carburetors, flange gaskets of carburetors, oil hoses, oil cooler hoses, ATF hoses, cylinder head gaskets, water pump seals, gearbox seals, needle valve tips, reeds of reed valves for motorcycles, oil seals of automobile engines, seals of gasoline hose guns, seals for car air conditioners, rubber hoses for intercoolers of engines, seals of fuel line connector systems, CAC valves, needle tips, electric wires around engines, filler hoses, car air conditioner O-rings, intake gaskets, fuel tank materials, diaphragms for distributors, water hoses, clutch hoses, PS hoses, AT hoses, mastervac hoses, heater hoses, air conditioner hoses, ventilation hoses, oil filler caps, PS rack seals, rack and pinion boots, CVJ boots, ball joint dust covers, strut dust covers, weather strips, glass runs, center unit packings, body side welts, bumper rubbers, door latches, dash insulators, high tension cords, flat belts, poly V-belts, timing belts, toothed belts, V-ribbed belts, tires, wiper blades, diaphragms and plungers for regulators of LPG vehicles, diaphragms and valves for regulators of CNG vehicles, DME resistant rubber components, diaphragms and boots of auto tensioners, diaphragms and valves for idle speed control, actuators for automatic speed control, diaphragms, check valves, and plungers of negative pressure pumps, diaphragms and O-rings of O.P.S., gasoline pressure relief valves, O-rings and gaskets of engine cylinder sleeves, O-rings and gaskets of wet cylinder sleeves, seals and gaskets of differential gears (seals and gaskets for gear oils), seals and gaskets of power steering apparatuses (seals and gaskets for PSFs), seals and gaskets of shock absorbers (seals and gaskets for SAFs), seals and gaskets of constant velocity joints, seals and gaskets of wheel bearings, coating agents for metal gaskets, caliper seals, boots, wheel bearing seals, and bladders used for vulcanization molding of tires.

In the aircraft field, space and rocket field, and shipping field, the formed article can be used particularly for fuel systems and lubricating oil systems.

In the aircraft field, the formed article can be used as, for example, any of various seal components for aircrafts, various components for aircrafts in aircraft engine oil applications, jet engine valve stem seals, gaskets, and O-rings, rotating shaft seals, gaskets of hydraulic equipment, firewall seals, hoses, gaskets, and O-rings for fuel supply, cables, oil seals, and shaft seals for aircrafts, and the like.

In the space and rocket field, the formed article can be used as, for example, any of lip seals, diaphragms, and O-rings of spacecrafts, jet engines, missiles, and the like, gas turbine engine oil-resistant O-rings, and vibration proofing stage pads for ground level control of missiles.

Also, in the shipping field, the formed article can be used as, for example, any of propeller shaft stem seals of screws, valve stem seals for intake and exhaustion of diesel engines, valve seals of butterfly valves, valve seats and shaft seals of butterfly valves, shaft seals of butterfly valves, stern tube seals, fuel hoses, gaskets, O-rings for engines, cables for shipping, oil seals for shipping, shaft seals for shipping, and the like.

In the chemical product field such as chemical plants and the pharmaceutical field such as pharmaceuticals, the formed article can be used in a process requiring a high level of chemical resistance, such as a process of producing chemical products such as pharmaceuticals, agrochemicals, coating materials, and resins.

Specific examples of usage in the chemical product field and the pharmaceutical field include seals used for chemical apparatuses, pumps and flowmeters for chemical agents, piping for chemical agents, heat exchangers, agrochemical sprayers, agrochemical transferring pumps, gas piping, fuel cells, analytical equipment and physical and chemical equipment (such as column fittings and the like of analytical equipment and measuring equipment), contraction joints of flue gas desulfurization apparatuses, nitric acid plants, power plant turbines, and the like, seals used for medical

sterilization processes, seals for plating solutions, belt roll seals for papermaking, and joint seals of wind tunnels; O-rings used for chemical apparatuses such as reactors and stirrers, analytical equipment and measuring equipment, chemical pumps, pump housings, valves, and tachometers, O-rings for mechanical seals, and O-rings for compressor sealing; packings used for high temperature vacuum dryers and tube joints and the like of gas chromatographs and pH meters, and glass cooler packings of sulfuric acid production apparatuses; diaphragms used for diaphragm pumps, analytical equipment, physical and chemical equipment, and the like; gaskets used for analytical equipment and measuring equipment; ferrules used for analytical equipment and measuring equipment; valve seats; U-cups; linings used for chemical apparatuses, gasoline tanks, wind tunnels, and the like, and corrosion resistant linings of alumite processing tanks; coatings of masking jigs for plating; valve components of analytical equipment and physical and chemical equipment; expansion joints of flue gas desulfurization plants; hoses that are resistant against acids such as concentrated sulfuric acid, chlorine gas transferring hoses, oil resistant hoses, and rainwater drainage hoses of benzene or toluene storage tanks; chemical resistant tubes used for analytical equipment and physical and chemical equipment, and medical tubes; trichloroethylene-resistant rolls for fiber dyeing and rolls for dyeing; stoppers for pharmaceuticals; medical rubber stoppers; chemical solution bottles, chemical solution tanks, bags, and chemical containers; and strong acid- and solvent-resistant protective items such as gloves and boots.

In the photographic field such as developers, the printing field such as printing machines, and the painting field such as painting facilities, the formed article can be used as any of rolls, belts, seals, valve components, and the like of dry copiers.

Specific examples of usage in the photographic field, the printing field, and the painting field include: surface layers of transfer rollers of copiers, cleaning blades of copiers, and belts of copiers; rolls (such as fixing rolls, crimping rolls, and pressure rolls) and belts for OA equipment such as copiers, printers, and facsimiles; rolls, roll blades, and belts of PPC copiers; rolls of film processors and X-ray film processors; printing rolls, scrapers, tubes, valve components, and belts of printing machines; ink tubes, rolls, and belts of printers; painting rolls, scrapers, tubes, and valve components of coating and painting equipment; and processing rolls, gravure rolls, guide rolls, guide rolls of coating lines for magnetic tape production, gravure rolls of coating lines for magnetic tape production, and coating rolls.

In the food equipment field, including food plant equipment and household products, the formed article can be used in food manufacturing processes and for food transferring equipment or food storage equipment.

Specific examples of usage in the food equipment field include seals of plate type heat exchangers, solenoid valve seals of vending machines, packings of thermo pots, sanitary pipe packings, packings of pressure cookers, seals of boilers, gaskets for heat exchangers, diaphragms and packings for food processing treatment apparatuses, and rubber materials (e.g., various seals such as heat exchanger gaskets, diaphragms, and O-rings, piping, hoses, sanitary packings, valve packings, and packings for filling used as joints between the mouth of a bottle or the like and a filler during filling) for food processing treatment machines. Examples also include packings, gaskets, tubes, diaphragms, hoses, and joint sleeves, used for products such as alcohols and soft drinks, filling apparatuses, food sterilizing apparatuses, brewing apparatuses, boilers, various food vending machines, and the like.

In the nuclear power plant equipment field, the formed article can be used for check valves and pressure reducing valves around nuclear reactors, seals of apparatuses for concentrating uranium hexafluoride, and the like.

Specific examples of usage in the general industrial field include seal materials for hydraulic equipment such as machine tools, construction machines, and hydraulic machines; seals and bearing seals of hydraulic and lubricating machines; seal materials used for mandrels and the like; seals used for windows and the like of dry cleaners; seals and (vacuum) valve seals of cyclotrons, seals of proton accelerators, seals of automatic packaging machines, diaphragms of pumps for analyzers of sulfurous acid gas and chlorine gas in air (pollution measuring equipment), snake pump linings, rolls and belts of printers, belts (conveyor belts) for transportation, squeezing rolls for pickling of iron plates and the like, cables of robots, solvent squeeze rolls of aluminum rolling lines and the like, O-rings of couplers, acid-resistant cushioning materials, dust seals and lip rubbers of sliding parts of cutting machines, gaskets of garbage incinerators, friction materials, metal or rubber surface modifiers, and covering materials. The formed article can also be used as any of gaskets and seal materials of apparatuses used in papermaking processes, sealants of filter units for clean rooms, sealants for construction, protective coating agents for concrete, cement, and the like, glass cloth impregnating materials, processing aids for polyolefins, moldability improving additives for polyethylene, fuel containers of small generators, lawnmowers, and the like, and precoated metals obtained by performing primer treatment on metal plates. Besides, the formed article can be used as any of sheets and belts by impregnating woven fabrics therewith and baking them.

Specific examples of usage in the iron and steel field include iron plate processing rolls of iron plate processing facilities.

Specific examples of usage in the electrical field include insulating oil caps of Shinkansen bullet trains, venting seals of liquid-sealed transformers, seals of transformers, jackets of oil well cables, seals of ovens such as electric furnaces, window frame seals of microwave ovens, seal materials used in bonding wedges and necks of CRTs, seal materials of halogen lamps, fixing agents for electrical components, seal materials for treating terminals of sheathed heaters, and seal materials used in insulating and moisture proofing treatment of lead wire terminals of electrical equipment. The formed article can also be used for covering materials for oil- and heat-resistant electric wires, highly heat-resistant electric wires, chemical-resistant electric wires, highly insulating electric wires, high voltage transmission lines, cables, electric wires used for geothermal power generation apparatuses, electric wires used around automobile engines, and the like. The formed article can also be used for oil seals and shaft seals of cables for vehicles. Furthermore, the formed article can also be used for electrically insulating materials (such as insulating spacers of various types of electrical equipment, insulating tapes used at joints, terminals, and the like of cables, and materials used for heat shrinkable tubes and the like) and materials for electrical and electronic equipment used in a high temperature atmosphere (such as lead wire materials for motors and electric wire materials around high temperature furnaces). In addition, the formed article can also be used for sealing layers and protective films (back sheets) of solar cells.

In the fuel cell field, the formed article can be used as any of seal materials between electrodes or between an electrode and a separator in polymer electrolyte fuel cells, phosphoric acid salt fuel cells, and the like, and seals, packings, separators, and the like of piping for hydrogen, oxygen, generated water and the like.

In the electronic component field, the formed article can be used for raw materials of heat radiating materials, raw materials of electromagnetic wave shielding materials, gaskets for hard disk drives (magnetic recorders) of computers, and the like. The formed article can also be used as any of cushioning rubbers (crash stoppers) of hard disk drives, binders for electrode active materials of nickel-metal hydride secondary batteries, binders for active materials of lithium-ion batteries, polymer electrolytes of lithium secondary batteries, binders for positive electrodes of alkaline storage batteries, binders for EL elements (electroluminescent elements), binders for electrode active materials of capacitors, encapsulating agents, sealants, covering materials for quartz of optical fibers, films and sheets such as optical fiber covering materials, pottings, coatings, and adhesive seals for electronic components and circuit boards such as CMOS electronic circuits, transistors, integrated circuits, organic transistors, light emitting elements, actuators, memories, sensors, coils, capacitors, and resistors, fixing agents for electronic components, modifying agents for encapsulating agents such as epoxies, coating agents for printed circuit boards, modifying agents for printed wiring board prepreg resins such as epoxies, anti-scattering materials for light bulbs and the like, gaskets for computers, cooling hoses for large computers, packings such as gaskets and O-rings for secondary batteries, especially for lithium secondary batteries, sealing layers for covering one or both of outer surfaces of organic EL structures, connectors, and dampers.

In the chemical agent transportation equipment field, the formed article can be used for safety valves and loading valves of trucks, trailers, tanker trucks, shipping, and the like.

In the field of equipment components for exploring and mining energy resources such as petroleum and gas, the formed article is used as any of various seal materials used in mining petroleum, natural gas, and the like, and boots of electrical connectors used in oil wells.

Specific examples of usage in the field of equipment components for exploring and mining energy resources include drill bit seals, pressure regulating diaphragms, seals of horizontal drilling motors (stators), stator bearing (shaft) seals, seal materials used in blowout preventers (BOPs), seal materials used in rotary blowout preventers (pipe wipers), seal materials and gas-liquid connectors used in measurement while drilling (MWD) systems, logging tool seals (such as O-rings, seals, packings, gas-liquid connectors, and boots) used in logging apparatuses (logging equipment), expandable packers and completion packers, and packer seals used therefor, seals and packings used in cementing apparatuses, seals used in perforators (perforating apparatuses), seals, packings, and motor linings used in mud pumps, covers of geophones, U-cups, composition seating cups, rotary seals, laminate elastomeric bearings, seals for flow rate control, seals for sand volume control, seals of safety valves, seals of hydraulic fracturing apparatuses (fracturing equipment), seals and packings of linear packers and linear hangers, seals and packings of well heads, seals and packings of chokes and valves, seal materials for logging while drilling (LWD) systems, diaphragms (such as diaphragms for feeding lubricating oil in petroleum mining pits and the like) used in applications of exploring and mining petroleum, gate valves, electronic boots, and seal elements of perforating guns.

Besides, the formed article can also be used for joint seals in kitchens, bathrooms, lavatories, and the like; coated cloth of outdoor tents; seals for materials of stamps; rubber hoses for gas heat pumps and Freon-resistant rubber hoses; films, linings, and weather-resistant covers for agriculture; tanks of laminated steel plates and the like used in the fields of construction and home appliances; and the like.

Furthermore, the formed article can also be used as an article bonded to a metal such as aluminum. Examples of such a usage include door seals, gate valves, pendulum valves, and solenoid tips, as well as piston seals and diaphragms bonded to metals and metal rubber components bonded to metals, such as metal gaskets.

In addition, the formed article can also be used for rubber components, brake shoes, brake pads, and the like of bicycles.

The formed article can also be applied to a belt.

Examples of the belt include the following: power transmission belts (including flat belts, V-belts, V-ribbed belts, toothed belts, and the like), and transportation belts (conveyor belts) such as flat belts used for various locations exposed to a high temperature, such as locations around engines of agricultural machines, machine tools, and industrial machines; conveyor belts for transporting bulk or particulate materials such as coal, smashed rock, earth and sand, ores, wood

chips, and the like under a high temperature environment; conveyor belts used in iron mills such as blast furnaces; conveyor belts in applications exposed to a high temperature environment in precision equipment assembling factories, food factories, and the like; V-belts and V-ribbed belts for agricultural machines, general equipment (such as OA equipment, printing machines, and commercial dryers), automobiles, and the like; power transmission belts for transfer robots; toothed belts such as power transmission belts of food machines and machine tools; and toothed belts used in automobiles, OA equipment, medical uses, and printing machines.

In particular, representative examples of the toothed belts for automobiles include timing belts.

The belts may have a single layer structure or a multilayer structure.

In the case of a multilayer structure, the belts may be composed of a layer obtained by crosslinking the crosslinkable composition and a layer composed of a further material.

Examples of the layer composed of a further material in the belts with a multilayer structure include layers composed of a further rubber, layers composed of a thermoplastic resin, various fiber reinforced layers, canvases, and metal foil layers.

The formed article can also be used for industrial vibration proofing pads, vibration proofing mats, slab mats for railways, pads, vibration proofing rubbers for automobiles, and the like. Examples of the vibration proofing rubbers for automobiles include vibration proofing rubbers for engine mounts, for motor mounts, for member mounts, for strut mounts, for bushes, for dampers, for muffler hangers, for center bearings, and the like.

Examples of another usage include joint members such as flexible joints and expansion joints, boots, and grommets. In the shipping field, examples include marine pumps.

The joint members refer to joints used in piping and piping facilities, and are used in applications such as preventing vibration and noise generated from piping systems, absorbing expansion and contraction or displacement caused by temperature change or pressure change, absorbing dimensional changes, and mitigating and preventing the influences of earthquakes and ground subsidence.

The flexible joints and expansion joints can be preferably used as, for example, formed articles with complicated shapes for shipbuilding piping, for machinery piping of pumps and compressors, for chemical plant piping, for electrical piping, for piping of civil engineering works and waterworks, for automobiles, and the like.

The boots can be preferably used as, for example, formed articles with complicated shapes, such as boots for various industries, including boots for automobiles such as constant velocity joint boots, dust covers, rack and pinion steering boots, pin boots, and piston boots, boots for agricultural machines, boots for industrial vehicles, boots for construction machines, boots for hydraulic machines, boots for pneumatic machines, boots for centralized lubrication machines, boots for liquid transfer, boots for firefighting, and boots for transferring various liquefied gases.

The formed article can also be used for diaphragms for filter presses, diaphragms for blowers, diaphragms for supplying water, diaphragms for liquid storage tanks, diaphragms for pressure switches, diaphragm for accumulators, diaphragms for air springs such as suspensions, and the like.

By adding the formed article to a rubber or a resin, it is possible to obtain an antislipping agent for obtaining a formed article or a coating film that is not slippery in an environment that gets wet with water such as rain, snow, ice, or sweat.

The formed article can also be used as, for example, a cushioning material for hot press molding in production of decorative plywood, printed circuit boards, electrical insulation boards, and rigid polyvinyl chloride laminates from melamine resins, phenol resins, epoxy resins, and the like.

In addition, the formed article can also contribute to imparting impermeability to various supports such as weapon-related sealing gaskets and protective clothes against contact with invasive chemicals.

The formed article can also be used for O (square)-rings, V-rings, X-rings, packings, gaskets, diaphragms, oil seals, bearing seals, lip seals, plunger seals, door seals, lip and face seals, gas delivery plate seals, wafer support seals, barrel seals, and other various seal materials used for sealing or encapsulating lubricating oils (such as engine oils, mission oils, and gear oils), fuel oils, and grease (in particular, urea-based grease) containing amine-type additives (in particular, amine-type additives used as antioxidants and detergent dispersants) used in transportation systems such as automobiles and ships, and can also be used as any of tubes, hoses, various rubber rolls, coatings, belts, valve bodies of valves, and the like. The formed article can also be used as any of laminating materials and lining materials.

The formed article can also be used for a covering material for heat- and oil-resistant electric wires used as, for example, lead electric wires for sensors that come into contact with transmission oil and/or engine oil and detect their/its oil temperature and/or oil pressure in internal combustion engines of automobiles and the like, and can also be used in a high temperature oil atmosphere such as in the oil pan of an automatic transmission or an engine.

In addition, the formed article may be used after forming a vulcanized film thereon. Specific examples of such an application include non-stick oil resistant rolls for copiers, weather resistant weather strips for preventing ice formation, rubber stoppers for infusion solutions, vial rubber stoppers, mold release agents, non-stick lightweight transportation belts, adhesion preventing coatings on pulley gaskets of automobile engine mounts, coating processing of synthetic fibers, and bolt members or joints having a packing coating thin layer.

Note that the automobile-related component applications of the formed article also include applications as components of motorcycles having the same structure.

Examples of the fuel in the automobile-related field include light oil, gasoline, and fuels for diesel engines (including biodiesel fuel).

The formed article can also be used as a seal material for a rolling bearing.

Examples of the rolling bearing include a ball bearing, a roller bearing, a bearing unit, and a linear bearing.

Examples of the ball bearing include a radial ball bearing, a thrust ball bearing, and a thrust angular contact ball bearing.

Examples of the radial ball bearing include a deep groove ball bearing, an angular contact ball bearing, a four-point contact ball bearing, and a self-aligning ball bearing.

The deep groove ball bearing is used in, for example, electric motors, household electric appliances, and OA equipment.

Examples of the angular contact ball bearing include a single-row angular contact ball bearing, a matched mounting angular contact ball bearing, and a double-row angular contact ball bearing, and the single-row angular contact ball bearing is used in electric motors, household electric appliances and OA equipment, and in hydraulic pumps, vertical pumps, and the like that are subjected to an axial load in addition to a radial load. The matched mounting angular contact ball bearing is used in the main shaft, the grinding spindle, and the like of a machine tool required to have an increased rotational accuracy and rigidity of the shaft. The double-row angular contact ball bearing is used in an electromagnetic clutch for an automobile air conditioner, and the like.

The four-point contact ball bearing is used in, for example, a speed reducer that receives an axial load from both directions and in which a large space for the bearing width is not available.

The self-aligning ball bearing is used in a place where it is difficult to align the shaft and the housing, a power transmission shaft that readily deflects, and the like.

The thrust ball bearing includes a single direction thrust ball bearing and a double direction thrust ball bearing, and the formed article is applicable to conventionally known applications in which such ball bearings are used.

The thrust angular contact ball bearing is used in combination with a double-row cylindrical roller bearing to receive the axial load of the main shaft of a machine tool.

Examples of the roller bearing include a radial roller bearing and a thrust roller bearing.

Examples of the radial roller bearing include a cylindrical roller bearing, a needle roller bearing, a tapered roller bearing, and a self-aligning roller bearing.

The cylindrical roller bearing is used in general machinery, a machine tool, an electric motor, a speed reducer, a train wheel axle, an aircraft, and the like.

The needle roller bearing is used in general machinery, an automobile, and an electric motor.

The tapered roller bearing is used in a machine tool, a wheel axle for an automobile and a train, a rolling mill, a speed reducer, and the like.

The self-aligning roller bearing is used in general machinery, a rolling mill, a paper making machine, a wheel axle, and the like.

Examples of the thrust roller bearing include a thrust cylindrical roller bearing, a thrust needle roller bearing, a thrust tapered roller bearing, and a thrust self-aligning roller bearing.

The thrust cylindrical roller bearing is used in a machine tool, general machinery, and the like.

The thrust needle roller bearing is used in an automobile, a pump, general machinery, and the like.

The thrust tapered roller bearing is used in general machinery, a rolling mill, and the like.

The thrust self-aligning roller bearing is used in a crane, an extruder, general machinery, and the like.

In addition to being crosslinked and used as a formed article, the crosslinkable composition can also be used as various components in various industrial fields. Therefore, applications of the crosslinkable composition will be described next.

The crosslinkable composition can be used for, for example, surface modifiers for metals, rubbers, plastics, glass, and the like; seal materials and covering materials required to have heat resistance, chemical resistance, oil resistance, and non-stickiness, such as metal gaskets and oil seals; non-stick covering materials for rolls, belts, and the like for OA equipment, or bleed barriers; and coating woven fabric sheets and belts by impregnation and baking.

The crosslinkable composition can be used as a seal material, a lining, and a sealant with a complicated shape by a usual method by being produced to have a high viscosity and a high concentration; can be used to form a thin film of several microns by being produced to have a low viscosity; and can be used to coat a pre-coated metal, an O-ring, a diaphragm, and a reed valve by being produced to have a medium viscosity.

Furthermore, the crosslinkable composition can also be used to coat conveyor rolls or belts for woven fabrics or paper sheets, belts for printing, chemical resistant tubes, chemical stoppers, and fuel hoses.

As article substrates to be covered with the crosslinkable composition, the following can be used: metals such as iron, stainless steel, copper, aluminum, and brass; glass products such as glass plates, and woven and non-woven

fabrics of glass fibers; formed articles of and products covered with general-purpose and heat resistant resins such as polypropylene, polyoxymethylene, polyimide, polyamideimide, polysulfone, polyethersulfone, and polyether ether ketone; formed articles of and products covered with general-purpose rubbers such as SBR, butyl rubber, NBR, and EPDM, and heat resistant rubbers such as silicone rubber and fluoroelastomer; woven and non-woven fabrics of natural fibers and synthetic fibers; and the like.

Covered products formed from the crosslinkable composition can be used in fields where heat resistance, solvent resistance, lubricity, and non-stickiness are required, and specific examples of applications include rolls (such as fixing rolls and crimping rolls) and conveyor belts for OA equipment such as copiers, printers, and facsimiles; sheets and belts; and O-rings, diaphragms, chemical resistant tubes, fuel hoses, valve seals, gaskets for chemical plants, engine gaskets, and the like.

The crosslinkable composition can also be used as a coating material or an adhesive by being dissolved in a solvent. The crosslinkable composition can also be used as a coating material by being produced as an emulsified dispersion (latex).

The crosslinkable composition is used as any of seal materials and linings for various apparatuses, piping, and the like; surface-treating agents for structures composed of inorganic and organic substrates such as metals, ceramics, glass, stone, concrete, plastics, rubbers, wood, paper, and fibers; and the like.

The crosslikable composition can be applied to substrates and the like by dispenser coating or screen printing coating.

The crosslinkable composition may be used as a coating composition for casting a film or for immersing a substrate such as fabric, plastic, metal, or elastomer.

In particular, the crosslinkable composition may be used, in the form of latex, to produce covered fabrics, protective gloves, impregnated fibers, O-ring coverings, coverings for fuel system quick coupling O-rings, coverings for fuel system seals, coverings for fuel tank rollover valve diaphragms, coverings for fuel tank pressure sensor diaphragms, coverings for oil filter and fuel filter seals, coverings for fuel tank sender seals and sender head fitting seals, coverings for copier fusing mechanism rolls, and polymer coating compositions.

They are useful for covering silicone rubbers, nitrile rubbers, and other elastomers. To increase both the permeation resistance and the chemical resistance of substrate elastomers as well as thermal stability, they are also useful for covering components produced from such elastomers. Other applications include coverings for heat exchangers, expansion joints, vats, tanks, fans, flue ducts and other conduits, and storage structures such as concrete storage structures. The crosslinkable composition may be applied to the exposed cross-section of a multilayer component structure in, for example, a method for producing a hose structure and a diaphragm. A sealing member in a connection and a joint is often made of a hard material, and the crosslinkable composition provides an improved frictional interface and an enhanced dimensional interference fit with reduced trace leakage along a sealing surface. The latex thereof increases seal durability in a variety of automobile system applications.

They can also be used in production of power steering systems, fuel systems, air conditioning systems, and any joints where hoses and tubes are connected to other components. The crosslinkable composition is further useful in the repair of manufacturing defects (and damages caused by use) in a multilayer rubber structure such as a three-layer fuel hose. The crosslinkable composition is also useful for coating a thin steel plate that may be formed or embossed before or after a coating material is applied. For example, multiple layers of covered steel can be assembled to form a gasket between two rigid metal members. A sealing effect is obtained by applying the crosslinkable composition between those layers. This process can be used to produce engine head gaskets and exhaust manifold gaskets for the purpose of lowering the bolt forces and strains of the assembled components while providing good fuel savings and low emissions due to reduced cracks, deflections, and hole strains.

Besides, the crosslinkable composition can also be used as any of the following: coating agents; substrate-integrated gaskets and packings that are obtained by dispensing and forming on substrates containing inorganic materials such as metals and ceramics; multilayer articles formed by coating onto substrates containing inorganic materials such as metals and ceramics; and the like.

The crosslinkable composition is also suitable as a wiring material for electronic devices that are light and bendable, and can be used in known electronic components. Examples include electronic components such as CMOS electronic circuits, transistors, integrated circuits, organic transistors, light emitting elements, actuators, memories, sensors, coils, capacitors, and resistors. Due to the use thereof, flexible electronic devices can be obtained, such as solar cells, various displays, sensors, actuators, electronic artificial skin, sheet-shaped scanners, braille displays, and wireless power transmission sheets.

Although the embodiments have been described above, it will be understood that various changes in form and details can be made without departing from the gist and scope of the claims.

EXAMPLES

Next, the embodiments of the present disclosure will be described with reference to Examples, but the present disclosure is not limited only to these Examples.
Various numerical values in the examples were measured by the following methods.

<Oxygen concentration in reactor>

Gas discharged from the discharge gas line connected to the reactor was measured and analyzed using a low-concentration oxygen analyzer (trade name "PS-820-L", manufactured by Iijima Electronics Corporation) to thus determine the oxygen concentration in the reactor during polymerization.

<Concentration of polymer>

In a vacuum dryer, about 1 g of an aqueous solution of a polymer was dried at 60°C for 60 minutes, the mass of the heating residue was measured, and the proportion of the mass of the heating residue to the mass of the polymer aqueous solution (1 g) was expressed in percentage and taken as the concentration of the polymer.

<Weight average molecular weight (Mw) and number average molecular weight (Mn) of polymer>

The weight average molecular weight and number average molecular weight of a polymer were determined by gel permeation chromatography (GPC) using 1260 Infinity II manufactured by Agilent Technologies, Inc., a column (TSKgel G3000$PW_{XL}$ column × 1) manufactured by Tosoh Corporation, a mixed solvent of tris buffer and acetonitrile (tris buffer:acetonitrile = 8:2(v/v)) flowed as a solvent at a flow rate of 0.5 mL/min, and monodisperse polyethylene oxide (PEO) and polyethylene glycol (PEG) as standards.

<Solid concentration of aqueous dispersion containing fluorine-containing elastomer>

In an air dryer, 1 g of an aqueous dispersion containing a fluorine-containing elastomer was dried at 150°C for 180 minutes, the mass of the heating residue was measured, and the proportion (% by mass) of the mass of the heating residue to the mass of the aqueous dispersion (1 g) was determined as the solid concentration of the aqueous solution.

<Composition of fluorine-containing elastomer>

The composition of a fluorine-containing elastomer was determined by NMR analysis.

<Mooney viscosity>

The Mooney viscosity was measured at 100°C in accordance with JIS K 6300-1.2013 using a Mooney viscometer MV 2000E manufactured by ALPHA TECHNOLOGIES.

<Polymer adhesion rate>

The ratio (adhesion rate to a polymerization tank) of the mass of polymer deposits adhering to the polymerization tank after completion of polymerization to the total amount of a polymer (fluorine-containing elastomer) after completion of polymerization was determined by the following formula.

Polymer adhesion rate (% by mass) = Mass of polymer deposits / Mass of resulting polymer (including polymer deposits) × 100

Mass of resulting polymer = Mass of aqueous dispersion × Solid concentration (% by mass) of aqueous dispersion / 100 + Mass of polymer deposits

The polymer deposits include the polymer adhering to the inside of the polymerization tank such as the inner wall of the polymerization tank and a stirring blade after the aqueous dispersion is removed from the polymerization tank after completion of polymerization, and the polymer that is freed from the aqueous dispersion due to aggregation and is suspended or precipitated without being dispersed in the aqueous dispersion. The mass of the polymer deposits is the mass after water contained in the polymer deposits is removed by drying at 120°C.

<Polymerization rate>

The polymerization rate was calculated by the following formula:

Polymerization rate = {Weight of aqueous dispersion × Solid concentration / 100} / {(Amount of pure water used in polymerization + Amount of water contained in aqueous solution of polymer (1) used in polymerization) × Polymerization time}

The units of the respective amounts in the formula are as follows.

Weight of aqueous dispersion: g
Solid concentration: % by mass
Amount of pure water used in polymerization: kg
Amount of water contained in aqueous solution of polymer (1) used in polymerization: kg
Polymerization time: hour
Polymerization rate: g/(hour × kg)

<Average particle size>

The average particle size (cumulant average diameter) of fluorine-containing elastomer particles in an aqueous dispersion was calculated by a cumulant method by performing measurement by dynamic light scattering using ELSZ-1000S (manufactured by Otsuka Electronics Co., Ltd.).

<Number of fluorine-containing elastomer particles in aqueous dispersion>

The number of fluorine-containing elastomer particles in an aqueous dispersion was calculated by the following expression:

$$\text{Number of polymer particles} = \left\{\frac{\text{Solid concentration of aqueous dispersion (mass\%)}}{100 - \textit{Solid concentration of aqueous dispersion (mass\%)}}\right\} / \left\{\frac{4}{3} \times 3.14 \times \left(\frac{\text{Average particle size (nm)}}{2} \times 10^{-9}\right)^3 \times \text{Specific gravity} \times 10^6\right\}$$

wherein the average particle size is a cumulant average size as calculated by the method described above, and the number of polymer particles (the number of fluorine-containing elastomer particles) is the number of particles per 1 cc of water, with the specific gravity of all fluorine-containing elastomers in Examples being 1.8.

Preparation Example 1

To 110 g of a monomer A represented by $CF_2=CFOCF_2CF_2COOH$ and 220 g of water, ammonium persulfate (APS) was added, and the mixture was stirred at 52°C for 96 hours under a nitrogen atmosphere to thereby obtain a polymer A aqueous solution A-1 containing, as a polymer A, a homopolymer of $CF_2=CFOCF_2CF_2COOH$. APS was additionally added as appropriate during the reaction, and a total of 5 mol% was used. The oxygen concentration in the reactor fluctuated in the range of 11 ppm by volume to 61 ppm by volume. As a result of GPC analysis of the obtained

polymer A aqueous solution A-1, the polymer A had Mw of 1.5 × $10^4$ and Mn of 1.0 × $10^4$. Water was added to the obtained polymer A aqueous solution A-1 to adjust the concentration to 2.2% by mass (a polymer A aqueous solution A-2).

Preparation Example 2

Thirty grams of a monomer B represented by $CF_2$=$CFOCF_2CF(CF_3)OCF_2CF_2COOH$, 60 g of water, 0.5 eq of $NH_3$ (in an amount corresponding to 0.5 equivalents based on the monomer B), and 2 mol% of APS were added, and stirred at 52°C for 72 hours under a nitrogen atmosphere to thereby obtain a polymer B aqueous solution B-1 containing, as a polymer B, a homopolymer of $CF_2$=$CFOCF_2CF(CF_3)OCF_2CF_2COOH$. The oxygen concentration in the reactor fluctuated in the range of 20 ppm by volume to 50 ppm by volume. As a result of GPC analysis of the obtained polymer B aqueous solution B-1, the polymer B had Mw of 1.4 × $10^4$ and Mn of 0.9 × $10^4$. Water and 0.4 eq of $NH_3$ (in an amount corresponding to 0.4 equivalents based on the monomer B used for polymerization) were added to the obtained polymer B aqueous solution B-1 to adjust the concentration to 1.9% by mass (a polymer B aqueous solution B-2).

Example 1

First, 1,466 g of deionized water and 34.09 g of the polymer A aqueous solution A-2 (2.2% by mass) were added to a SUS polymerization tank having an internal volume of 3 L. The polymerization tank was sealed, and the system was purged with nitrogen to remove oxygen. The temperature of the polymerization tank was raised to 80°C, and monomers (initial monomers) were introduced under pressure in a molar ratio of vinylidene fluoride (VDF)/tetrafluoroethylene (TFE)/hexafluoropropylene (HFP) = 19/11/70 (mol%) while being stirred so that the internal pressure of the polymerization tank reached 1.47 MPaG.

Then, a polymerization initiator aqueous solution prepared by dissolving 0.026 g of ammonium persulfate (APS) in deionized water was introduced under pressure of nitrogen gas to initiate polymerization. When the internal pressure dropped to 1.45 MPaG as the polymerization proceeded, a mixed monomer of VDF/TFE/HFP (= 50/20/30 mol%) was charged so that the internal pressure was constant at 1.47 MPaG.

When 14 g of the mixed monomer was added, 2.19 g of a diiodine compound $I(CF_2)_4I$ was introduced under pressure of nitrogen gas.

Each time at 3.0 hours, 6.0 hours, and 9.0 hours after the initiation of polymerization, the polymerization initiator aqueous solution containing 0.026 g of APS was introduced under pressure of nitrogen gas.

When 477 g of the mixed monomer was added, the stirring was stopped and the pressure was released until the pressure in the polymerization tank decreased to the atmospheric pressure. The polymerization tank was cooled to obtain an aqueous dispersion. The results are shown in Table 1.

An aqueous aluminum sulfate solution was added to the aqueous dispersion to perform coagulation. The resulting coagulated product was washed with water and dried to obtain a fluorine-containing elastomer. The Mooney viscosity of the fluorine-containing elastomer was ML1 + 10 (100°C) = 54.9. The copolymer composition determined by NMR analysis was VDF/TFE/HFP = 50/20/30 (mol%).

Example 2

The experiment was performed under the same conditions as in Example 1 except that 34.09 g of the polymer A aqueous solution A-2 (2.2% by mass) was neutralized with aqueous ammonia to a pH of 5.6 before being added to the polymerization tank.

The polymerization tank was cooled to obtain an aqueous dispersion. The results are shown in Table 1.

An aqueous aluminum sulfate solution was added to the aqueous dispersion to perform coagulation. The resulting coagulated product was washed with water and dried to obtain a fluorine-containing elastomer. The Mooney viscosity of the fluorine-containing elastomer was ML1 + 10 (100°C) = 54.7. The copolymer composition determined by NMR analysis was VDF/TFE/HFP = 50/20/30 (mol%).

Example 3

The experiment was performed under the same conditions as in Example 1 except that the amount of deionized water used was 1,460 g, that 40.32 g of the polymer B aqueous solution B-2 (1.9% by mass) was added to the polymerization tank instead of 34.09 g of the polymer A aqueous solution A-2 (2.2% by mass), and that, each time at 3.0 hours and 6.0 hours after the initiation of polymerization, the polymerization initiator aqueous solution containing 0.026 g of APS was introduced under pressure of nitrogen gas.

The polymerization tank was cooled to obtain an aqueous dispersion. The results are shown in Table 1.

An aqueous aluminum sulfate solution was added to the aqueous dispersion to perform coagulation. The

resulting coagulated product was washed with water and dried to obtain a fluorine-containing elastomer. The Mooney viscosity of the fluorine-containing elastomer was ML1 + 10 (100°C) = 63.9. The copolymer composition determined by NMR analysis was VDF/TFE/HFP = 50/20/30 (mol%).

[Table 1]

Table 1

| | | Example 1 | Example 2 | Example 3 |
|---|---|---|---|---|
| Reaction time | min. | 573 | 706 | 438 |
| Polymer adhesion rate | % by mass | 1.62 | 1.43 | 1.74 |
| Solid concentration | % by mass | 22.8 | 22.8 | 22.8 |
| Mass of aqueous dispersion | g | 1939 | 1930 | 1933 |
| Average particle size | nm | 197 | 232 | 150 |
| Number of particles | particles/cc | $4.08 \times 10^{13}$ | $2.48 \times 10^{13}$ | $9.28 \times 10^{13}$ |
| Polymerization rate | g/(hour × kg) | 30.9 | 24.9 | 40.2 |

Crosslinking characteristics

Each of the fluorine-containing elastomers obtained in Examples 1 to 3 was kneaded to obtain a fluorine-containing elastomer composition having a formulation shown in Table 2. The cross-linking curve of the obtained fluorine-containing elastomer composition was determined using a rubber vulcanization tester MDRH2030 (manufactured by M&K Co., Ltd.) at the time of press crosslinking, and the minimum viscosity (ML), the maximum torque level (MH), the induction time (T10), and the optimum crosslinking time (T90) were determined. Further, the fluorine-containing elastomer composition was crosslinked by press crosslinking and oven crosslinking following the press crosslinking to obtain a crosslinked formed article sheet.

Kneading method: Roll kneading
Press crosslinking: 160°C for 10 minutes
Oven crosslinking: 180°C for 4 hours

Materials shown in Table 2 are as follows.

MT carbon: Thermax N-990 manufactured by Cancarb Limited
TAIC: triallyl isocyanurate, TAIC, manufactured by Nihon Kasei CO., LTD.
Perhexa 25B: 2,5-dimethyl-2,5-di(t-butylperoxy)hexane, manufactured by NOF CORPORATION

Ordinary-state properties

Using the crosslinked formed article sheet, test pieces having a dumbbell No. 6 shape were prepared in accordance with JIS K 6251, and the 100% modulus (M100), the tensile strength at break (TB), and the elongation at break (EB) of the prepared test pieces in ordinary state were measured.

Hardness

A test piece having a dumbbell No. 6 shape was prepared in the same manner as above, and the hardness (Shore A) of the prepared test piece was measured in accordance with JIS K 6253 (a peak value, 1 sec, 3 sec).

Compression set

Using each of the fluorine-containing elastomer compositions, press crosslinking and oven crosslinking were performed under the above conditions to prepare an O-ring (P-24 size), and the compression set of the prepared O-ring was measured in accordance with JIS K 6262 under conditions of 200°C, 72 hours, and a compressibility of 25%.

The results are shown in Table 2.

[Table 2]

Table 2

| | | | Example 1 | Example 2 | Example 3 |
|---|---|---|---|---|---|
| Formulation | Fluorine-containing elastomer | phr | 100 | 100 | 100 |
| | MT carbon | phr | 20 | 20 | 20 |
| | TAIC | phr | 4 | 4 | 4 |
| | Perhexa 25B | phr | 1.5 | 1.5 | 1.5 |
| Crosslinking characteristics 160°C | ML | dNm | 0.8 | 0.8 | 0.9 |
| | MH | dNm | 25.9 | 25.7 | 25.8 |
| | T10 | min | 1.2 | 1.2 | 1.2 |
| | T90 | min | 3.7 | 3.5 | 3.4 |
| Crosslinking conditions | Press crosslinking | | 160°C×10min | 180°C×10min | 160°C×10min |
| | Oven crosslinking | | 180°C×4h | 180°C×4h | 180°C×4h |
| Ordinary-state properties | M100 | MPa | 2.9 | 3.0 | 2.9 |
| | TB | MPa | 22.4 | 23.6 | 20.4 |
| | EB | % | 312 | 325 | 284 |
| Hardness | ShoreA peak | point | 69 | 69 | 68 |
| | ShoreA 1sec | point | 67 | 67 | 66 |
| | ShoreA 3sec | point | 65 | 66 | 65 |
| Compression set | | % | 21 | 23 | 22 |

## Claims

1. A method for producing an aqueous dispersion of a fluorine-containing elastomer, comprising polymerizing a fluorine-containing monomer in the presence of a polymer (1) containing a polymerization unit (1) based on a monomer (1) represented by general formula (1) and an aqueous medium,

$$CF_2=CF-R-CZ^1Z^2-COOM \quad (1)$$

wherein R is a linking group, $Z^1$ and $Z^2$ are each independently F or $CF_3$, and M is H, a metal atom, $NR^7_4$, imidazolium optionally having a substituent, pyridinium optionally having a substituent, or phosphonium optionally having a substituent, wherein $R^7$ is H or an organic group.

2. The production method according to claim 1, wherein the monomer (1) is a monomer (2) represented by general formula (2):

$$CF_2=CF(-O-Rf-COOM) \quad (2)$$

wherein Rf is a fluorine-containing alkylene group having 1 to 40 carbon atoms, or a fluorine-containing alkylene group having 2 to 100 carbon atoms and having an ether bond or a keto group, and M is as described above.

3. The production method according to claim 1 or 2, wherein the polymer (1) has a weight average molecular weight of $1.4 \times 10^4$ or more.

4. The production method according to any one of claims 1 to 3, wherein a content of the polymerization unit (1) is 50 mol% or more based on all polymerization units constituting the polymer (1).

5. The production method according to any one of claims 1 to 4, wherein an amount of the polymer (1) added is 0.0001 to 2% by mass based on 100% by mass of the aqueous medium.

6. The production method according to any one of claims 1 to 5, wherein the polymerization of the fluorine-containing monomer is performed in the presence of a polymerization initiator, and an amount of the polymerization initiator added is 0.00001 to 10% by mass based on 100% by mass of the fluorine-containing monomer.

7. The production method according to any one of claims 1 to 6, wherein the polymerization of the fluorine-containing monomer is performed substantially in the absence of a fluorine-containing surfactant.

8. The production method according to any one of claims 1 to 7, wherein the fluorine-containing monomer is vinylidene fluoride or tetrafluoroethylene.

9. The production method according to any one of claims 1 to 8, wherein the fluorine-containing monomer is vinylidene fluoride.

10. The production method according to any one of claims 1 to 9, wherein the fluorine-containing elastomer comprises $-CH_2-$ in a main chain.

11. A composition comprising a fluorine-containing elastomer and a polymer (1) containing a polymerization unit (1) based on a monomer (1) represented by general formula (1):

$$CF_2=CF-R-CZ^1Z^2-COOM \qquad (1)$$

wherein R is a linking group, $Z^1$ and $Z^2$ are each independently F or $CF_3$, and M is H, a metal atom, $NR^7_4$, imidazolium optionally having a substituent, pyridinium optionally having a substituent, or phosphonium optionally having a substituent, wherein $R^7$ is H or an organic group.

12. The composition according to claim 11, wherein the monomer (1) is a monomer (2) represented by general formula (2):

$$CF_2=CF(-O-Rf-COCM) \qquad (2)$$

wherein Rf is a fluorine-containing alkylene group having 1 to 40 carbon atoms, or a fluorine-containing alkylene group having 2 to 100 carbon atoms and having an ether bond or a keto group, and M is as described above.

13. The composition according to claim 11 or 12, wherein the polymer (1) has a weight average molecular weight of $1.4 \times 10^4$ or more.

14. The composition according to any one of claims 11 to 13, wherein a content of the polymerization unit (1) is 50 mol% or more based on all polymerization units constituting the polymer (1).

15. The composition according to any one of claims 11 to 14, wherein a content of the polymer (1) is 0.00001 to 20% by mass based on the fluorine-containing elastomer.

16. The composition according to any one of claims 11 to 15, which is an aqueous dispersion.

17. The composition according to claim 16, wherein a solid concentration of the aqueous dispersion is 5 to 50% by mass based on the aqueous dispersion.

18. The composition according to any one of claims 11 to 17, which is substantially free from a fluorine-containing surfactant.

19. The composition according to any one of claims 11 to 18, wherein the fluorine-containing elastomer comprises vinylidene fluoride unit or tetrafluoroethylene unit.

**20.** The composition according to any one of claims 11 to 19, wherein the fluorine-containing elastomer comprises vinylidene fluoride unit.

**21.** The composition according to any one of claims 11 to 20, wherein the fluorine-containing elastomer comprises $-CH_2-$ in a main chain.

**INTERNATIONAL SEARCH REPORT**

International application No. **PCT/JP2021/042658**

**A. CLASSIFICATION OF SUBJECT MATTER**

***C08F 2/44***(2006.01)i; ***C08F 2/26***(2006.01)i; ***C08F 14/18***(2006.01)i; ***C08L 27/12***(2006.01)i
FI: C08F2/44 C; C08L27/12; C08F14/18; C08F2/26 Z

According to International Patent Classification (IPC) or to both national classification and IPC

**B. FIELDS SEARCHED**

Minimum documentation searched (classification system followed by classification symbols)

C08F2/44; C08F2/26; C08F14/18; C08L27/12

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 11-181009 A (ASAHI GLASS CO LTD) 06 July 1999 (1999-07-06) claims, examples | 1-2, 4-8, 11-12, 14-19<br>3, 9-10, 13, 20-21 |
| X<br>A | WO 2020/105651 A1 (DAIKIN INDUSTIRES, LTD.) 28 May 2020 (2020-05-28) claims, examples | 1, 3-8, 11, 13-19<br>2, 9-10, 12, 20-21 |
| X<br>A | WO 2019/168183 A1 (DAIKIN INDUSTIRES, LTD.) 06 September 2019 (2019-09-06) claims, paragraph [0090], examples | 1, 3-11, 13-21<br>2, 12 |
| A | JP 2008-545873 A (3M INNOVATIVE PROPERTIES COMPANY) 18 December 2008 (2008-12-18) | 1-21 |
| A | JP 8-67795 A (DAIKIN INDUSTIRES, LTD.) 12 March 1996 (1996-03-12) | 1-21 |
| P, X | WO 2021/100835 A1 (DAIKIN INDUSTIRES, LTD.) 27 May 2021 (2021-05-27) claims, examples | 1-21 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 December 2021** | **11 January 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
PCT/JP2021/042658

C. DOCUMENTS CONSIDERED TO BE RELEVANT

| Category* | Citation of document, with indication, where appropriate, of the relevant passages | Relevant to claim No. |
|---|---|---|
| P, X | WO 2021/100836 A1 (DAIKIN INDUSTIRES, LTD.) 27 May 2021 (2021-05-27) claims, examples | 1-21 |

Form PCT/ISA/210 (second sheet) (January 2015)

**INTERNATIONAL SEARCH REPORT**
**Information on patent family members**

International application No.
**PCT/JP2021/042658**

| Patent document cited in search report | Publication date (day/month/year) | Patent family member(s) | Publication date (day/month/year) |
|---|---|---|---|
| JP 11-181009 A | 06 July 1999 | (Family: none) | |
| WO 2020/105651 A1 | 28 May 2020 | CN 113039213 A | |
| WO 2019/168183 A1 | 06 September 2019 | US 2020/0392266 A1<br>claims, paragraph [0167], examples<br>EP 3760649 A1<br>CN 111836835 A | |
| JP 2008-545873 A | 18 December 2008 | US 2007/0004848 A1<br>WO 2006/135825 A1<br>EP 1888655 A1<br>CN 101193923 A | |
| JP 8-67795 A | 12 March 1996 | US 5804650 A<br>WO 1996/006887 A1<br>EP 779335 A1<br>CN 1156468 A<br>KR 10-1997-0705608 A | |
| WO 2021/100835 A1 | 27 May 2021 | (Family: none) | |
| WO 2021/100836 A1 | 27 May 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013545877 A
- US 20070015864
- US 20070015865
- US 20070015866
- US 20070276103
- US 20070117914
- US 20070142541
- US 20080015319
- US 3250808 A
- US 3271341 A
- JP 2003119204 A
- WO 2005042593 A
- WO 2008060461 A
- WO 2007046377 A
- JP 2007119526 A
- WO 2007046482 A
- WO 2007046345 A
- US 20140228531
- WO 2013189824 A
- WO 2013189826 A
- JP 53003495 A
- WO 2011520020 A
- US 20070015937
- US 20070025902
- US 20070027251
- JP 11147891 A
- WO 2014099453 A
- WO 2010075497 A
- WO 2010075496 A
- WO 2011008381 A
- WO 2009055521 A
- WO 1987007619 A
- JP 61293476 A
- WO 2010075494 A
- WO 2010075359 A
- WO 2006119224 A
- WO 2013085864 A
- WO 2012082707 A
- WO 2012082703 A
- WO 2012082454 A
- WO 2012082451 A
- WO 2006135825 A
- WO 2004067588 A
- WO 2009068528 A
- JP 2004075978 A
- JP 2001226436 A
- WO 1992017635 A
- WO 2014069165 A
- JP 11181009 A


### Non-patent literature cited in the description


- **KOBUNSHI RONBUNSHU.** *Japanese Journal of Polymer Science and Technology,* October 1992, vol. 49 (10), 765-783